# EUROPÄISCHE PATENTSCHRIFT

(11) **EP 4 016 339 B1**
(45) Veröffentlichungstag und Bekanntmachung des Hinweises auf die Patenterteilung: **31.01.2024**
(21) Anmeldenummer: 21213780.6
(22) Anmeldetag: 10.12.2021
(51) Int. Cl.: G06F 21/30, G06F 21/57

(54) **PROVISIONIEREN EINES SICHERHEITSAPPLETS AUF EINEM MOBILEN ENDGERÄT**
PROVISIONING OF A SECURITY APPLET ON A MOBILE TERMINAL
FOURNITURE D'UNE APPLIQUETTE DE SÉCURITÉ À UN TERMINAL MOBILE

(30) Priorität: 21.12.2020 DE 102020007809; 21.04.2021 DE 102021110144
(43) Veröffentlichungstag der Anmeldung: 22.06.2022
(73) Patentinhaber: Bundesdruckerei GmbH, 10969 Berlin (DE); Deutsche Telekom AG, 53113 Bonn (DE); Freie Universität Berlin, 14195 Berlin (DE)
(72) Erfinder: DIETRICH, Frank, 12437 Berlin (DE); Dr. SCHWAN, Matthias, 13086 Berlin (DE); ZASTRAU, Robert, 13089 Berlin (DE); KALL, Steven, 57078 Siegen (DE); OHLENDORF, Tim, 12163 Berlin (DE); PROF. DR. MARGRAF, Marian, 14542 Werder (DE)
(74) Vertreter: Richardt Patentanwälte PartG mbB

(56) Entgegenhaltungen:
- WO-A1-2020/042822
- US-A1- 2018 018 461
- US-A1- 2019 036 688
- US-A1- 2019 296 901

## Beschreibung

Die Erfindung betrifft ein Verfahren zum Provisionieren eines auf einem mobilen Endgerät installierten ID-Anwendungsprogramms mit kryptographischen Schlüsseln und einem Sicherheitsapplet, sowie ein mobiles Endgerät, eine Chipkarte und ein System zum Ausführen des Verfahrens.

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet. Dabei finden ein und dieselben mobile Endgeräte Verwendung sowohl in Bereichen mit niedrigen Sicherheitsanforderungen als auch in Bereichen mit hohen Sicherheitsanforderungen.

Mithin müssen entsprechende mobile Endgeräte in der Lage sein auch solch hohen Sicherheitsanforderungen zu erfüllen. Die Sicherheit mobiler Endgeräte, wie Smartphones, ist daher zu einer relevanten Anforderung geworden für die Hersteller der Geräte, für die Hersteller der auf den Geräten installierten Programmen sowie Anbieter von Dienstleistungen, welche unter Verwendung der Geräte genutzt werden können.

Die US 2019/036688 A1 beschreibt ein Gerät, das ein Sicherheitselement zum Generieren von Anwendungsschlüsselpaaren umfasst. Das Gerät enthält eine vertrauenswürdige Umgebung, die physisch oder logisch von einer nicht vertrauenswürdigen Umgebung isoliert ist. Die vertrauenswürdige Umgebung umfasst einen oder mehrere Prozessoren, die konfiguriert sind, um Operationen einer Anwendung auszuführen. Die Operationen umfassen das Generieren eines Anwendungsschlüsselpaars. Das Anwendungsschlüsselpaar enthält einen privaten Schlüssel des Sicherheitselements und einen öffentlichen Schlüssel des Sicherheitselements. Die Operationen umfassen das Senden einer Anwendungsauthentifizierungsanforderung einschließlich einer oder mehrerer Gerätekennungen und des öffentlichen Schlüssels des Sicherheitselements an einen Server. Die Operationen umfassen das Erhalten eines digitalen Zertifikats, das den öffentlichen Schlüssel des Sicherheitselements und die eine oder mehreren Gerätekennungen enthält. Die Operationen umfassen das Bereitstellen des digitalen Zertifikats für ein zweites Gerät und das Einrichten eines sicheren Kommunikationskanals zwischen dem Gerät und dem zweiten Gerät unter Verwendung des digitalen Zertifikats.

Der Erfindung liegt die Aufgabe zugrunde, ein Verfahren zum Provisionieren eines auf einem mobilen Endgerät installierten ID-Anwendungsprogramms zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Provisionieren eines auf einem mobilen Endgerät installierten ID-Anwendungsprogramms mit kryptographischen Schlüsseln und einem Sicherheitsapplet. Das ID-Anwendungsprogramm umfasst eine Provisionierungskomponente. Das mobile Endgerät umfasst ein erstes Sicherheitselement und ein zweites Sicherheitselement. Das erste Sicherheitselement ist unabhängig von dem zweiten Sicherheitselement. Das zweite Sicherheitselement ist einem Betriebssystem des mobilen Endgeräts zugeordnet.

Das Verfahren umfasst:
- auf ein Senden einer ersten Schlüsselerzeugungsanfrage der Provisionierungskomponente an das zweite Sicherheitselement hin, Erzeugen eines dem ID-Anwendungsprogramm zugeordneten ersten asymmetrischen Schlüsselpaars durch das zweite Sicherheitselement, wobei das erste asymmetrische Schlüsselpaar einen ersten privaten kryptographischen Schlüssel und einen ersten öffentlichen kryptographischen Schlüssel umfasst, wobei das zweite Sicherheitselement den ersten öffentlichen kryptographischen Schlüssel an die Provisionierungskomponente sendet,
- auf ein Senden einer ersten Anfrage der Provisionierungskomponente über ein Netzwerk an einen Provisionierungsserver zum Einbringen des Sicherheitsapplets für das ID-Anwendungsprogramm hin, Einbringen des Sicherheitsapplets für das ID-Anwendungsprogramm in das erste Sicherheitselement durch den Provisionierungsserver über das Netzwerk.

Ausführungsformen können den Vorteil haben, dass sie ein sicheres Verfahren zum Provisionieren eines auf einem mobilen Endgerät installierten ID-Anwendungsprogramms mit kryptographischen Schlüsseln und einem Sicherheitsapplet schaffen. Ein entsprechend provisioniertes ID-Anwendungsprogramm kann dazu verwendet werden, eine kryptographisch abgesicherte elektronische Identität seines Nutzers bereitzustellen. Beispielsweise kann ein solches ID-Anwendungsprogramm zum Ausweisen des Nutzers in der digitalen Welt verwendet werden. Eine solche elektronische Identität umfasst beispielsweise ein oder mehrere Attribute des Nutzers. Diese Attribute können beispielsweise aus einer offiziellen Quelle, wie etwa einem ID-Token in Form eines elektronischen Personalausweises, Reisepasses oder Führerscheins stammen und dem ID-Anwendungsprogramm im Zuge einer Personalisierung zur Verfügung gestellt werden. Diese elektronische Identität, welche die ein oder mehreren Attribute umfasst, ist beispielsweise auf dem mobilen Endgerät zur Verwendung, insbesondere zur ausschließlichen Verwendung, durch das ID-Anwendungsprogramm gespeichert.

Voraussetzung für eine effektive kryptographische Absicherung einer entsprechenden elektronischen Identität ist ein Bereitstellen kryptographischer Mittel zum Implementieren einer entsprechenden kryptographischen Infrastruktur auf dem mobilen Endgerät, welche eine kryptographische Absicherung der elektronischen Identität ermöglicht. Diese kryptographische Infrastruktur kann mittels des hierin beschriebenen Verfahrens zum Provisionieren in das mobile Endgerät eingebracht werden. Dabei umfassen die kryptographischen Mittel neben kryptographischen Schlüsseln ein Sicherheitsapplet, welches dem ID-Anwendungsprogramm zugeordnet ist und in ein Sicherheitselement des mobilen Endgeräts eingebracht wird, auf welches ein externer Provisionierungsserver Zugriff zum Provisionieren besitzt. Das mobile Endgerät umfasst zwei Sicherheitselemente, die unabhängig voneinander sind. Auf ein erstes der beiden Sicherheitselemente, in welches das Sicherheitsapplet eingebracht wird, hat ein externer Provisionierungsserver Zugriff, welcher es dem externen Provisionierungsserver ermöglicht, in kryptographisch abgesicherter Weise beispielsweise Schlüsselmaterial und/oder kryptographische Software, wie etwas das Sicherheitsapplet, in das entsprechende Sicherheitselement einzubringen. Das zweite Sicherheitselement, auf das der externe Provisionierungsserver keine Zugriffsrechte besitzt, ist dem Betriebssystem des mobilen Endgeräts zugeordnet. Dieses gerätespezifische, d.h. dem mobilen Endgerät zugeordnete, Sicherheitselement erlaubt beispielsweise ausschließlich externe Zugriffe durch den Gerätehersteller.

Das ID-Anwendungsprogramm umfasst eine Provisionierungskomponente, welche das Provisionieren des ID-Anwendungsprogramms steuert. Beispielsweise ist die Provisionierungskomponente dazu konfiguriert, einen Kompatibilitätscheck auszuführen, in welchem geprüft wird, ob das mobile Endgerät die zum Ausführen der Provisionierung notwendigen Systemkomponenten umfasst. Die notwendigen Systemkomponenten umfassen beispielsweise das erste und zweite Sicherheitselement, welche jeweils dafür ausgelegt sein müssen, die im Zuge der Provisionierung notwendigen kryptographischen Funktionen auszuführen. Ferner kann die Provisionierungskomponente beispielsweise dazu konfiguriert sein, eine initiale Sicherheitsinspektion der Software des mobilen Endgeräts auszuführen. Hierbei kann das mobile Endgerät beispielsweise auf Manipulationen, Modifikationen und/oder Sicherheitslücken geprüft werden. Dabei kann die Integrität des mobilen Endgeräts validiert werden, um sicherzustellen, dass das mobile Endgerät nicht gefährdet ist und eine gesicherte Umgebung zum Erstellen einer elektronischen Identität bietet.

Die Provisionierungskomponente sendet eine erste Schlüsselerzeugungsanfrage an das zweite Sicherheitselement. Das zweite Sicherheitselement erzeugt auf dem Empfang der Schlüsselerzeugungsanfrage hin ein erstes asymmetrisches Schlüsselpaar, welches dem ID-Anwendungsprogramm zugeordnet ist. Dieses erste asymmetrische Schlüsselpaar ermöglicht es dem zweiten Sicherheitselement dem ersten Sicherheitselement gegenüber eine erfolgreiche Authentifizierung eines Nutzers des mobilen Endgeräts zu bestätigen. Somit kann das erste Sicherheitselement bzw. das ID-Anwendungsprogramm, welches das erste Sicherheitselement nutzt, auf die Ressourcen des zweiten Sicherheitselements zum Authentifizieren des Nutzers des mobilen Endgeräts zurückgreifen. Dies wird insbesondere auch dann ermöglicht, wenn ein das Provisionieren ausführender externer Provisionierungsserver keinen Zugriff auf das zweite Sicherheitselement besitzt. Dieses erste asymmetrische Schlüsselpaar dient somit zum Herstellen einer Bindung zwischen dem ersten und dem zweiten Sicherheitselement.

Ferner sendet die Provisionierungskomponente eine Anfrage an den Provisionierungsserver zum Einbringen eines Sicherheitsapplets des ID-Anwendungsprogramms in das erste Sicherheitselement. In Antwort auf die entsprechende Anfrage erfolgt ein Einbringen des Sicherheitsapplets durch den Provisionierungsserver in das erste Sicherheitselement. Durch das entsprechende Sicherheitsapplet wird eine Bindung des ID-Anwendungsprogramms an das erste Sicherheitselement implementiert. Über das erste asymmetrische Schlüsselpaar kann ferner eine Bindung des Sicherheitsapplets und damit des ID-Anwendungsprogramms an das zweite Sicherheitselement und mithin das mobile Endgerät implementiert werden. Damit kann das ID-Anwendungsprogramm auf die von dem zweiten Sicherheitselement bereitgestellten kryptographischen Funktionen, wie etwa eine Nutzerauthentifizierung eines registrierten Nutzers des mobilen Endgeräts, zugreifen. Ausführungsformen können den Vorteil haben, dass das Sicherheitsapplet nur durch einen dazu berechtigten Provisionierungsserver in das Sicherheitselement eingebracht werden kann. Durch entsprechende Zugriffsbeschränkungen kann sichergestellt werden, dass ein integres Sicherheitsapplet in das erste Sicherheitselement eingebracht werden kann. Beispielsweise steht der Provisionierungsserver unter der Verfügungshoheit des Herstellers des ID-Anwendungsprogramms. Somit kann der Hersteller des ID-Anwendungsprogramms sicherstellen, dass nur ein von ihm geprüftes und/oder hergestelltes Sicherheitsapplet für das ID-Anwendungsprogramm zum Einsatz kommt.

Nach Ausführungsformen umfasst das Verfahren ferner, auf ein Senden einer zweiten Anfrage der Provisionierungskomponente über das Netzwerk an den Provisionierungsserver zum Einbringen des ersten öffentlichen kryptographischen Schlüssels in das erste Sicherheitselement hin, ein Einbringen des ersten öffentlichen kryptographischen Schlüssels in das erste Sicherheitselement durch den Provisionierungsserver über das Netzwerk, wobei das erste asymmetrische Schlüsselpaar zum Bestätigen einer Nutzerauthentifizierung eines Nutzers des mobilen Endgeräts durch das zweite Sicherheitselement gegenüber dem ersten Sicherheitselement dient.

Die Provisionierungskomponente sendet, beispielsweise im Zuge des Provisionierens, eine Anfrage an den Provisionierungsserver zum Einbringen des ersten öffentlichen kryptographischen Schlüssels in das erste Sicherheitselement. Der Provisionierungsserver bringt den ersten öffentlichen kryptographischen Schlüssel des ID-Anwendungsprogramms in das erste Sicherheitselement ein. Im Ergebnis liegt somit nun eine Bindung des ID-Anwendungsprogramms an das erste Sicherheitselement in Form des Sicherheitsapplets vor und zudem eine weitere Bindung des ersten Sicherheitselements bzw. des Sicherheitsapplets an das zweite Sicherheitselement und damit an das mobile Endgerät bzw. die von dem Betriebssystem des mobilen Endgeräts bereitgestellten Funktionen. Das Sicherheitsapplet auf dem ersten Sicherheitselement verfügt über den ersten öffentlichen kryptographischen Schlüssel des ID-Anwendungsprogramms, über dessen zugehöriger erster privater kryptographischer Schlüssel das zweite Sicherheitselement verfügt.

Nach Ausführungsformen umfasst das Verfahren ferner, auf ein Senden einer Zertifikatsausstellungsanfrage der Provisionierungskomponente mit dem ersten öffentlichen kryptographischen Schlüssel über das Netzwerk an einen Personalisierungsserver hin, ein Empfangen eines von dem Personalisierungsserver ausgestellten Zertifikats des ID-Anwendungsprogramms, welches den ersten öffentlichen kryptographischen Schlüssel umfasst.

Ausführungsformen können den Vorteil haben, dass von einem Personalisierungsserver, welcher für ein Personalisieren des ID-Anwendungsprogramms, d.h. einem Einbringen von Attributen einer elektronischen Identität zur Verwendung durch das ID-Anwendungsprogramm in das mobile Endgerät verantwortlich ist, ein Zertifikat für den ersten öffentlichen kryptographischen Schlüssel ausgestellt wird. Bei dem Personalisierungsserver handelt es sich beispielsweise um einen von dem Provisionierungsserver verschiedenen Server. Mit diesem Zertifikat wird beispielsweise von dem Personalisierungsserver bzw. einer das Zertifikat ausstellenden Instanz bestätigt, dass es sich bei dem ersten öffentlichen kryptographischen Schlüssel um einen dem ID-Anwendungsprogramm, genauer gesagt der konkreten auf dem mobilen Endgerät installierten Instanz des ID-Anwendungsprogramms, zugeordneten kryptographischen Schlüssel handelt. Beispielsweise kann der von dem entsprechenden Zertifikat umfasste erste öffentliche kryptographische Schlüssel als ein Signaturprüfschlüssel verwendet werden. Ist eine Signaturprüfung mit dem entsprechenden Signaturprüfschlüssel erfolgreich, so dient dies als Nachweis, dass die entsprechende Signatur mit einem dem ID-Anwendungsprogramm zugeordneten privaten kryptographischen Schlüssel als Signaturschlüssel, d.h. dem ersten privaten kryptographischen Schlüssel des ID-Anwendungsprogramms, erstellt wurde.

Nach Ausführungsformen umfasst das Verfahren ferner, auf ein Senden einer dritten Anfrage der Provisionierungskomponente über das Netzwerk an den Personalisierungsserver zum Einbringen des ersten öffentlichen kryptographischen Schlüssels in das erste Sicherheitselement hin, ein Einbringen des ersten öffentlichen kryptographischen Schlüssels in das erste Sicherheitselement durch den Personalisierungsserver über das Netzwerk, wobei das erste asymmetrische Schlüsselpaar zum Bestätigen einer Nutzerauthentifizierung eines Nutzers des mobilen Endgeräts durch das zweite Sicherheitselement gegenüber dem ersten Sicherheitselement dient.

Alternativer Weise kann der erste öffentliche kryptographische Schlüssel beispielsweise auch von dem Personalisierungsserver anstelle des Provisionierungsservers in das erste Sicherheitselement eingebracht werden, wodurch die Bindung zwischen dem ersten und dem zweiten Sicherheitselement hergestellt wird. Dafür umfasst der externe Personalisierungsserver beispielsweise einen Zugriff auf das erste Sicherheitselement zum Bereitstellen des ersten öffentlichen kryptographischen Schlüssels für das Sicherheitsapplet. Beispielsweise hat der externe Personalisierungsserver auf das erste der beiden Sicherheitselemente, in welches das Sicherheitsapplet eingebracht ist, Zugriff, welcher es dem externen Personalisierungsserver ermöglicht, in kryptographisch abgesicherter Weise Schlüsselmaterial in das entsprechende Sicherheitselement einzubringen. Auf das zweite Sicherheitselement besitzt der externe Personalisierungsserver beispielsweise keine Zugriffsrechte.

Die Provisionierungskomponente sendet, beispielsweise im Zuge des Provisionierens, eine Anfrage an den Personalisierungsserver zum Einbringen des ersten öffentlichen kryptographischen Schlüssels in das erste Sicherheitselement. Der Personalisierungsserver bringt den ersten öffentlichen kryptographischen Schlüssel des ID-Anwendungsprogramms in das erste Sicherheitselement ein. Im Ergebnis liegt somit nun eine Bindung des ID-Anwendungsprogramms an das erste Sicherheitselement in Form des Sicherheitsapplets vor und zudem eine weitere Bindung des ersten Sicherheitselements bzw. des Sicherheitsapplets an das zweite Sicherheitselement und damit an das mobile Endgerät bzw. die von dem Betriebssystem des mobilen Endgeräts bereitgestellten Funktionen. Das Sicherheitsapplet auf dem ersten Sicherheitselement verfügt über den ersten öffentlichen kryptographischen Schlüssel des ID-Anwendungsprogramms, über dessen zugehöriger erster privater kryptographischer Schlüssel das zweite Sicherheitselement verfügt.

Ausführungsformen können den Vorteil haben, dass der erste öffentliche kryptographische Schlüssel nur durch einen dazu berechtigten Personalisierungsserver in das Sicherheitselement eingebracht werden kann. Durch entsprechende Zugriffsbeschränkungen kann die Integrität des ersten Sicherheitselements bzw. des Sicherheitsapplets und des von dem Sicherheitsapplet verwendeten ersten öffentlichen kryptographischen Schlüssels sichergestellt werden.

Nach Ausführungsformen wird auf das Senden der dritten Anfrage hin ferner das von dem Personalisierungsserver ausgestellte Zertifikat des ID-Anwendungsprogramms, welches den ersten öffentlichen kryptographischen Schlüssel umfasst, durch die Provisionierungskomponente empfangen wird.

Ausführungsformen können den Vorteil haben, dass von einem Personalisierungsserver zusätzlich zum Einbringen des ersten öffentlichen kryptographischen Schlüssels in das erste Sicherheitselement ein Zertifikat für den ersten öffentlichen kryptographischen Schlüssel ausgestellt wird. Das ausgestellte Zertifikat wird der Provisionierungskomponente und damit dem ID-Anwendungsprogramm zur weiteren Verwendung zur Verfügung gestellt. Mit diesem Zertifikat wird beispielsweise von dem Personalisierungsserver bzw. einer das Zertifikat ausstellenden Instanz bestätigt, dass es sich bei dem ersten öffentlichen kryptographischen Schlüssel um einen dem ID-Anwendungsprogramm, genauer gesagt der konkreten auf dem mobilen Endgerät installierten Instanz des ID-Anwendungsprogramms, zugeordneten kryptographischen Schlüssel handelt. Beispielsweise kann der von dem entsprechenden Zertifikat umfasste erste öffentliche kryptographische Schlüssel als ein Signaturprüfschlüssel verwendet werden. Ist eine Signaturprüfung mit dem entsprechenden Signaturprüfschlüssel erfolgreich, so dient dies als Nachweis, dass die entsprechende Signatur mit einem dem ID-Anwendungsprogramm zugeordneten privaten kryptographischen Schlüssel als Signaturschlüssel, d.h. dem ersten privaten kryptographischen Schlüssel des ID-Anwendungsprogramms, erstellt wurde.

Beispielsweise kann das Einbringen des Zertifikats auch unabhängig vom Senden der dritten Anfrage erfolgen. Beispielsweise sendet die Provisionierungskomponente zum Initiieren des Ausstellens und Bereitstellens des Zertifikats eine eigenständige Zertifikatsausstellungsanfrage mit dem ersten öffentlichen kryptographischen Schlüssel über das Netzwerk an den Personalisierungsserver.

Ein mobiles Endgerät, wie etwa Smartphones, mit einem ID-Anwendungsprogramm, welches eine elektronische Identität des Nutzers des mobilen Endgeräts bereitstellt, kann beispielsweise als Identitätsnachweis, Authentisierungs- und Autorisierungstoken in elektronischen Geschäftsprozessen dienen. Hierbei wird der Nutzer des mobilen Endgeräts beispielsweise durch den Dienst, welchen er in Anspruch nehmen möchte, sicher authentifiziert werden. Beispielsweise erfolgt ein Auslesen von Attributen der elektronischen Identität zum Authentifizieren durch einen ID-Provider Server eines ID-Provider-Dienstes, welcher dem entsprechenden Dienst die entsprechenden Attribute zum Authentifizieren des Nutzers zur Verfügung stellt. Ein Gerätehersteller bietet beispielsweise auf den von ihm hergestellten mobilen Endgerät Verfahren an, die eine sichere Nutzer-Authentisierung, z.B. durch biometrische Merkmale, ermöglichen. Hersteller von Applikationen können sowohl diese Funktionalität, als auch weitere Funktionen eines von dem jeweiligen Gerätehersteller auf dem mobilen Endgerät bereitgestellten, beispielsweise auf Hardware basierenden, Sicherheitselements, einem sog. KeyStore, für den Umgang mit kryptographischem Schlüsselmaterial nutzen. Dadurch wird es möglich, eine sichere Bindung des Nutzers mit dem mobilen Endgerät herzustellen. Ausführungsformen ermöglichen es, dass ferner ein anwendungsspezifisches Applet in mindestens einem weiteren Sicherheitselement, etwa eines eSE, einer eSIM, eines eUICC, des entsprechenden mobilen Endgeräts installiert und von einer auf dem mobilen Endgerät installierten Anwendung, genauer gesagt einem ID-Anwendungsprogramm, genutzt werden kann. Hierzu wird das Sicherheitsapplet durch einen Provisionierungsserver in das entsprechenden weitere Sicherheitselement eingebracht. Bei dem entsprechenden Provisionierungsserver kann es sich insbesondere um einen von dem Gerätehersteller unabhängigen Provisionierungsserver handeln, beispielsweise einen Provisionierungsserver des Anwendungshersteller oder einer für den Anwendungshersteller vertrauenswürdige Instanz, welche von dem Anwendungshersteller mit der Provisionierung von Applets betraut ist.

Im Zuge der Provisionierung erfolgt eine Vorbereitung des mobilen Endgerätes, beispielsweise zum Zweck einer nachfolgenden Personalisierung mit dem Ziel eine elektronische Identität mit Identitätsinformationen in Form von Attributen eines Nutzers des mobilen Endgeräts für Anwendungen Dritter, wie etwa Online-Dienste, verfügbar zu machen. Hierzu wird ein Sicherheitsapplet in ein Sicherheitselement des mobilen Endgerätes, wie etwa einem eSE, einer eSIM oder einem eUICC, eingebracht. Dieses Sicherheitselement ist beispielsweise unabhängig vom Gerätehersteller und steht nicht unter dessen Kontrolle. Hierbei wird eine Bindung des Nutzers des mobilen Endgeräts an das Sicherheitsapplet auf dem Sicherheitselement implementiert, welches beispielsweise unabhängig von dem Gerätehersteller des mobilen Endgeräts ist und nicht unter dessen Kontrolle steht.

Im Zuge der Provisionierung mit dem Sicherheitsapplet wird beispielsweise kryptographisches Schlüsselmaterial, etwa in Form eines asymmetrischen Schlüsselpaars für das ID-Anwendungsprogramm, in einem Sicherheitselement des Geräteherstellers auf dem mobilen Endgerät, etwa einem KeyStore, erzeugt. Für diese kryptographisches Schlüsselmaterial wird ferner eine Bindung an eine PIN, insbesondere eine System-PIN, und/oder biometrische Merkmale des Nutzers des mobilen Endgeräts implementiert. Bei einer System-PIN handelt es sich beispielsweise um eine dem Betriebssystem des entsprechenden mobilen Endgeräts zugeordnete PIN des Nutzers. Beispielsweise setzt eine Verwendung eines privaten kryptographischen Schlüssels des asymmetrischen Schlüsselpaars eine erfolgreiche Authentifizierung des Nutzers unter Verwendung des Systems-PINs und/oder der biometrischen Merkmale voraus. Ferner auf einem weiteren Sicherheitselement ist eine Sub-Security Domain (Sub-SSD) eines Anwendungsherstellers in einer Security Domain ("Supplementary Security Domain"/SSD) einer Verwaltungsinstanz des weiteren Sicherheitselements eingerichtet. In diese Sub-SSD wird das Sicherheitselement eingebracht und gegebenenfalls instanziiert. Das Einbringen des Sicherheitsapplets erfolgt durch den Anwendungshersteller oder eine von diesem beauftragte Instanz, welche Zugriff auf die Sub-SSD besitzt. Beispielsweise kann zur Zugriffssicherung auf die Sub-SSD das Global Privacy Protocol (GPP) des Global Privacy Services der GlobalPlatform verwendet werden. Hierzu kann eine Global Privacy Protocol Application (GPPA) verwendet werden, an welche die Instanz des eingebrachten Sicherheitsapplets gebunden wird. Kryptographische Schlüssel, welche einen Zugriff auf die Sub-SSD ermöglichen, etwa unter Verwendung des GPP, werden von dem Provisionierungsserver beispielsweise an einen Personalisierungsserver eines Personalisierungsdienstes zur weiteren Verwendung, etwa in Zuge einer Personalisierung des ID-Anwendungsprogramms, weitergeleitet. Alternativer Weise kann beispielsweise ein appletspezifischer bzw. ID-anwendungsspezifischer kryptographischer Schlüssel bzw. ein entsprechendes asymmetrisches Schlüsselpaar in das weitere Sicherheitselement zur Verwendung durch das Sicherheitsapplet eingebracht werden. Das Sicherheitsapplet kann diesen kryptographischen Schlüssel bzw. dieses asymmetrische Schlüsselpaar zum Authentisieren des ID-Anwendungsprogramm verwenden. Ferner wird in das weitere Sicherheitselement kryptographisches Schlüsselmaterial, d.h. ein öffentlicher kryptographischer Schlüssel des in dem KeyStore des Geräteherstellers für das ID-Anwendungsprogramm erstellten asymmetrischen Schlüsselpaars, eingebracht. Dieses kryptographische Schlüsselmaterial erlaubt ein Ausführen eines Challenge-Response-Verfahren zwischen den beiden Sicherheitselementen, beispielsweise zum Bestätigen einer erfolgreichen Authentifizierung eines Nutzers des mobilen Endgeräts durch das Sicherheitselement des Geräteherstellers gegenüber dem Sicherheitselements mit dem Sicherheitsapplet des ID-Anwendungsprogramms. Schließlich erfolgt eine überprüfen der Bindung des verwendeten Schlüsselmaterials, d.h. es wird überprüft, ob die Provisionierung erfolgreich war.

Durch das Verfahren zum Provisionieren des auf einem mobilen Endgerät installierten ID-Anwendungsprogramms mit den kryptographischen Schlüsseln und dem Sicherheitsapplet wird das mobile Endgerät beispielsweise zur späteren kryptographisch abgesicherten Personalisierung mit Identitätsinformationen bzw. Attributen des Nutzers des mobilen Endgeräts und dessen Bindung an das mobile Endgerät vorbereitet. Das hierfür verwendete Sicherheitsapplet ist beispielsweise unabhängig vom Gerätehersteller, ebenso wie das Sicherheitselement, in welches es eingebracht wird. Das vom Gerätehersteller unabhängige Sicherheitsapplet ermöglicht eine Identifizierung und/oder Authentifizierung des Nutzers des mobilen Endgeräts mit einer elektronischen Identität, welche das ID-Anwendungsprogramm bereitstellt. Hierbei wird eine Authentisierung des Nutzer gegenüber dem vom Gerätehersteller unabhängige Sicherheitsapplet unter Verwendung eines vom Gerätehersteller abhängigen zweiten Sicherheitselements ermöglicht. Der Nutzer authentisiert sich gegenüber diesem zweite Sicherheitselement, welches eine erfolgreiche Nutzerauthentifizierung eggenüber dem Sicherheitsapplet bzw. dem das Sicherheitsapplet umfassenden ersten Sicherheitselement bestätigt.

Unter einem Sicherheitselement wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Ein Sicherheitselement kann beispielsweise in Form eines Secure Element (SE) implementiert sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE ("Trusted Excecution Environment"). Beispielsweise kann das Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständige Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Service-Provider-Server" oder Dienst-Server wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Personalisierungsserver" wird ein Server bzw. ein Computersystem verstanden, auf welchem ein Serverprogramm ausgeführt wird und das dazu konfiguriert ist, Attribute aus einem ID-Token auszulesen und in ein mobiles Endgerät einzubringen.

Unter einem "ID-Token" wird hier ein tragbares elektronisches Gerät verstanden, zum Beispiel einen sogenannten USB-Stick, eine Chipkarte, oder ein Dokument, auf welchem Attribute eines Nutzers gespeichert sind. Unter einem "Dokument" wird insbesondere ein Ausweis-, Wert- oder Sicherheitsdokument verstanden, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Unter einem "Provisionierungsserver" wird ein Server bzw. ein Computersystem verstanden, auf welchem ein Serverprogramm ausgeführt wird und das dazu konfiguriert ist, ein mobiles Endgerät zu provisionieren, insbesondere mit kryptographischen Schlüsseln.

Unter einem "Personalisierungsserver" wird ein Server bzw. ein Computersystem verstanden, auf welchem ein Serverprogramm ausgeführt wird und das dazu konfiguriert ist, Attribute aus einem ID-Token auszulesen und in ein mobiles Endgerät einzubringen.

Unter einem "ID-Provider-Server" wird ein Server bzw. ein Computersystem verstanden, auf welchem ein Serverprogramm ausgeführt wird und das dazu konfiguriert ist, Attribute einer von dem mobilen Endgerät bereitgestellten elektronischen Identität für einen Service-Provider-Server bereitzustellen und/oder gegenüber dem Service-Provider-Server zu bestätigen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Kommunikationskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Nach Ausführungsformen umfasst das Verfahren, auf das Einbringen des Sicherheitsapplets hin, ferner:
- auf ein Senden einer zweiten Schlüsselerzeugungsanfrage der Provisionierungskomponente an den Provisionierungsserver hin, Einbringen eines von dem Provisionierungsserver erzeugten und dem ID-Anwendungsprogramm zugeordneten zweiten asymmetrischen Schlüsselpaars in das erste Sicherheitselement durch den Provisionierungsserver über das Netzwerk, wobei das zweite asymmetrische Schlüsselpaar als initiales asymmetrisches Schlüsselpaar des Sicherheitsapplets zum initialen Authentisieren des ID-Anwendungsprogramms dient, wobei das zweite asymmetrische Schlüsselpaar einen zweiten privaten kryptographischen Schlüssel und einen zweiten öffentlichen kryptographischen Schlüssel umfasst,
- auf ein erfolgreiches Einbringen des zweiten asymmetrischen Schlüsselpaars hin, Empfangen des zweiten öffentlichen kryptographischen Schlüssels durch die Provisionierungskomponente.

Ausführungsformen können den Vorteil haben, dass zusätzlich ein dem ID-Anwendungsprogramm zugeordnetes asymmetrisches Schlüsselpaar in das erste Sicherheitselement eingebracht wird und dem Sicherheitsapplet zur Verfügung gestellt wird. Das entsprechende asymmetrische Schlüsselpaar wird beispielsweise von einem Personalisierungsserver erzeugt. Beispielsweise sendet die Provisionierungskomponente eine entsprechende Schlüsselerzeugungsanfrage an den Provisionierungsserver. Der Provisionierungsserver leitet die Schlüsselerzeugungsanfrage an den Personalisierungsserver weiter. Der Personalisierungsserver erzeugt das angefragte Schlüsselpaar und sendet dieses in Antwort an den Provisionierungsserver zum Einbringen in das erste Sicherheitselement. Beispielsweise umfasst die entsprechende Schlüsselerzeugungsanfrage den ersten öffentlichen kryptographischen Schlüssel des ID-Anwendungsprogramms sowie eine ID des ID-Anwendungsprogramms, welche die auf dem mobilen Endgerät installierte Instanz des ID-Anwendungsprogramms eindeutig identifiziert. Der Personalisierungsserver identifiziert beispielsweise den empfangenen ersten öffentlichen kryptographischen Schlüssel des ID-Anwendungsprogramms sowie die ID des ID-Anwendungsprogramms. Diese werden beispielsweise zusammen mit dem erzeugten zweiten öffentlichen kryptographischen Schlüssel des ID-Anwendungsprogramms auf dem Personalisierungsserver gespeichert. Der Provisionierungsserver bringt das von dem Personalisierungsserver erzeugte und bereitgestellte zweite asymmetrische Schlüsselpaar für das ID-Anwendungsprogramm in das erste Sicherheitselement des mobilen Endgeräts ein. Beispielsweise wird das zweite asymmetrische Schlüsselpaar in eine dem ID-Anwendungsprogramm zugeordnete Sub-Security-Domain des Sicherheitselements mit dem Sicherheitsapplet eingebracht, sodass es dem Sicherheitsapplet zur Verfügung steht.

Das zweite asymmetrische Schlüsselpaar dient beispielsweise als initiales asymmetrisches Schlüsselpaar des Sicherheitsapplets zu einem initialen Authentisieren des ID-Anwendungsprogramms. Besteht die Notwendigkeit, dass das erste Sicherheitselement bzw. das Sicherheitsapplet das ID-Anwendungsprogramm authentisiert, kann das Sicherheitsapplet hierzu beispielsweise den zweiten symmetrischen kryptographischen Schlüssel des zweiten asymmetrischen Schlüsselpaars als Signaturschlüssel verwenden. Mit dem zweiten öffentlichen kryptographischen Schlüssel des zweiten asymmetrischen Schlüsselpaars als Signaturprüfschlüssel kann die entsprechende Signatur geprüft werden. Im Falle einer positiven Signaturprüfung kann geprüft bzw. nachgewiesen werden, dass die entsprechend signierten Daten von derjenigen Instanz signiert wurden, welcher der Signaturschlüssel zugeordnet ist, d.h. im vorliegenden Fall von dem ID-Anwendungsprogramm bzw. von dem Sicherheitsapplet des ID-Anwendungsprogramms. Der zweite öffentliche kryptographische Schlüssel des ID-Anwendungsprogramms wird der Provisionierungskomponente zur Verfügung gestellt, welche den entsprechenden zweiten öffentlichen kryptographischen Schlüssel zu Authentisierungszwecken weiterleiten kann.

Nach Ausführungsformen bringt der Provisionierungsserver ferner ein oder mehrere Wurzelsignaturprüfschlüssel in das erste Sicherheitselement ein. Diese Wurzelsignaturprüfschlüssel dienen beispielsweise zum Verifizieren von Zertifikatssignaturen ein oder mehrerer Wurzelinstanzen. Anhand entsprechender Zertifikatssignaturen durch Wurzelinstanzen werden beispielsweise PKI-Zertifikatsketten abgesichert.

Nach Ausführungsformen umfasst das Verfahren ferner ein Einbringen des zweiten öffentlichen kryptographischen Schlüssels in das zweite Sicherheitselement durch die Provisionierungskomponente.

Ausführungsformen können den Vorteil haben, dass der zweite öffentliche kryptographische Schlüssel dem zweiten Sicherheitselement zur Verfügung steht. Somit stehen dem zweiten Sicherheitselement beispielsweise der erste private kryptographische Schlüssel sowie der zweite öffentliche kryptographische Schlüssel des ID-Anwendungsprogramms zur Verfügung, während dem ersten Sicherheitselement der zweite private kryptographische Schlüssel und der erste öffentliche kryptographische Schlüssel des ID-Anwendungsprogramms zur Verfügung steht. Somit werden die beiden Sicherheitselemente dazu in die Lage versetzt, etwa mittels eines Diffie-Hellmann-Verfahrens, gemeinsame symmetrische kryptographische Schlüssel zu erzeugen.

Nach Ausführungsformen umfasst das Verfahren zum Einbringen des Sicherheitsapplets ein Aufbauen eines ersten verschlüsselten Kommunikationskanals zwischen dem ersten Sicherheitselement und dem Provisionierungsserver.

Ausführungsformen können den Vorteil haben, dass das Einbringen des Sicherheitsapplets in das erste Sicherheitselement über einen verschlüsselten Kommunikationskanal erfolgt. Der entsprechende verschlüsselte Kommunikationskanal ist beispielsweise mit einem symmetrischen ephemeren Sitzungsschlüssel verschlüsselt. Beispielsweise handelt es sich bei dem verschlüsselten Kommunikationskanal um einen Secure Chanel gemäß dem Secure Channel Protocol (SCP) der GlobalPlatform.

Nach Ausführungsformen umfasst das Verfahren zum Einbringen des ersten öffentlichen kryptographischen Schlüssels ein Aufbauen eines zweiten verschlüsselten Kommunikationskanals zwischen dem ersten Sicherheitselement und dem Provisionierungsserver.

Ausführungsformen können den Vorteil haben, dass das Einbringen des ersten kryptographischen Schlüssels ebenfalls über einen verschlüsselten Kommunikationskanal zwischen Sicherheitselement und dem Provisionierungsserver erfolgt. Der entsprechende verschlüsselte Kommunikationskanal ist beispielsweise ebenfalls mit einem symmetrischen ephemeren Sitzungsschlüssel verschlüsselt. Beispielsweise handelt es sich bei dem verschlüsselten Kommunikationskanal um einen Secure Chanel gemäß dem Secure Channel Protocol (SCP) der GlobalPlatform.

Nach Ausführungsformen umfasst das mobile Endgerät ferner ein oder mehrere Authentifizierungssensoren zum Erfassen von ein oder mehreren Authentifizierungsfaktoren eines Nutzers des mobilen Endgeräts. Das Betriebssystems des mobilen Endgeräts ist dazu konfiguriert, die Authentifizierungssensor zu steuern. Voraussetzung für das Erzeugen des ersten asymmetrischen Schlüsselpaars ist eine erfolgreiche Authentisierung des Nutzers gegenüber dem zweiten Sicherheitselement. Der Nutzer ist auf dem mobilen Endgerät registriert und in dem zweiten Sicherheitselement sind ein oder mehrere Referenzwerte des registrierten Nutzers zum Verifizieren zumindest eines erfassten Authentifizierungsfaktors des registrierten Nutzers gespeichert.

Ausführungsformen können den Vorteil haben, dass eine Voraussetzung für das Erzeugen des ersten asymmetrischen Schlüsselpaars eine erfolgreiche Authentisierung des Nutzers des mobilen Endgeräts gegenüber dem zweiten Sicherheitselement ist. Durch eine entsprechende erfolgreiche Authentisierung erklärt der Nutzer seine Zustimmung zum Provisionieren des ID-Anwendungsprogramms. Ferner erfolgt im Zuge des Authentisierens ein Binden des Nutzers an das erste asymmetrische Schlüsselpaar. Beispielsweise ist das zweite Sicherheitselement dazu konfiguriert, den ersten privaten kryptographischen Schlüssel nur unter der Voraussetzung einer erfolgreichen Nutzerauthentisierung zu verwenden. Somit kann eine Bindung des Nutzers an das entsprechende asymmetrische Schlüsselpaar und damit an das mobile Endgerät implementiert werden. Soll der erste kryptographische Schlüssel des ID-Anwendungsprogramms verwendet werden, so macht dies beispielsweise eine erfolgreiche Nutzerauthentisierung notwendig. Erst wenn der Nutzer mit einer entsprechenden Nutzerauthentisierung unter Verwendung des ersten privaten kryptographischen Schlüssels zugestimmt hat, kann dieser von dem zweiten Sicherheitselement verwendet werden.

Nach Ausführungsformen umfasst das Verfahren ferner ein Prüfen der Provisionierung des ersten asymmetrischen Schlüsselpaars des ID-Anwendungsprogramms und des Sicherheitsapplets.

Ausführungsformen können den Vorteil haben, dass die Provisionierung des ersten asymmetrischen Schlüsselpaars des ID-Anwendungsprogramms und des Sicherheitsapplets geprüft wird. Somit kann sichergestellt werden, dass die Provisionierung erfolgreich verlaufen ist. Das Prüfen der Provisionierung des Sicherheitsapplets umfasst beispielsweise ein Prüfen der Provisionierung des zweiten asymmetrischen Schlüsselpaars, welches zur Verwendung des Sicherheitsapplets bereitgestellt wird.

Nach Ausführungsformen umfasst das Prüfen der Provisionierung ein Ausführen eines ersten Challenge-Response-Verfahrens. Das erste Challenge-Response-Verfahren umfasst:
- auf ein Senden einer ersten Challenge-Anfrage der Provisionierungskomponente an das erste Sicherheitselement hin, Empfangen einer von dem ersten Sicherheitselement erzeugten ersten Challenge durch die Provisionierungskomponente,
- auf ein Senden einer ersten Response-Anfrage der Provisionierungskomponente mit der ersten Challenge an das zweite Sicherheitselement hin, Empfangen einer von dem zweiten Sicherheitselement erzeugten ersten Response auf die ersten Challenge, wobei das Erzeugen der ersten Response ein Signieren der ersten Challenge unter Verwendung des ersten privaten kryptographischen Schlüssels als erstem Signaturschlüssel umfasst,
- auf ein Senden einer ersten Validierungsanfrage der Provisionierungskomponente mit der ersten Response an das erste Sicherheitselement, Empfangen einer ersten Bestätigung der Validität der ersten Response unter der Voraussetzung einer erfolgreichen Prüfung der Signatur der ersten Response unter Verwendung des ersten öffentlichen kryptographischen Schlüssels als erstem Signaturprüfschlüssel.

Ausführungsformen können den Vorteil haben, dass die erfolgreiche Provisionierung des ersten asymmetrischen Schlüsselpaars unter Verwendung eines ersten Challenge-Response-Verfahrens geprüft werden kann. Im Zuge dieses ersten Challenge-Response-Verfahrens sendet die Provisionierungskomponente eine Challenge-Anfrage an das erste Sicherheitselement. Das erste Sicherheitselement bzw. das in das erste Sicherheitselement eingebrachte Sicherheitsapplet erzeugt eine entsprechende Challenge, etwa in Form eines Zufallswerts, und sendet diese Challenge an die Provisionierungskomponente. Die Provisionierungskomponente empfängt die Challenge und leitet diese als Bestandteil einer Response-Anfrage an das zweite Sicherheitselement weiter. Das zweite Sicherheitselement erzeugt unter Verwendung der ersten Challenge eine Response. Bei der entsprechenden Response handelt es sich beispielsweise um eine Signatur der Challenge unter Verwendung des ersten privaten kryptographischen Schlüssels des ID-Anwendungsprogramms als einem ersten Signaturschlüssel. Die Provisionierungskomponente empfängt die von dem zweiten Sicherheitselement erzeugte Challenge und leitet diese als Bestandteil einer Validierungsanfrage an das Sicherheitsapplet in dem ersten Sicherheitselement weiter. Das erste Sicherheitsapplet empfängt die Response und prüft deren Validität unter Verwendung des ersten öffentlichen kryptographischen Schlüssels als einem ersten Signaturprüfschlüssel. Falls die Prüfung der Signatur erfolgreich und die Response somit valide ist, sendet das Sicherheitsapplet eine Bestätigung der Validität der Response an die Provisionierungskomponente. Mit dieser Bestätigung wird beispielsweise zugleich eine erfolgreiche Provisionierung des ersten asymmetrischen Schlüsselpaars und des Sicherheitsapplets bestätigt.

Nach Ausführungsformen ist Voraussetzung für das Erzeugen der ersten Response durch das zweite Sicherheitselement eine erfolgreiche Authentisierung des Nutzers gegenüber dem zweiten Sicherheitselement.

Ausführungsformen können den Vorteil haben, dass wie bereits zuvor erläutert beispielsweise eine erfolgreiche Authentisierung des Nutzers gegenüber dem zweiten Sicherheitselement eine Voraussetzung für eine Verwendung des ersten privaten kryptographischen Schlüssels des ID-Anwendungsprogramms ist. Durch diese Abhängigkeit wird eine Bindung des ID-Anwendungsprogramms und dessen Verwendung an den Nutzer des mobilen Endgeräts implementiert. Erst auf eine erfolgreiche Authentisierung des Nutzers hin kann der erste private kryptographische Schlüssel verwendet und somit die Response auf die Challenge erzeugt werden.

Nach Ausführungsformen umfasst das Prüfen der Provisionierung ferner ein Ausführen eines zweiten Challenge-Response-Verfahrens zusätzlich zu dem ersten Challenge-Response-Verfahrens. Das zweite Challenge-Response-Verfahren umfasst:
- auf ein Senden einer zweiten Challenge-Anfrage der Provisionierungskomponente an das zweite Sicherheitselement hin, Empfangen einer von dem zweiten Sicherheitselement erzeugten zweiten Challenge durch die Provisionierungskomponente,
- auf ein Senden einer zweiten Response-Anfrage der Provisionierungskomponente mit der zweiten Challenge an das erste Sicherheitselement hin, Empfangen einer von dem ersten Sicherheitselement erzeugten zweiten Response auf die zweiten Challenge, wobei das Erzeugen der zweiten Response ein Signieren der zweiten Challenge unter Verwendung des zweiten privaten kryptographischen Schlüssels als zweitem Signaturschlüssel umfasst,
- auf ein Senden einer zweiten Validierungsanfrage der Provisionierungskomponente mit der zweiten Response an das zweite Sicherheitselement, Empfangen einer zweiten Bestätigung der Validität der zweiten Response unter der Voraussetzung einer erfolgreichen Prüfung der Signatur der zweiten Response unter Verwendung des zweiten öffentlichen kryptographischen Schlüssels als zweitem Signaturprüfschlüssel.

Ausführungsformen können den Vorteil haben, dass zusätzlich zum Prüfen der Provisionierung des ersten asymmetrischen Schlüsselpaars eine Prüfung der Provisionierung des zweiten asymmetrischen Schlüsselpaars implementiert werden kann. Die Prüfung des zweiten asymmetrischen Schlüsselpaars erfolgt beispielsweise ebenfalls unter Verwendung eines Challenge-Response-Verfahrens. Im Zuge dieses weiteren Challenge-Response-Verfahrens sendet die Provisionierungskomponente eine Challenge-Anfrage an das zweite Sicherheitselement. In Antwort auf die Challenge-Anfrage erzeugt das zweite Sicherheitselement eine entsprechende Challenge und sendet diese an die Provisionierungskomponente. Bei der entsprechenden Challenge handelt es sich beispielsweise um einen Zufallswert. Die Provisionierungskomponente empfängt die Challenge von dem zweiten Sicherheitselement und leitet diese als Bestandteil einer Response-Anfrage an das erste Sicherheitselement bzw. das Sicherheitsapplet des ersten Sicherheitselements weiter. Das erste Sicherheitsapplet erzeugt unter Verwendung der empfangenen Challenge des zweiten Sicherheitselements eine Response. Das Erzeugen der Response umfasst beispielsweise ein Signieren der empfangenen Challenge mit dem zweiten privaten kryptographischen Schlüssel des ID-Anwendungsprogramms als einem zweiten Signaturschlüssel. Das Sicherheitsapplet sendet die so erzeugte Response an die Provisionierungskomponente. Die Provisionierungskomponente empfängt die Response und leitet diese an das zweite Sicherheitselement als Bestandteil einer Validierungsanfrage weiter. Das zweite Sicherheitselement empfängt die entsprechende Response und prüft deren Signatur unter Verwendung des zweiten öffentlichen kryptographischen Schlüssels des ID-Anwendungsprogramms als einem zweiten Signaturprüfschlüssel. Falls die Prüfung der Signatur erfolgreich ist und damit die Validität der entsprechenden Response bestätigt wird, erzeugt das zweite Sicherheitselement eine Bestätigung der Validität. Die entsprechende Bestätigung sendet das zweite Sicherheitselement an die Provisionierungskomponente. Mit dieser Bestätigung wird beispielsweise zugleich eine erfolgreiche Provisionierung des zweiten asymmetrischen Schlüsselpaars und des Sicherheitsapplets bestätigt. Liegen der Provisionierungskomponente Bestätigung der Provisionierung beider asymmetrischer Schlüsselpaare und des Sicherheitsapplets vor, ist damit die erfolgreiche Provisionierung bestätigt.

Nach Ausführungsformen ist Voraussetzung für das Erzeugen der zweiten Challenge durch das zweite Sicherheitselement eine erfolgreiche Authentisierung des Nutzers gegenüber dem zweiten Sicherheitselement.

Nach Ausführungsformen umfasst das Prüfen der Provisionierung:
- auf ein Senden einer ersten Prüfanfrage der Provisionierungskomponente an das erste Sicherheitselement hin, Berechnen eines ersten symmetrischen kryptographischen Schlüssels durch das erste Sicherheitselements unter Verwendung des ersten öffentlichen kryptographischen Schlüssels und des zweiten privaten kryptographischen Schlüssels,
- auf ein Senden einer zweiten Prüfanfrage der Provisionierungskomponente an das zweite Sicherheitselement hin, Berechnen des ersten symmetrischen kryptographischen Schlüssels durch das zweite Sicherheitselement unter Verwendung des ersten privaten kryptographischen Schlüssels und des zweiten öffentlichen kryptographischen Schlüssels,
- Testen einer verschlüsselten Kommunikation zwischen dem ersten und dem zweiten Sicherheitselement unter Verwendung des ersten symmetrischen kryptographischen Schlüssels zum Verschlüsseln einer Testnachricht.

Ausführungsformen können den Vorteil haben, dass ein alternatives Prüfverfahren zum Prüfen der Provisionierung implementiert werden kann. Das alternative Prüfverfahren basiert im Gegensatz zu dem zuvor beschriebenen Prüfverfahren mit einem doppelten Challenge-Response-Verfahren auf einem Erzeugen eines gemeinsamen symmetrischen kryptographischen Schlüssels, etwa mittels eines Diffie-Hellmann-Verfahrens, und einem Austausch einer verschlüsselten Testnachricht zum Prüfen der erfolgreichen Erzeugung des entsprechenden symmetrischen kryptographischen Schlüssels. Im Zuge dieses alternativen Prüfverfahrens sendet die Provisionierungskomponente eine Prüfanfrage an das erste Sicherheitselement. Auf den Empfang der entsprechenden Prüfanfrage hin berechnet das erste Sicherheitselement bzw. das auf dem ersten Sicherheitselement installierte Sicherheitsapplet einen symmetrischen kryptographischen Schlüssel. Zum Berechnen des entsprechenden symmetrischen kryptographischen Schlüssels verwendet das Sicherheitsapplet den ersten öffentlichen kryptographischen Schlüssel sowie den zweiten privaten kryptographischen Schlüssel des ID-Anwendungsprogramms. Ferner sendet die Provisionierungskomponente eine zweite Prüfanfrage an das zweite Sicherheitselement. Auf den Empfang der entsprechenden zweiten Prüfanfrage hin berechnet das zweite Sicherheitselement ebenfalls den symmetrischen kryptographischen Schlüssel. Hierzu verwendet das zweite Sicherheitselement den ersten privaten kryptographischen Schlüssel sowie den zweiten öffentlichen kryptographischen Schlüssel des ID-Anwendungsprogramms. Anschließend erfolgt ein Testen des beidseitig berechneten gemeinsamen symmetrischen kryptographischen Schlüssels der beiden Sicherheitselemente. Hierzu wird zwischen dem ersten und dem zweiten Sicherheitselement eine verschlüsselte Testnachricht ausgetauscht. Die entsprechende Testnachricht ist mit dem gemeinsamen symmetrischen kryptographischen Schlüssel verschlüsselt. Falls das empfangene Sicherheitselement die Testnachricht entschlüsseln kann, ist damit das erfolgreiche Berechnen des gemeinsamen symmetrischen kryptographischen Schlüssels durch beide Sicherheitselemente und damit eine erfolgreiche Provisionierung beider asymmetrischer Schlüsselpaare in den beiden Sicherheitselementen belegt. Bei der entsprechenden Testnachricht kann es sich beispielsweise um einen Zufallswert handeln. Beispielsweise wird die Testnachricht zusätzlich unverschlüsselt zwischen den beiden Sicherheitselementen ausgetauscht. Beispielsweise wird die entsprechende Testnachricht von einem der beiden Sicherheitselemente erzeugt.

Nach Ausführungsformen ist Voraussetzung für das Berechnen des ersten symmetrischen kryptographischen Schlüssels durch das zweite Sicherheitselement eine erfolgreiche Authentisierung des Nutzers gegenüber dem zweiten Sicherheitselement.

Ausführungsformen können den Vorteil haben, dass eine Bindung der Verwendung des ersten symmetrischen kryptographischen Schlüssels an eine erfolgreiche Authentisierung des Nutzers implementiert werden kann. Dadurch kann eine Bindung des ersten asymmetrischen Schlüsselpaars und mithin des ID-Anwendungsprogramms an den Nutzer des mobilen Endgeräts implementiert werden. Für ein Verwenden des ersten privaten kryptographischen Schlüssels und damit für das Berechnen des ersten symmetrischen kryptographischen Schlüssels durch das zweite Sicherheitselement ist eine erfolgreiche Authentisierung des Nutzers gegenüber dem zweiten Sicherheitselement notwendig. Mit der erfolgreichen Authentisierung signalisiert der Nutzer gegenüber dem mobilen Endgerät und dem ID-Anwendungsprogramm ein Einverständnis zum Prüfen der Provisionierung.

Nach Ausführungsformen umfasst das Prüfen der Provisionierung ferner:
- auf ein Senden der ersten Prüfanfrage der Provisionierungskomponente an das erste Sicherheitselement hin, zusätzliches Berechnen eines zweiten symmetrischen kryptographischen Schlüssels durch das erste Sicherheitselements unter Verwendung des ersten öffentlichen kryptographischen Schlüssels und des zweiten privaten kryptographischen Schlüssels,
- auf ein Senden der zweiten Prüfanfrage der Provisionierungskomponente an das zweite Sicherheitselement hin, zusätzliches Berechnen des zweiten symmetrischen kryptographischen Schlüssels durch das zweite Sicherheitselement unter Verwendung des ersten privaten kryptographischen Schlüssels und des zweiten öffentlichen kryptographischen Schlüssels,
- wobei der zweite symmetrische kryptographische Schlüssel zum Erstellen eines Authentisierungstoken verwendet wird, wobei der Authentisierungstoken einem Nachweis der Authentizität der Testnachricht dient, wobei der Authentisierungstoken unter Verwendung der Testnachricht und des zweiten symmetrischen kryptographischen Schlüssels erstellt wird.

Ausführungsformen können den Vorteil haben, dass zusätzlich zu der Verschlüsselung der Testnachricht ein Prüfen eines Authentizitätsnachweis für die Testnachricht implementiert werden kann. Hierzu wird durch das erste Sicherheitselement sowie das zweite Sicherheitselement jeweils zusätzlich ein gemeinsamer zweiter symmetrischer kryptographischer Schlüssel zusätzlich zu dem ersten symmetrischen kryptographischen Schlüssel berechnet. Dieser zweite symmetrische kryptographische Schlüssel wird durch das erste Sicherheitselement unter Verwendung des ersten öffentlichen kryptographischen Schlüssels sowie des zweiten privaten kryptographischen Schlüssels des ID-Anwendungsprogramms berechnet. Durch das zweite Sicherheitselement wird der entsprechende symmetrische kryptographische Schlüssel unter Verwendung des ersten privaten kryptographischen Schlüssels und des zweiten öffentlichen kryptographischen Schlüssels des ID-Anwendungsprogramms berechnet. Der resultierende zweite symmetrische kryptographische Schlüssel wird zum Erstellen eines Authentisierungstokens verwendet. Der entsprechende Authentisierungstoken dient zum Nachweis der Authentizität der Testnachricht. Erstellt wird der entsprechende Authentisierungstoken unter Verwendung der Testnachricht und des zweiten symmetrischen kryptographischen Schlüssels. Der Authentisierungstoken wird beispielsweise zusammen mit der verschlüsselten Testnachricht übertragen und kann unter Verwendung des zweiten symmetrischen kryptographischen Schlüssels von dem empfangenen Sicherheitselement geprüft werden. Anhand des Sicherheitstokens kann die Authentizität der Testnachricht geprüft werden.

Nach Ausführungsformen handelt es sich bei dem zweiten symmetrischen kryptographischen Schlüssel um einen Schlüssel zum Erzeugen eines Message Authentication Codes. Bei dem Authentisierungstoken handelt es sich um einen unter Verwendung des zweiten symmetrischen kryptographischen Schlüssels erzeugten MAC-Code der Testnachricht.

Ausführungsformen können den Vorteil haben, dass die Authentizität der Testnachricht mittels eines Mac-Codes, welcher unter Verwendung des zweiten symmetrischen kryptographischen Schlüssels erzeugt wird, in effektiver Weise nachgewiesen werden kann. Beispielsweise handelt es sich bei der Testnachricht um einen Zufallswert bzw. eine Zufallszahl.

Nach Ausführungsformen ist Voraussetzung für das Berechnen des zweiten symmetrischen kryptographischen Schlüssels durch das zweite Sicherheitselement eine erfolgreiche Authentisierung des Nutzers gegenüber dem zweiten Sicherheitselement ist.

Ausführungsformen können den Vorteil haben, dass eine Bindung der Verwendung des zweiten symmetrischen kryptographischen Schlüssels an eine erfolgreiche Authentisierung des Nutzers implementiert werden kann. Dadurch kann eine Bindung des ersten asymmetrischen Schlüsselpaars und mithin des ID-Anwendungsprogramms an den Nutzer des mobilen Endgeräts implementiert werden. Für ein Verwenden des ersten privaten kryptographischen Schlüssels und damit für das Berechnen des zweiten symmetrischen kryptographischen Schlüssels durch das zweite Sicherheitselement ist eine erfolgreiche Authentisierung des Nutzers gegenüber dem zweiten Sicherheitselement notwendig. Mit der erfolgreichen Authentisierung signalisiert der Nutzer gegenüber dem mobilen Endgerät und dem ID-Anwendungsprogramm ein Einverständnis zum Prüfen der Provisionierung.

Nach Ausführungsformen sendet die Provisionierungskomponente auf eine erfolgreiche Prüfung hin eine Provisionierungsbestätigung an den Personalisierungsserver.

Ausführungsformen können den Vorteil haben, dass durch eine entsprechende Provisionierungsbestätigung gegenüber dem Provisionierungsserver eine erfolgreiche Provisionierung angezeigt werden kann. Eine erfolgreiche Provisionierung ist beispielsweise Voraussetzung für eine Personalisierung des ID-Anwendungsprogramms, d.h. für ein Einbringen einer elektronischen Identität in das mobile Endgerät zur Verwendung durch entsprechende ID-Anwendungsprogramm. Liegt eine entsprechende Provisionierungsbestätigung vor, kann dies von dem Personalisierungsserver vermerkt werden. Der Personalisierungsserver hat somit Kenntnis davon, dass das entsprechende ID-Anwendungsprogramm erfolgreich provisioniert wurde und dieses somit die entsprechenden Voraussetzungen für eine Personalisierung erfüllt. Voraussetzungen sind beispielsweise ein Vorhandensein der kryptographischen Schlüssel und des Sicherheitsapplets, welche für eine Personalisierung notwendig sind.

Nach Ausführungsformen speichert der Personalisierungsserver auf den Empfang der Provisionierungsbestätigung hin eine Zuordnung des Zertifikats des ID-Anwendungsprogramms mit dem ersten öffentlichen kryptographischen Schlüssel zu der auf dem mobilen Endgerät installierten Instanz des ID-Anwendungsprogramms.

Ausführungsformen können den Vorteil haben, dass der Personalisierungsserver das mit den kryptographischen Schlüsseln provisionierte ID-Anwendungsprogramm mittels der Zuordnung registriert. Im Zuge einer Personalisierung des ID-Anwendungsprogramm kann der Personalisierungsserver auf diese Zuordnung zurückgreifen. Beispielsweise ist der Personalisierungsserver dazu konfiguriert nur registrierte ID-Anwendungsprogramme zu Personalisieren. Beispielsweise erstellt der Personalisierungsserver eine entsprechende Zuordnung, welche das Zertifikat des ID-Anwendungsprogramms mit dem ersten öffentlichen kryptographischen Schlüssel und eine ID der auf dem mobilen Endgerät installierten Instanz des ID-Anwendungsprogramms umfasst. Diese Zuordnung wird auf dem Personalisierungsserver im Zuge einer Registrierung des provisionierten ID-Anwendungsprogramms gespeichert.

Nach Ausführungsformen speichert der Personalisierungsserver auf den Empfang der Provisionierungsbestätigung hin eine Zuordnung des zweiten öffentlichen kryptographischen Schlüssels zu der auf dem mobilen Endgerät installierten Instanz des ID-Anwendungsprogramms.

Ausführungsformen können den Vorteil haben, dass im Zuge einer Registrierung des provisionierten ID-Anwendungsprogramm ferner eine Zuordnung zwischen dem zweiten öffentlichen kryptographischen Schlüssel und der auf dem mobilen Endgerät installierten Instanz des ID-Anwendungsprogramms erstellt und gespeichert wird. Beispielsweise wird der zweite öffentliche kryptographische Schlüssel einer ID der entsprechenden Instanz des ID-Anwendungsprogramms zugeordnet. Beispielsweise wird im Zuge der Registrierung des ID-Anwendungsprogramms auf dem Personalisierungsserver eine Zuordnung erstellt und gespeichert, welche zusätzlich zu dem Zertifikat des ID-Anwendungsprogramms den zweiten öffentlichen kryptographischen Schlüssel des ID-Anwendungsprogramms umfasst.

Nach Ausführungsformen werden dem Personalisierungsserver von dem Provisionierungsserver ein oder mehrere kryptographische Schlüssel zum Zugriff auf das Sicherheitsapplet des ID-Anwendungsprogramms zur Verfügung gestellt.

Ausführungsformen können den Vorteil haben, dass der Provisionierungsserver den Personalisierungsserver dazu in die Lage versetzt auf das Sicherheitsapplet des ID-Anwendungsprogramms zuzugreifen. Somit wird beispielsweise der Personalisierungsserver dazu in der Lage versetzt, eine elektronische Identität in das Sicherheitsapplet einzubringen und das ID-Anwendungsprogramm somit zu personalisieren. Die entsprechenden kryptographischen Schlüssel umfassen beispielsweise symmetrische Schlüssel. Beispielsweise umfassen die entsprechenden kryptographischen Schlüssel SCP-Schlüssel eines Secure Channel Protocol (SCP) der GlobalPlatform.

Nach Ausführungsformen umfasst das Verfahren ferner ein Personalisieren des Sicherheitsapplets unter Verwendung eines ID-Tokens und des Personalisierungsservers. In dem ID-Token sind Attribute eines Nutzers gespeichert. Das Personalisieren umfasst:
- Aufbauen eines dritten verschlüsselten Kommunikationskanals zwischen dem mobilen Endgerät und dem Personalisierungsserver über das Netzwerk, wobei zum Aufbauen des dritten verschlüsselten Kommunikationskanals das ID-Anwendungsprogramm verwendet wird,
- Aufbauen eines ersten verschlüsselten Unterkanals zwischen dem ID-Token und dem Personalisierungsserver innerhalb des dritten verschlüsselten Kommunikationskanals über das mobile Endgerät, wobei zum Aufbauen des ersten verschlüsselten Unterkanals das ID-Anwendungsprogramm verwendet wird,
- Auslesen von ein oder mehreren der Attribute aus dem ID-Token durch den Personalisierungsserver über den ersten verschlüsselten Unterkanal innerhalb des dritten verschlüsselten Kommunikationskanals,
- Aufbauen eines zweiten verschlüsselten Unterkanals zwischen dem Sicherheitsapplet des ersten Sicherheitselements und dem Personalisierungsserver innerhalb des dritten verschlüsselten Kommunikationskanals, wobei zum Aufbauen des zweiten verschlüsselten Unterkanals das ID-Anwendungsprogramm verwendet wird,
- Empfangen der ausgelesenen Attribute durch das Sicherheitsapplet des ersten Sicherheitselements von dem Personalisierungsserver über den zweiten verschlüsselten Unterkanal innerhalb des dritten verschlüsselten Kommunikationskanals,
- Speichern der empfangenen Attribute durch das Sicherheitsapplet, wobei das ID-Anwendungsprogramm dazu konfiguriert ist, die Attribute zum Nachweis einer Identität des Nutzers gegenüber einem weiteren Computersystem zu verwenden.

Ausführungsformen können den Vorteil haben, dass auf einem mobilen Endgerät ein Sicherheitselement bereitgestellt wird, welches es dem Hersteller des ID-Anwendungsprogramms ermöglicht, das entsprechende Sicherheitselement zu personalisieren. Eine entsprechende Personalisierung umfasst beispielsweise ein Einbringen kryptographischer Schlüssel in das Sicherheitselement bzw. ein auf dem Sicherheitselement implementierten Sicherheitsapplet, welche dem auf dem individuellen mobilen Endgerät installierten ID-Anwendungsprogramm zugeordnet sind. Ferner können im Zuge der Personalisierung beispielsweise Attribute eines Nutzers des mobilen Endgeräts in das entsprechende Sicherheitselement eingebracht werden, welche eine elektronische Identität des Nutzers bilden. Somit wird das entsprechende Sicherheitsapplet und das auf dem entsprechenden Endgerät installierte ID-Anwendungsprogramm einem konkreten Nutzer zugeordnet. Zugleich kann das entsprechende ID-Anwendungsprogramm mit individuellem Schlüsselmaterial versehen werden zum Ausführen von kryptographischen Protokollen, anhand derer beispielsweise das entsprechende ID-Anwendungsprogramm zu dem Nutzer nachgewiesen werden kann.

Die entsprechenden Attribute und damit die elektronische Identität des Nutzers wird beispielsweise durch ein ID-Token, d.h. ein elektronisches Identitätsdokument, bereitgestellt. Im Zuge der Personalisierung des Sicherheitselements bzw. des Sicherheitsapplets, welches dem ID-Anwendungsprogramm zugeordnet ist, werden beispielsweise Attribute aus dem elektronischen Identitätsdokument ausgelesen und auf dem Sicherheitselement für das ID-Anwendungsprogramm hinterlegt. Bei der daraus resultierenden elektronischen Identität des Nutzers, welche das mobile Endgerät zur Verwendung durch das ID-Anwendungsprogramm bereitstellt, handelt es sich mithin um eine abgeleitete Identität, welche aus dem elektronischen Identitätsdokument abgeleitet ist. Bei dem entsprechenden elektronischen Identitätsdokument kann es sich insbesondere um ein hoheitliches Identitätsdokument, wie etwa einen elektronischen Personalausweis oder einen elektronischen Reisepass handeln.

Ausführungsformen können den Vorteil haben, dass im Zuge einer solchen Ableitung sichergestellt werden kann, dass die abgeleitete Identität in Form der auf dem Sicherheitselement hinterlegten Attribute auch tatsächlich auf einem an den Nutzer gebundenen Sicherheitselement hinterlegt werden. Mit anderen Worten, können Ausführungsformen den Vorteil haben, dass eine Bindung des Sicherheitselements und damit der entsprechenden Attribute an den tatsächlichen Inhaber der entsprechenden Attribute gewährleistet werden kann. Es kann somit verhindert werden, dass ein unberechtigter Nutzer sich Zugriff auf Attribute eines anderen Nutzers verschafft und diese zum Ausweisen mit einer gefälschten elektronischen Identität verwendet. Im Falle eines Identitätsnachweises mit dem mobilen Endgerät kann daher vorteilhafterweise sichergestellt werden, dass mit dem Identitätsnachweis vorgelegten Attribute auch tatsächlich Attribute des sich identifizierten Nutzers sind. Hierzu wird der Übertragungsweg zum Auslesen der entsprechenden Attribute, d.h. der elektronischen Identität eines Identitätsdokuments, mit einem Übertragungsweg der Personalisierung der abgeleiteten Identität, d.h. des Einbringens der ausgelesenen Attribute in ein Sicherheitselement eines mobilen Endgeräts mit kryptographischen Mitteln, sichergestellt. Somit kann gewährleistet werden, dass es sich bei dem zum Auslesen der Attribute verwendeten mobilen Endgerät um dasselbe mobile Endgerät handelt, dessen Sicherheitselemente mit den ausgelesenen Attributen personalisiert wird.

Der Nutzer muss sich beispielsweise im Zuge des Auslesens des ID-Tokens unter Verwendung des mobilen Endgeräts gegenüber dem ID-Token authentisieren. Somit kann sichergestellt werden, dass der das Auslesen initiierende bzw. bestätigende Nutzer auch tatsächlich der Inhaber des entsprechenden ID-Dokuments ist. Ferner muss sich der Nutzer im Zuge des Personalisierens des Sicherheitselements des mobilen Endgeräts, d.h. im Zuge des Einbringens der ausgelesenen Attribute, gegenüber dem mobilen Endgerät authentisieren. Somit kann sichergestellt werden, dass es sich bei dem das Personalisieren initiierenden bzw. bestätigenden Nutzer tatsächlich um den Eigentümer des mobilen Endgeräts bzw. den auf diesem mobilen Endgerät registrierten Nutzer handelt. Dadurch, dass zusätzlich die Übertragungswege zum Auslesen der Attribute und zum Einbringen der Attribute bzw. zum Personalisieren mit kryptographischen Mitteln aneinandergebunden sind, kann sichergestellt werden, dass es sich bei dem beim Auslesen und beim Einbringen der Attribute jeweils um dasselbe mobile Endgerät handelt, welches demselben Nutzer zugeordnet ist. Muss sich der entsprechende Nutzer im Zuge des Auslesens der Attribute sowohl gegenüber dem mobilen Endgerät als auch gegenüber dem ID-Token authentisieren, kann beispielsweise sichergestellt werden, dass es sich bei dem Inhaber des ID-Tokens um dieselbe Person handelt, welche auch Besitzer des mobilen Endgeräts ist.

Zumindest kann sichergestellt werden, dass der Inhaber des ID-Tokens im Zuge des Auslesens zusammen mit dem Besitzer des mobilen Endgeräts seine Zustimmung erteilt und für das Einbringen der entsprechenden Attribute zumindest das Einverständnis des Eigentümers desselben mobilen Endgeräts notwendig ist. Somit kann ausgeschlossen werden, dass im Zuge des Auslesens und Einbringens von Attributen das verwendete mobile Endgerät ausgetauscht und die entsprechenden Attribute somit in die Verfügungshoheit eines anderen, insbesondere eines unberechtigten, Nutzers gelangen können. Somit kann effektiv Missbrauch vorgebeugt werden. Zum kryptographischen Binden des Übertragungswegs des Auslesens der Attribute an den Übertragungsweg zum Personalisieren bzw. Einbringen der Attribute wird ein verschlüsselter Kommunikationskanal zwischen mobilem Endgerät und einem die Personalisierung ausführenden Personalisierungsserver aufgebaut. Dieser Kommunikationskanal ist verschlüsselt, so dass sichergestellt werden kann, dass Kommunikation über diesen tatsächlich nur zwischen den beiden Teilnehmern möglich ist, welche den entsprechenden Kommunikationskanal initial aufgebaut haben, d.h. dem mobilen Endgerät und dem Personalisierungsserver. Hierzu kann insbesondere eine Ende-zu-Ende-Verschlüsselung zum Einsatz kommen. Beispielsweise erfolgt die Verschlüsselung aufseiten des mobilen Endgeräts unter Verwendung eines weiteren Sicherheitselements des mobilen Endgeräts, welches beispielsweise einem Betriebssystem des mobilen Endgeräts zugeordnet ist und zum Aufbau verschlüsselter Kommunikationskanäle unabhängig von dem ersten Sicherheitselement mit dem zu personalisierenden Sicherheitsapplet konfiguriert ist. Das Auslesen aus dem ID-Token einerseits und das Einbringen der ausgelesenen Attribute im Zuge der Personalisierung in das zu personalisierende Sicherheitselement andererseits erfolgt dabei beispielsweise jeweils über einen eigenständigen verschlüsselten Unterkanal des verschlüsselten Kommunikationskanals. Die verschlüsselten Unterkanäle ermöglichen es sicherzustellen, dass über diese nur Teilnehmer miteinander kommunizieren können, welche den entsprechenden Unterkanal aufgebaut haben und über die entsprechenden kryptographischen Schlüssel verfügen. Im Falle des ersten verschlüsselten Unterkanals zwischen dem ID-Token und dem Personalisierungsserver sind dies der entsprechende ID-Token und der Personalisierungsserver. Im Falle des zweiten verschlüsselten Unterkanals zwischen dem zu personalisierenden Sicherheitsapplet des ersten Sicherheitselement und dem Personalisierungsserver sind dies das entsprechende zu personalisierende Sicherheitsapplet und der Personalisierungsserver.

Bei den Unterkanälen handelt es sich um verschlüsselte Unterkanäle innerhalb des verschlüsselten Kommunikationskanals. Es liegt dabei jeweils eine doppelte Verschlüsselung der übertragenen Daten vor. Zum einen werden die entsprechenden Daten im Zuge des Auslesens aus dem ID-Token von einem den entsprechenden verschlüsselten Unterkanal zugeordneten kanalspezifischen ephemeren symmetrischen kryptographischen Sitzungsschlüssel durch den ID-Token verschlüsselt. Im Zuge der Übertragung der entsprechenden verschlüsselten Daten zwischen dem mobilen Endgerät und dem Personalisierungsserver werden diese zusätzlich ein zweites Mal von dem mobilen Endgerät mit einem kanalspezifischen ephemeren symmetrischen kryptographischen Sitzungsschlüssels des verschlüsselten Kommunikationskanals verschlüsselt. Der empfangene Personalisierungsserver muss mithin zunächst die Verschlüsselung des Kommunikationskanals und anschließend die Verschlüsselung des entsprechenden Unterkanals entschlüsseln, um Zugriff auf die übertragenen Daten zu erlangen.

Im Zuge der Personalisierung verwendet der Personalisierungsserver durchgehend denselben verschlüsselten Kommunikationskanal. Dies bedeutet, dass die zum Personalisieren verwendeten Attribute mit dem kanalspezifischen ephemeren symmetrischen kryptographischen Sitzungsschlüssel des verschlüsselten Kommunikationskanals verschlüsselt werden. Da sich lediglich das bereits zum Auslesen der Attribute verwendete mobile Endgerät, beispielsweise dessen weiteres Sicherheitselement, im Besitz desselben kanalspezifischen ephemeren symmetrischen kryptographischen Sitzungsschlüssels befindet, ist nur dasselbe mobile Endgerät dazu in der Lage, die zum Personalisieren zu verwendenden Attribute zu entschlüsseln. Somit kann sichergestellt werden, dass zum Personalisieren dasselbe mobile Endgerät verwendet wird, welches bereits zuvor zum Auslesen der entsprechenden Attribute verwendet wurde. Um eine sichere Übertragung der zum Personalisieren zu verwendenden Attribute an das zu personalisierende Sicherheitselement des mobilen Endgeräts sicherzustellen, wird zur Übertragung der Attribute ein weiterer verschlüsselte Unterkanal innerhalb des verschlüsselten Kommunikationskanals verwendet. Mit anderen Worten werden die entsprechenden Attribute zunächst mit einem ephemeren symmetrischen kryptographischen Sitzungsschlüssel des entsprechenden Unterkanals verschlüsselt und anschließend mit dem kanalspezifischen ephemeren symmetrischen kryptographischen Sitzungsschlüssel des verschlüsselten Kommunikationskanals. Die so doppelt verschlüsselten Attribute werden zunächst durch das den Endpunkt des verschlüsselten Kommunikationskanals bildende mobile Endgerät entschlüsselt, beispielsweise durch ein weiteres den hierfür notwendigen ephemeren kryptographischen Sitzungsschlüssel verwaltendes Sicherheitselement des Endgeräts. Die aus dieser ersten Entschlüsselung resultierenden Daten werden an das Sicherheitselement mit dem zu personalisierenden Sicherheitsapplet des entsprechenden ID-Anwendungsprogramms geleitet. Das entsprechende Sicherheitsapplet verfügt über den kryptographischen Sitzungsschlüssel, welcher dem entsprechenden Unterkanal, dessen Endpunkt das Sicherheitsapplet beispielsweise bildet, zugeordnet ist. Mit diesem kryptographischen Sitzungsschlüssel lässt sich auch die zweite Verschlüsselung der übertragenen Daten entschlüsseln und diese können von dem zu personalisierenden Sicherheitselement zur Personalisierung verwendet werden.

Beispielsweise wird zunächst eine gesicherte Verbindung in Form des verschlüsselten Kommunikationskanals von dem mobilen Endgerät zum Personalisierungsserver aufgebaut. Die entsprechende Verbindung ist beispielsweise durch eine gegenseitige Authentisierung bzw. Authentifizierung gesichert, aufgrund derer die Teilnehmer sicherstellen können, mit wem sie kommunizieren. Die Authentisierung seitens des mobilen Endgeräts kann eine Authentisierung des Nutzers des mobilen Endgeräts gegenüber dem mobilen Endgerät voraussetzen. Somit kann nicht nur sichergestellt werden, dass die Kommunikation im Kommunikationskanal mit dem bzw. über das mobile Endgerät erfolgt, sondern zudem, dass die Kommunikation unter Einverständnis des Nutzers des mobilen Endgeräts erfolgt. Hierzu stellt der entsprechende Nutzer beispielsweise einen Authentisierungsfaktor bereit, wie etwa ein biometrisches Merkmal oder eine PIN, insbesondere eine System-PIN. Der entsprechende Authentisierungsfaktor wird beispielsweise durch einen Authentifizierungssensor des mobilen Endgeräts in Form von Authentisierungsdaten erfasst. Hierbei kann es sich beispielsweise um einen biometrischen Sensor, wie etwa einen Fingerscanner oder eine Kamera zum Erfassen des Nutzers handeln. Beispielsweise kann es sich bei dem entsprechenden Authentifizierungssensor auch um eine Eingabevorrichtung des mobilen Endgeräts handeln, über welche der Nutzer seine PIN eingeben kann, wie etwa eine Tastatur oder ein Touchscreen. Bei einer System-PIN handelt es sich beispielsweise um eine dem Betriebssystem des entsprechenden mobilen Endgeräts zugeordnete PIN des Nutzers. Zum Auslesen von Attributen aus dem ID-Token, d.h. dem elektronischen Identitätsdokuments des Nutzers, ist zudem im Zuge des Aufbaus des Unterkanals eine Authentisierung des Nutzers gegenüber dem ID-Token notwendig. Hierzu kann der Nutzer beispielsweise einen entsprechenden Authentifizierungsfaktor über den Authentifizierungssensor des mobilen Endgeräts bereitstellen. Alternativerweise kann der entsprechende Authentifizierungsfaktor auch direkt gegenüber dem ID-Token bereitgestellt werden, falls der ID-Token über den Authentifizierungssensor zum Erfassen des entsprechenden Authentifizierungsfaktors verfügt. Bei dem entsprechenden Authentifizierungsfaktor kann es sich wie zuvor beispielsweise um biometrische Merkmale des Nutzers oder insbesondere eine Dokumenten-PIN handeln. Bei einer entsprechenden Dokumenten-PIN handelt es sich um eine PIN, welche dem entsprechenden ID-Token bzw. elektronischen Identitätsdokument zugeordnet ist. Zum Übertragen der ausgelesenen Attribute von dem ID-Token an dem Personalisierungsserver wird ein verschlüsselter Unterkanal des verschlüsselten Kommunikationskanals aufgebaut. Der entsprechende Aufbau erfolgt beispielsweise über den verschlüsselten Kommunikationskanal. Die auszulesenden Attribute werden sodann mit einer doppelten Verschlüsselung kryptographisch gesichert von dem Personalisierungsserver an das mobile Endgerät bzw. das zu personalisierende Sicherheitsapplet des ID-Anwendungsprogramm übertragen.

Zum Personalisieren zu personalisierenden Sicherheitsapplets des ID-Anwendungsprogramms auf dem ersten Sicherheitselement wird ein zweiter Unterkanal innerhalb des verschlüsselten Kommunikationskanals aufgebaut. Hierzu ist beispielsweise eine Authentisierung des Nutzers gegenüber dem zu personalisierenden Sicherheitsapplet notwendig. Die Authentifizierung erfolgt beispielsweise unter Verwendung eines weiteren Sicherheitselements, bei welchem es sich um ein dem Betriebssystem des mobilen Endgeräts zugeordnetes Sicherheitselement handelt. Der Nutzer authentisiert sich gegenüber dem entsprechenden weiteren Sicherheitselement bzw. wird von dem entsprechenden weiteren Sicherheitselement erfolgreich authentifiziert. Die erfolgreiche Authentifizierung des Nutzers teilt das weitere Sicherheitselement dem zu personalisierenden Sicherheitsapplet auf dem ersten Sicherheitselement mit. Die entsprechende Mitteilung kann beispielsweise unter Verwendung eines Challenge-Response-Verfahrens erfolgen. Somit wird der Nutzer zusätzlich auch gegenüber dem zu personalisierenden Sicherheitsapplet des mobilen Endgeräts erfolgreich authentisiert. Auf eine erfolgreiche Authentifizierung des Nutzers durch das zu personalisierende Sicherheitsapplet auf dem ersten Sicherheitselement unter Verwendung des weiteren Sicherheitselements hin, wird ein verschlüsselter Unterkanal zwischen dem zu personalisierenden Sicherheitsapplet des ersten Sicherheitselements und dem Personalisierungsserver über den verschlüsselten Kommunikationskanal aufgebaut. Bei dem verschlüsselten Unterkanal handelt es sich beispielsweise um einen Ende-zu-Endeverschlüsselten Unterkanal. Die zuvor ausgelesenen Daten, d.h. Attribute, aus dem ID-Token werden nun über den zweiten Unterkanal innerhalb des Kommunikationskanals an das zu personalisierende Sicherheitsapplet auf dem ersten Sicherheitselement übertragen. Ferner können über den entsprechenden Unterkanal auch weitere kryptographische Elemente, wie etwa kryptographische Schlüssel an das zu personalisierende Sicherheitsapplet übertragen werden. Bei den entsprechenden kryptographischen Schlüsseln handelt es sich beispielsweise um die attributspezifischen und damit identitätsspezifischen kryptographischen Schlüssel, welche der im Zuge der Personalisierung auf dem mobilen Endgerät hinterlegten abgeleiteten elektronischen Identität des Nutzers des mobilen Endgeräts zugeordnet sind.

Die Provisionierung dient der Vorbereitung des mobilen Endgeräts zu einer entsprechenden sicheren Personalisierung eines mobilen Endgeräts bzw. eines auf dem mobilen Endgerät installierten ID-Anwendungsprogramm mit Identitätsinformationen eines Nutzers und dessen Bindung an das Gerät, wobei das Sicherheitsapplet insbesondere unabhängig vom Gerätehersteller ist. Ein entsprechend personalisiertes mobiles Endgerät ermöglicht eine Nutzer-Authentisierung gegenüber einem geräteherstellerunabhängigen Sicherheitsapplet, beispielsweise zum Zweck einer Identifizierung und/oder Authentifizierung durch einen ID-Provider-Server gegenüber dritten Dienstanbietern.

Ausführungsformen können den Vorteil haben, dass sie eine sichere Verwaltung digitaler bzw. elektronischer Identitäten unter Verwendung eines mobilen Endgeräts ermöglichen. Hierzu ist das ID-Anwendungsprogramm zum Verwalten von elektronischen Identitäten bzw. von zu elektronischen Identitäten gehörenden bzw. elektronische Identitäten definierenden Identitätsattributen konfiguriert. Es wird beispielsweise ein sicheres ID-Anwendungsprogramm zum Verwalten elektronsicher Identitäten bereitgestellt.

Dem ID-Anwendungsprogramm, welches auf dem mobilen Endgerät installiert und ausgeführt wird, ist zumindest ein Sicherheitsapplet zugeordnet. Das Sicherheitsapplet wird im Zuge der Provisionierung auf dem ersten Sicherheitselement des mobilen Endgeräts installiert und dort ausgeführt. Das mobile Endgerät mit den von dem ID-Anwendungsprogramm verwalteten elektronischen Identitäten kann beispielsweise verwendet werden zum Identifizieren und Authentifizieren, zum Übertragen von Identitätsdaten sowie zur Unterstützung von Absichtserklärungen im mobilen Kontext.

Nach Ausführungsformen kann die elektronische Identität eine offiziell anerkannte Identität, wie zum Beispiel eine auf Grundlage eines offiziellen Ausweisdokuments, etwa eines Personalausweises oder Reisepasses, erstellte elektronische Identität umfassen.

Die elektronische Identität eines Nutzers ist eindeutig, d.h. einzigartig und unverwechselbar. Sie wird auf der Grundlage von Merkmalen, sog. Identitätsattributen, definiert. Eine elektronische Identität umfasst beispielsweise personenbezogene Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen elektronischen Identitäten verfügen. Diese elektronischen Identitäten können unterschiedlichen Sicherheitsanforderungen entsprechen.

Nach Ausführungsformen kann eine auf dem mobilen Endgerät gespeicherte und von dem ID-Anwendungsprogramm bereitgestellte bzw. verwaltete elektronische Identität ohne zusätzliche Hardware neben dem mobilen Endgerät zur Identifizierung und Authentifizierung des Nutzers des mobilen tragbaren Endgeräts verwendet werden.

Identitätsattribute werden beispielsweise von Service-Providern bzw. Dienstanbietern für Online-Dienste nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider-Server ausgelesen und von diesem dem anfragenden Dienstanbieter zur Verfügung gestellt. Nach Ausführungsformen stellt der ID-Provider-Server dem anfragenden Dienstanbieter nur eine Bestätigung des oder der angefragten Identitätsattribute zur Verfügung. Beispielsweise fragt der Dienstanbieter an, ob die angefragten Identitätsattribute ein oder mehrere Merkmale aufweisen, was von dem ID-Provider-Server anhand der ausgelesenen Identitätsattribute geprüft und gegenüber dem Dienstanbieter entweder bestätigt oder verneint wird.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen steuert das ID-Anwendungsprogramm den Aufbau des verschlüsselten Kommunikationskanals zwischen dem mobilen Endgerät und dem Personalisierungsserver. Beispielsweise umfasst das ID-Anwendungsprogramm eine Personalisierungskomponente, welche auf Seiten des mobilen Endgeräts die Personalisierung steuert. Beispielsweise steuert die Personalisierungskomponente des ID-Anwendungsprogramms auf Seiten des mobilen Endgeräts den Aufbau des verschlüsselten Kommunikationskanals sowie den Aufbau des ersten verschlüsselten Unterkanals und des zweiten verschlüsselten Unterkanals unter Vermittlung des mobilen Endgeräts.

Beispielsweise werden die empfangenen Attribute durch das Sicherheitsapplet in dem ersten Sicherheitselement gespeichert. Beispielsweise werden die Attribute in einem dem Sicherheitsapplet bzw. dem ID-Anwendungsprogramm zugeordneten Speicherbereich des ersten Sicherheitselements gespeichert.

Beispielsweise sendet der Personalisierungsserver zusammen mit den Attributen eine Aufforderung an das erste Sicherheitselement zum Speichern der Attribute. Beispielsweise wird die Aufforderung in Form einer CAPDU ("Commando Application Protocol Data Unit") an das Sicherheitsapplet des ersten Sicherheitselements gesendet.

Nach Ausführungsformen ist der dritte verschlüsselte Kommunikationskanal mit einem ersten kanalspezifischen ephemeren symmetrischen kryptographischen Sitzungsschlüssel verschlüsselt. Der erste verschlüsselte Unterkanal ist mit einem zweiten kanalspezifischen ephemeren symmetrischen kryptographischen Sitzungsschlüssel verschlüsselt. Der zweite verschlüsselte Unterkanal ist mit einem dritten kanalspezifischen ephemeren symmetrischen kryptographischen Sitzungsschlüssel verschlüsselt.

Ausführungsformen können den Vorteil haben, dass die Verschlüsselung im Kommunikationskanal sowie in den beiden verschlüsselten Unterkanälen jeweils kanalspezifische ephemere symmetrische kryptographische Sitzungsschlüssel zugeordnet sind. Somit können die Unterkanäle jeweils mit dem Kommunikationskanal kombiniert bzw. innerhalb desselben ausgeführt werden, indem eine doppelte Verschlüsselung durch die den entsprechenden Kanälen zugeordneten kryptographischen Sitzungsschlüssel verwendet wird.

Nach Ausführungsformen sind der erste kanalspezifische ephemere symmetrische kryptographische Sitzungsschlüssel, der zweite kanalspezifische ephemere symmetrische kryptographische Sitzungsschlüssel und der dritte kanalspezifische ephemere symmetrische kryptographische Sitzungsschlüssel jeweils unabhängig voneinander.

Beispielsweise ist dem ersten und dem zweiten verschlüsselten Unterkanal ferner jeweils ein kanalspezifischer ephemerer symmetrischer kryptographischer Authentisierungsschlüssel zum Authentisieren von Daten zugeordnet, welche über den entsprechenden ersten bzw. zweiten verschlüsselten Unterkanal übertragen werden. Beispielsweise wird für die entsprechenden Daten unter Verwendung des jeweiligen kanalspezifischer ephemerer symmetrischer kryptographischer Authentisierungsschlüssel jeweils ein MAC erzeugt. Bei den entsprechenden Authentisierungsschlüsseln handelt es sich beispielsweise um kryptographische Schlüssel zum Erzeugen des entsprechenden MAC.

Ein MAC wird beispielsweise unter Verwendung eines MAC-Algorithmus berechnet, welchem zu schützende Daten, z.B. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC ("Keyed-Hash Message Authentication Code") verwendet werden, für dessen Konstruktion eine kryptographische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise dem ID-Token, und Empfänger, beispielsweise einem Personalisierungsserver, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Nach Ausführungsformen handelt es sich bei der Verschlüsselung des dritten verschlüsselten Kommunikationskanals um eine Ende-zu-Ende-Verschlüsselung zwischen dem mobilen Endgerät und dem Personalisierungsserver.

Ausführungsformen können den Vorteil haben, dass sichergestellt werden kann, dass stets dasselbe mobile Endgerät einen Endpunkt des verschlüsselten Kommunikationskanals bildet. Solange also über denselben verschlüsselten Kommunikationskanal kommuniziert wird, weiß der Personalisierungsserver, dass er mit demselben mobilen Endgerät kommuniziert. Somit kann sichergestellt werden, dass es sich bei dem mobilen Endgerät, über welches der ID-Token ausgelesen wird, um dasselbe mobile Endgerät handelt, welches mit den ausgelesenen Daten, d.h. Attributen des ID-Tokens, personalisiert wird.

Nach Ausführungsformen erfolgt die Verschlüsselung des verschlüsselten Kommunikationskanal seitens des mobilen Endgeräts unter Verwendung des zweiten Sicherheitselements des mobilen Endgeräts, welches einem Betriebssystem des mobilen Endgeräts zugeordnet ist. Das zweite Sicherheitselement stellt beispielsweise kryptographische Schlüssel und/oder kryptographische Protokolle für das Betriebssystem bereit.

Nach Ausführungsformen handelt es sich bei der Verschlüsselung des ersten verschlüsselten Unterkanals um eine Ende-zu-Ende-Verschlüsselung zwischen dem ID-Token und dem Personalisierungsserver.

Ausführungsformen können den Vorteil haben, dass die zwischen dem ID-Token und dem Personalisierungsserver verschlüsselt übertragenen Daten zumindest zwischen dem mobilen Endgerät und dem Personalisierungsserver innerhalb des verschlüsselten Kommunikationskanals übertragen werden können. Zugleich erlangt das mobile Endgerät an diesem Punkt noch keinen Zugriff auf die über den verschlüsselten Unterkanal übertragenen Daten. Somit kann sichergestellt werden, dass ein Zugriff auf die entsprechenden Daten ausschließlich durch den Personalisierungsserver im Zuge einer Personalisierung erfolgt. Mithin kann einem Missbrauch bzw. einem unberechtigten Auslesen von Attributen entgegengewirkt werden. Vielmehr kann ein entsprechendes Auslesen und Verwenden der Attribute zum Personalisieren ausschließlich über eine vertrauenswürdige Instanz in Form des Personalisierungsservers erfolgen.

Nach Ausführungsformen handelt es sich bei der Verschlüsselung des zweiten verschlüsselten Unterkanals um eine Ende-zu-Ende-Verschlüsselung zwischen dem Sicherheitsapplet und dem Personalisierungsserver.

Ausführungsformen können den Vorteil haben, dass durch die Ende-zu-Ende-Verschlüsselung zwischen dem zu personalisierenden Sicherheitsapplet des ersten Sicherheitselements und dem Personalisierungsserver sichergestellt werden kann, dass tatsächlich das zu personalisierende Sicherheitsapplet des ersten Sicherheitselements des mobilen Endgeräts personalisiert wird und dass die zur Personalisierung verwendeten Daten ausschließlich dem entsprechenden Sicherheitsapplet zur Verfügung gestellt werden. Somit können beispielsweise unberechtigte Zugriffe auf die entsprechende Personalisierungsdaten verhindert werden.

Nach Ausführungsformen umfasst das Personalisieren ferner:
- Erzeugen eines dem ID-Anwendungsprogramm zugeordneten dritten asymmetrischen Schlüsselpaars durch das Sicherheitsapplet des ersten Sicherheitselements, wobei das dritte asymmetrische Schlüsselpaar einen dritten privaten kryptographischen Schlüssel und einen dritten öffentlichen kryptographischen Schlüssel umfasst, wobei das dritte asymmetrische Schlüsselpaar zu einem Authentisieren des ID-Anwendungsprogramms im Zuge einer Verwendung der Attribute dient,

Nach Ausführungsformen sendet das Sicherheitsapplet den dritten öffentlichen kryptographischen Schlüssel des ID-Anwendungsprogramms an den Personalisierungsserver über den zweiten verschlüsselten Unterkanal innerhalb des dritten verschlüsselten Kommunikationskanals.

Ausführungsformen können den Vorteil haben, dass durch das Sicherheitsapplet auf dem ersten Sicherheitselement ein individuelles asymmetrisches Schlüsselpaar für das individuelle ID-Anwendungsprogramm erzeugt und zur Verwendung für das ID-Anwendungsprogramm bereitgestellt werden kann. Beispielsweise ist das asymmetrisches Schlüsselpaar der individuellen elektronischen Identität zugeordnet, welche im Zuge der Personalisierung in das mobile Endgerät eingebracht wird. Der öffentliche kryptographische Schlüssel des entsprechenden asymmetrischen Schlüsselpaars wird über den verschlüsselten Unterkanal zwischen Sicherheitsapplet und Personalisierungsserver in dem verschlüsselten Kommunikationskanal übertragen. Somit wird der entsprechende öffentliche kryptographische Schlüssel, der im Zuge der Personalisierung auf dem personalisierten Sicherheitselement erzeugt wird, dem Personalisierungsserver zur Verfügung gestellt. Dieser kann den entsprechenden öffentlichen kryptographischen Schlüssel beispielsweise als Signaturprüfschlüssel anderen Instanzen zur Verfügung stellen. Mit dem entsprechendem Signaturprüfschlüssel kann sichergestellt werden, dass mit dem zugehörigen privaten kryptographischen Schlüssel signierte Daten tatsächlich von dem personalisierten Sicherheitsapplet des ersten Sicherheitselements stammen. Beispielsweise kann der Personalisierungsserver ein Zertifikat für bzw. mit dem entsprechenden öffentlichen kryptographischen Schlüssel ausstellen. Durch das entsprechende Zertifikat, bei welchem es sich beispielsweise um ein Zertifikat einer Zertifikatskette, insbesondere einer PKI handelt, kann durch den Personalisierungsserver die Authentizität des entsprechenden öffentlichen kryptographischen Schlüssels bzw. dessen Zuordnung zu dem personalisierten Sicherheitselement und damit zu dem entsprechenden personalisierten ID-Anwendungsprogramm bestätigt werden. Beispielsweise sendet der Personalisierungsserver zum Initiieren des Erzeugens des dem ID-Anwendungsprogramm zugeordneten asymmetrischen kryptographischen Schlüsselpaars eine Aufforderung an das Sicherheitsapplet des ersten Sicherheitselements, welche das Sicherheitsapplet zum Erzeugen des dem ID-Anwendungsprogramm zugeordneten asymmetrischen kryptographischen Schlüsselpaars auffordert. Beispielsweise wird die Aufforderung in Form einer CAPDU an das Sicherheitsapplet des ersten Sicherheitselements gesendet.

Nach Ausführungsformen umfasst das Personalisieren ferner:
- Empfangen ein oder mehrere Wurzelsignaturprüfschlüssel durch das Sicherheitsapplet des ersten Sicherheitselements von dem Personalisierungsserver über den zweiten verschlüsselten Unterkanal innerhalb des dritten verschlüsselten Kommunikationskanals, wobei die empfangenen Wurzelsignaturprüfschlüssel zum Verifizieren von Zertifikatsignaturen ein oder mehrerer Wurzelinstanzen dienen, welche Zertifikate aufweisen, die jeweils im Zuge eines Auslesens der Attribute zum Authentisieren eines auslesenden Computersystems gegenüber dem ID-Anwendungsprogramm verwendet werden,
- Speichern der empfangenen Wurzelsignaturprüfschlüssel durch das Sicherheitsapplet in dem ersten Sicherheitselement.

Ausführungsformen können den Vorteil haben, dass im Zuge der Personalisierung auf dem entsprechenden Sicherheitselement Wurzelsignaturprüfschlüssel in dem Sicherheitsapplet hinterlegt werden können. Mit den entsprechenden Wurzelsignaturprüfschlüsseln wird das Sicherheitsapplet dazu in die Lage versetzt, Signaturen von Wurzelinstanzen, insbesondere Zertifikatsignaturen von Wurzelinstanzen, zu verifizieren. Wird dem ID-Anwendungsprogramm und damit dem Sicherheitsapplet eine Zertifikatskette zum Authentifizieren eines Computersystems vorgelegt, beispielsweise eines ID-Provider-Servers, welches zum Nachweis der Identität des Nutzers des mobilen Endgeräts auf die ausgelesenen und in dem personalisierten Sicherheitselement hinterlegten Attribute zugreifen möchte. So kann mit dem Wurzelsignaturprüfschlüssel beispielsweise ein erstes innerhalb der Zertifikatskette ausgestelltes Ausgangszertifikat der entsprechenden Zertifikatskette verifiziert werden. Erweist sich das entsprechende Ausgangszertifikat als authentisch, so kann dadurch sukzessive die Authentizität der vollständigen Zertifikatskette geprüft und verifiziert werden. Beispielsweise ist jedes Zertifikat der Zertifikatskette jeweils unter Verwendung eines privaten kryptographischen Schlüssels einer ausstellenden Instanz als Signaturschlüssel signiert. Die entsprechende Signatur kann beispielsweise jeweils durch einen von dem vorangehenden Zertifikat als Signaturprüfschlüssel bereitgestellten zugehörigen öffentlichen kryptographischen Schlüssel verifiziert werden. Lediglich das Ausgangszertifikat, welchem kein Zertifikat vorangeht, ist mit einem Wurzelsignaturschlüssel einer Wurzelinstanz signiert. Diese Wurzelsignatur kann unter Verwendung eines entsprechenden in dem personalisierten Sicherheitselement hinterlegten Wurzelsignaturprüfschlüssel geprüft und verifiziert werden.

Beispielsweise sendet der Personalisierungsserver zusammen mit den ein oder mehrere Wurzelsignaturprüfschlüssel eine Aufforderung an das Sicherheitsapplet des ersten Sicherheitselements zum Speichern der Wurzelsignaturprüfschlüssel. Beispielsweise wird die Aufforderung in Form einer CAPDU an das Sicherheitsapplet des ersten Sicherheitselements gesendet.

Nach Ausführungsformen umfasst das Personalisieren ferner:
- Empfangen einer Signatur der Attribute von dem Personalisierungsserver durch das Sicherheitsapplet des ersten Sicherheitselements über den zweiten verschlüsselten Unterkanal innerhalb des dritten verschlüsselten Kommunikationskanals, wobei die Signatur als Authentizitätsnachweis der Attribute dient,
- Speichern der empfangenen Signatur der Attribute durch das Sicherheitsapplet in dem ersten Sicherheitselement.

Ausführungsformen können den Vorteil haben, dass mittels der entsprechenden Signatur der Attribute deren Authentizität verifizierbar ist. Mithin kann das mobile Endgerät, welches eine entsprechende Signatur der zum Personalisieren verwendeten Attribute umfasst, auch offline zum Nachweis der Identität des Nutzers des mobilen Endgeräts verwendet werden. Hierzu zeigt das mobile Endgerät die entsprechenden Attribute inklusive Signatur beispielsweise auf einer Anzeigevorrichtung an, etwa in Form eines ein- oder zweidimensionalen lesbaren Maschinencodes, beispielsweise eines QR-Codes. Die entsprechenden Attribute mit der Signatur können dann beispielsweise von einem Lesegerät erfasst und anhand der Signatur verifiziert werden. Ferner wäre beispielsweise eine kontaktlose Übertragung der entsprechenden Attribute mit der Signatur zum Nachweis der Identität des Nutzers des mobilen Endgeräts an ein weiteres Computersystem, beispielsweise ein weiteres mobiles Endgerät, möglich. Auch in diesem Fall könnte die Authentizität der entsprechenden Attribute und damit die Identität des Nutzers des mobilen Endgeräts anhand der Signatur nachgewiesen werden.

Beispielsweise sendet der Personalisierungsserver zusammen mit der Signatur der ersten Attribute eine Aufforderung an das Sicherheitsapplet des ersten Sicherheitselements zum Speichern der Signatur der ersten Attribute. Beispielsweise wird die Aufforderung in Form einer CAPDU an das Sicherheitsapplet des ersten Sicherheitselements gesendet.

Nach Ausführungsformen umfasst das Aufbauen des verschlüsselten Kommunikationskanals ein Aushandeln des ersten kanalspezifischen ephemeren symmetrischen kryptographischen Sitzungsschlüssels.

Nach Ausführungsformen umfasst das Aushandeln des ersten kanalspezifischen ephemeren symmetrischen kryptographischen Sitzungsschlüssels:
- Erzeugen eines ersten Zufallswerts durch das mobile Endgerät,
- Erzeugen des ersten kanalspezifischen ephemeren symmetrischen kryptographischen Sitzungsschlüssel unter Verwendung des ersten Zufallswerts durch das mobile Endgerät,
- Empfangen eines ersten Zertifikats des Personalisierungsservers mit einem ersten öffentlichen kryptographischen Schlüssel eines ersten asymmetrischen kryptographischen Schlüsselpaars des Personalisierungsservers durch das mobile Endgerät von dem Personalisierungsserver,
- Verschlüsseln des ersten Zufallswerts unter Verwendung des empfangenen ersten öffentlichen kryptographischen Schlüssels des Personalisierungsservers durch das mobile Endgerät,
- Senden des verschlüsselten ersten Zufallswerts an den Personalisierungsserver durch das mobile Endgerät zum Erzeugen des ersten kanalspezifischen ephemeren symmetrischen kryptographischen Sitzungsschlüssel durch den Personalisierungsserver.

Ausführungsformen können den Vorteil haben, dass ein sicheres Verfahren zum Bereitstellen des ersten kanalspezifischen ephemeren symmetrischen kryptographischen Sitzungsschlüssels zum Verschlüsseln des Kommunikationskanals zwischen dem mobilen Endgerät und dem Personalisierungsserver bereitgestellt werden kann. Beispielsweise wird zunächst ein erster initialer Zufallswert durch das mobile Endgerät erzeugt und an den Personalisierungsserver gesendet. Nach dem Empfang des entsprechenden ersten initialen Zufallswerts erzeugt der Personalisierungsserver einen zweiten initialen Zufallswert, welchen er an das mobile Endgerät sendet. Somit verfügen beide Teilnehmer, das mobile Endgerät sowie der Personalisierungsserver, über beide initialen Zufallswerte. Ferner sendet der Server beispielsweise sein Zertifikat an das mobile Endgerät und empfängt von dem mobilen Endgerät nach einer erfolgreichen Prüfung des entsprechenden Zertifikats ein Zertifikat des mobilen Endgeräts. Bei dem Zertifikat des mobilen Endgeräts kann es sich beispielsweise um ein dem ID-Anwendungsprogramm zugeordnetes Zertifikat handeln. Das durch den Personalisierungsserver empfangene Zertifikat des mobilen Endgeräts wird ebenfalls verifiziert. Die beiden Zertifikate umfassen dabei jeweils einen öffentlichen kryptographischen Schlüssel, d.h. das Zertifikat des Personalisierungsservers umfasst einen öffentlichen kryptographischen Schlüssel eines asymmetrischen Schlüsselpaars des Personalisierungsservers und das Zertifikat des mobilen Endgeräts umfasst einen öffentlichen kryptographischen Schlüssel eines asymmetrischen Schlüsselpaars des mobilen Endgeräts. Somit verfügen nun beide Teilnehmer jeweils über öffentliche kryptographische Schlüssel der Gegenseite, deren Authentizität jeweils durch ein Zertifikat belegt ist. Daraufhin erzeugt das mobile Endgerät beispielsweise den ersten Zufallswert, welchen es an den Personalisierungsserver sendet. Somit verfügen nun beide Teilnehmer der Kommunikation jeweils über drei Zufallswerte, aus welchen beispielsweise der kanalspezifische ephemere symmetrische kryptographische Sitzungsschlüssel berechnet werden kann. Ferner sendet das mobile Endgerät beispielsweise eine Signatur einer, mehrerer oder aller vorangehenden im Zuge des Kanalaufbaus ausgetauschten Nachrichten an den Personalisierungsserver. Durch Prüfung der entsprechenden Signatur unter Verwendung von dem Zertifikat des mobilen Endgeräts bereitgestellten öffentlichen kryptographischen Schlüssel als Signaturprüfschlüssel kann der Personalisierungsserver das mobile Endgerät authentifizieren. Sendet im Folgenden der Personalisierungsserver eine mit dem ersten kanalspezifischen ephemeren symmetrischen kryptographischen Sitzungsschlüssel verschlüsselte Nachricht an das mobile Endgerät, so wird dadurch auch der Personalisierungsserver gegenüber dem mobilen Endgerät authentifiziert. Der Personalisierungsserver kann den ersten kanalspezifischen ephemeren symmetrischen kryptographischen Sitzungsschlüssel nur berechnen, wenn er über einen privaten kryptographischen Schlüssel verfügt, mit welchem er den von dem mobilen Endgerät empfangenen ersten Zufallswert entschlüsseln kann. Somit ist nur der im Besitz des entsprechenden privaten kryptographischen Schlüssels befindliche Personalisierungsserver, welchem das Zertifikat des Personalisierungsservers zugeordnet ist, zu einer verschlüsselten Kommunikation über den verschlüsselten Kommunikationskanal in der Lage.

Nach Ausführungsformen umfasst das Aufbauen des verschlüsselten Kommunikationskanals ferner ein gegenseitiges Authentisieren des ID-Anwendungsprogramms und/oder des mobilen Endgeräts und des Personalisierungsservers.

Ausführungsformen können den Vorteil haben, dass durch eine gegenseitige Authentifizierung sichergestellt werden kann, welche Teilnehmer miteinander kommunizieren und zwischen welchen Teilnehmern mithin der verschlüsselte Kommunikationskanal aufgebaut wird. Insbesondere kann dadurch die Identität des mobilen Endgeräts festgestellt werden und sichergestellt werden, welchem Endgerät die elektronische Identität des Nutzers zugeordnet wird bzw. welches mobile Endgerät personalisiert wird.

Beispielsweise wird aufseiten des mobilen Endgeräts das zweite Sicherheitselement zum Authentisieren des mobilen Endgerätes bzw. des ID-Anwendungsprogramms verwendet. Nach Ausführungsformen umfasst das zweite Sicherheitselement des mobilen Endgeräts den ersten privaten kryptographischen Schlüssel des ersten asymmetrischen kryptographischen Schlüsselpaars des ID-Anwendungsprogramms. Ferner umfasst das mobile Endgerät ferner ein erstes Zertifikat des ID-Anwendungsprogramms, welches den ersten öffentlichen kryptographischen Schlüssel des ersten asymmetrischen kryptographischen Schlüsselpaars des ID-Anwendungsprogramms umfasst. Das mobile Endgerät sendet zum Authentisieren gegenüber dem Personalisierungsserver beispielsweise das erste Zertifikat des ID-Anwendungsprogramms an den Personalisierungsserver sowie eine von dem zweiten Sicherheitselement mit dem ersten privaten kryptographischen Schlüssel des ID-Anwendungsprogramms signierte Nachricht.

Ausführungsformen können den Vorteil haben, dass sich das mobile Endgerät so gegenüber dem Personalisierungsserver anhand des entsprechenden Zertifikats des ID-Anwendungsprogramms authentisieren kann.

Nach Ausführungsformen umfasst das mobile Endgerät ferner ein oder mehrere Authentifizierungssensoren zum Erfassen von ein oder mehreren Authentifizierungsfaktoren des Nutzers. Ein auf dem mobilen Endgerät installiertes Betriebssystem ist dazu konfiguriert, die Authentifizierungssensor zu steuern. Das zweite Sicherheitselement ist dem Betriebssystem zugeordnet. Voraussetzung für das Signieren mit dem ersten privaten kryptographischen Schlüssel des ID-Anwendungsprogramms ist eine erfolgreiche Authentifizierung des Nutzers gegenüber dem zweiten Sicherheitselement. Der Nutzer ist auf dem mobilen Endgerät registriert und in dem zweiten Sicherheitselement ist zumindest ein Referenzwert des registrierten Nutzers zum Verifizieren zumindest eines erfassten Authentifizierungsfaktors gespeichert.

Ausführungsformen können den Vorteil haben, dass eine Authentifizierung eines Nutzers des mobilen Endgeräts ermöglicht wird. Diese Authentifizierung des registrierten Nutzers ist dann beispielsweise eine notwendige Voraussetzung für eine erfolgreiche Authentisierung des mobilen Endgeräts gegenüber dem Personalisierungsserver. Somit kann sichergestellt werden, dass ein registrierter Nutzer der Verwendung des mobilen Endgeräts zum Aufbau des verschlüsselten Kommunikationskanals zustimmt.

Nach Ausführungsformen umfasst das Aufbauen des ersten verschlüsselten Unterkanals ein Authentisieren des Nutzers gegenüber dem ID-Token über das mobile Endgerät.

Ausführungsformen können den Vorteil haben, dass beim Auslesen des ID-Tokens sichergestellt werden kann, dass ein entsprechendes Auslesen von einem Inhaber des ID-Tokens freigegeben wird. Beispielsweise erfolgt das Authentisieren des Nutzers gegenüber dem ID-Token unter Verwendung des mobilen Endgeräts.

Nach Ausführungsformen umfasst das Authentisieren des Nutzers gegenüber dem ID-Token:
- Empfangen eines weiteren von den ein oder mehreren Authentifizierungssensoren erfassten Authentifizierungsfaktors des Nutzers durch das ID-Anwendungsprogramm,
- Erzeugen eines symmetrischen kryptographischen Schlüssels durch das zweite Sicherheitselement unter Verwendung des empfangenen weiteren Authentifizierungsfaktor,
- Empfangen eines verschlüsselten zweiten Zufallswert durch das ID-Anwendungsprogramm von dem ID-Token, wobei der verschlüsselte zweite Zufallswert unter Verwendung des symmetrischen kryptographischen Schlüssels verschlüsselt ist, welchen der ID-Token unter Verwendung eines in dem ID-Token zum Verifizieren des weiteren Authentifizierungsfaktors gespeicherten weiteren Referenzwert des registrierten Nutzers erzeugt,
- Entschlüsseln des empfangenen verschlüsselten zweiten Zufallswerts durch das zweite Sicherheitselement unter Verwendung des erzeugten symmetrischen kryptographischen Schlüssels,
- Erzeugen eines ersten ephemeren asymmetrischen kryptographischen Schlüsselpaars des ID-Anwendungsprogramms durch das zweite Sicherheitselement, welches einen ersten ephemeren privaten kryptographischen Schlüssel und einen ersten ephemeren öffentlichen kryptographischen Schlüssel des ID-Anwendungsprogramms umfasst,
- Senden des ersten ephemeren öffentlichen kryptographischen Schlüssels des ID-Anwendungsprogramms an den ID-Token,
- Empfangen eines ephemeren öffentlichen kryptographischen Schlüssels des ID-Tokens,
- Erzeugen eines mit dem ID-Token geteilten ersten Geheimnisses unter Verwendung des entschlüsselten zweiten Zufallswerts, des ersten ephemeren privaten kryptographischen Schlüssels des ID-Anwendungsprogramms und des ephemeren öffentlichen kryptographischen Schlüssels des ID-Tokens,
- Erzeugen eines ersten gemeinsamen Authentisierungsschlüssel zum gegenseitigen Authentisieren von ID-Anwendungsprogramm und ID-Token durch das zweite Sicherheitselement unter Verwendung des geteilten ersten Geheimnisses,
- Erzeugen eines ersten Authentisierungstoken unter Verwendung des ersten Authentisierungsschlüssels und des ersten ephemeren öffentlichen kryptographischen Schlüssels des ID-Tokens durch das zweite Sicherheitselement,
- Senden des ersten Authentisierungstoken an den ID-Token durch das zweite Sicherheitselement,
- Empfangen eines zweiten Authentisierungstoken von dem ID-Token durch das zweite Sicherheitselement,
- Verifizieren des empfangenen zweiten Authentisierungstoken unter Verwendung des ersten Authentisierungsschlüssels und des ersten ephemeren öffentlichen kryptographischen Schlüssels des ID-Anwendungsprogramms.

Unter Verwendung eines erfassten Authentifizierungsfaktors des Nutzers wird beispielsweise ein ephemerer symmetrischer kryptographischer Schlüssel abgeleitet. Dabei dienen der von dem mobilen Endgerät erfasste Authentifizierungsfaktor einerseits und ein auf dem ID-Token hinterlegter Referenzwert andererseits jeweils als ein geteiltes Passwort zum beidseitigen Ableiten des ephemeren symmetrischen kryptographischen Schlüssels. Das mobile Endgerät empfängt einen Zufallswert von dem ID-Token, welcher mit demselben ephemeren symmetrischen kryptographischen Schlüssel verschlüsselt ist. Den entsprechenden ephemeren symmetrischen kryptographischen Schlüssel leitet der ID-Token beispielsweise aus einem Referenzwert für den Authentifizierungsfaktor ab oder der entsprechend abgeleitete ephemere symmetrische kryptographische Schlüssel ist auf dem ID-Token gespeichert. Ist das mobile Endgerät dazu in der Lage, den empfangenen verschlüsselten Zufallswert korrekt zu entschlüsseln, stellt dies einen Nachweis dar, dass dem mobilen Endgerät der korrekte Authentifizierungsfaktor vorliegt. Das mobile Endgerät erzeugt ein ephemeres asymmetrisches Schlüsselpaar, dessen öffentlichen kryptographischen Schlüssel das mobile Endgerät an den ID-Token sendet. Im Gegenzug empfängt das mobile Endgerät den öffentlichen kryptographischen Schlüssel des ID-Tokens. An dieser Stelle des Verfahrens sind mithin keine statischen kryptographischen Schlüssel notwendig, sondern es können ausschließlich zufallsbasiert erzeugte ephemere asymmetrische Schlüsselpaar verwendet werden. Das mobile Endgerät erzeugt unter Verwendung des entschlüsselten Zufallswerts, des ephemeren privaten kryptographischen Schlüssels des ID-Anwendungsprogramms sowie des ephemeren öffentlichen kryptographischen Schlüssels des ID-Tokens ein mit dem ID-Token geteiltes Geheimnis. Der ID-Token ist ebenfalls dazu in der Lage, das entsprechende Geheimnis unter Verwendung des von ihm erzeugten Zufallswerts, des ephemeren privaten kryptographischen Schlüssels des ID-Tokens sowie des von dem mobilen Endgerät empfangenen ephemeren öffentlichen kryptographischen Schlüssels des mobilen Endgeräts zu berechnen.

Das mobile Endgerät kann nun das so erzeugte geteilte Geheimnis zum Berechnen eines gemeinsamen Authentisierungsschlüssels zum gegenseitigen Authentisieren von ID-Anwendungsprogramm und ID-Token verwenden. So kann beispielsweise das mobile Endgerät einen ersten Authentisierungstoken unter Verwendung des entsprechenden Authentisierungsschlüssels und des ephemeren öffentlichen kryptographischen Schlüssels des ID-Tokens erzeugen. Der entsprechende Authentisierungstoken kann von dem mobilen Endgerät an das ID-Token gesendet werden, welches den empfangenen Authentisierungstoken unter Verwendung des gemeinsamen Authentisierungsschlüssels und des ephemeren privaten kryptographischen Schlüssels des ID-Tokens verifizieren kann. Somit kann sich das mobile Endgerät gegenüber dem ID-Token authentisieren. Ebenso kann im Gegenzug der ID-Token einen Authentisierungstoken an das mobile Endgerät senden. Das mobile Endgerät empfängt den Authentisierungstoken, welcher beispielsweise unter Verwendung des geteilten Geheimnisses sowie den ephemeren öffentlichen kryptographischen Schlüssel des mobilen Endgeräts erzeugt ist. Unter Verwendung des Authentisierungsschlüssels und des öffentlichen kryptographischen Schlüssels des ID-Anwendungsprogramms kann der Authentisierungstoken verifiziert werden.

Nach Ausführungsformen wird zum Erzeugen des geteilten ersten Geheimnisses ferner ein Anwendungsbereichsidentifikator eines Anwendungsbereichs des ID-Tokens verwendet, wobei der Anwendungsbereichsidentifikator zusammen mit dem verschlüsselten zweiten Zufallswert von dem ID-Token durch das ID-Anwendungsprogramm empfangen wird.

Nach Ausführungsformen handelt es sich bei dem ersten Authentisierungsschlüssel um einen kryptographischen Schlüssel zum Erzeugen eines Message Authentication Codes, wobei es sich bei dem ersten Authentisierungstoken um einen unter Verwendung des ersten Authentisierungsschlüssels erzeugten ersten MAC des ersten ephemeren öffentlichen kryptographischen Schlüssels des ID-Anwendungsprogramms handelt.

Nach Ausführungsformen erzeugt das zweite Sicherheitselement ferner einen fünften ephemeren symmetrischen kryptographischen Schlüssel unter Verwendung des geteilten ersten Geheimnisses zum Verschlüsseln der Kommunikation zwischen dem mobilen Endgerät und dem ID-Token.

Ausführungsformen können den Vorteil haben, dass ein ephemerer symmetrischer kryptographischer Schlüssel bereitgestellt werden kann, mit welchem die Kommunikation zwischen dem mobilen Endgerät und dem ID-Token verschlüsselt werden kann. Somit kann beispielsweise die weitere Kommunikation zwischen dem IT-Token und dem mobilen Endgerät, der ID-Token mit dem Personalisierungsserver im Zuge des Aufbaus des zweiten Unterkanals kommuniziert, verschlüsselt werden. Beispielsweise wird die Kommunikation solange mit dem entsprechenden ephemeren symmetrischen kryptographischen Schlüssel verschlüsselt, bis der verschlüsselte Unterkanal zwischen dem ID-Token und dem Personalisierungsserver aufgebaut ist, der eine Ende-zu-Ende-Verschlüsselung zwischen dem ID-Token und dem Personalisierungsserver ermöglicht.

Nach Ausführungsformen umfasst das Aufbauen des ersten verschlüsselten Unterkanals ein Authentifizieren des Personalisierungsservers durch den ID-Token über das mobile Endgerät.

Ausführungsformen können den Vorteil haben, dass die Teilnehmer, welche den verschlüsselten Unterkanal aufbauen, sichergehen können, mit wem sie kommunizieren. Insbesondere kann somit der ID-Token sichergehen, mit wem er kommuniziert. Zum Authentifizieren des Personalisierungsservers durch den ID-Token kommt beispielsweise ein entsprechendes Authentisierungsverfahren zum Einsatz.

Nach Ausführungsformen umfasst das Authentifizieren des Personalisierungsservers durch den ID-Token:
- Empfangen eines zweiten Zertifikats des Personalisierungsservers, welches einen zweiten öffentlichen kryptographischen Schlüssel eines zweiten asymmetrischen kryptographischen Schlüsselpaars des Personalisierungsservers umfasst, über den verschlüsselten Kommunikationskanal,
- Verifizieren einer Signatur des empfangenen zweiten Zertifikats des Personalisierungsservers,
- Erzeugen eines dritten Zufallswerts durch den ID-Token,
- Senden des dritten Zufallswerts als Challenge an den Personalisierungsserver über den verschlüsselten Kommunikationskanal,
- Empfangen einer ersten Signatur der Challenge als Response von dem Personalisierungsserver über den verschlüsselten Kommunikationskanal, wobei die Challenge unter Verwendung eines zweiten privaten kryptographischen Schlüssels des Personalisierungsservers signiert ist,
- Verifizieren der empfangenen ersten Signatur unter Verwendung des zweiten öffentlichen kryptographischen Schlüssels des Personalisierungsservers und des gesendeten dritten Zufallswerts.

Nach Ausführungsformen wird ferner ein zweiter ephemerer öffentlicher kryptographischer Schlüssel des Personalisierungsservers, beispielsweise in komprimierter Form, durch den ID-Token über den verschlüsselten Kommunikationskanal empfangen.

Nach Ausführungsformen wird zum Erzeugen der Response eine erste Datenkombination signiert, welche die Challenge umfasst. Beispielsweise umfasst die erste Datenkombination neben dem als Challenge gesendeten dritten Zufallswert und den zweiten ephemeren öffentlichen kryptographischen Schlüssel des Personalisierungsservers, beispielsweise in komprimierter Form.

Ausführungsformen können den Vorteil haben, dass der Personalisierungsserver durch den ID-Token in kryptographisch gesicherter Weise authentifiziert werden kann. Hierzu empfängt der ID-Token beispielsweise ein Zertifikat des Personalisierungsservers, welches einen öffentlichen kryptographischen Schlüssel des Personalisierungsservers zum Authentifizieren bereitstellt. Der ID-Token verifiziert die Signatur des empfangenen Zertifikats. Beispielsweise wird das entsprechende Zertifikat als Teil einer Zertifikatskette empfangen, für deren Prüfung entsprechende Signaturprüfschlüssel, insbesondere Wurzelsignaturprüfschlüssel, auf dem ID-Token hinterlegt sind. Somit kann der ID-Token die Authentizität des bereitgestellten Zertifikats anhand der Zertifikatskette, beispielsweise einer PKI, verifizieren. Ferner empfängt der ID-Token beispielsweise einen ephemeren öffentlichen kryptographischen Schlüssel des Personalisierungsservers. Beispielsweise empfängt der ID-Token den ephemeren öffentlichen kryptographischen Schlüssel des Personalisierungsservers in komprimierter Form. Im Gegenzug zum Empfang des Zertifikats des Personalisierungsservers erzeugt der ID-Token einen Zufallswert, welchen er als Challenge über den verschlüsselten Kommunikationskanal an den Personalisierungsserver sendet. Der Personalisierungsserver erstellt unter Verwendung eines privaten kryptographischen Schlüssels, welcher mit dem öffentlichen kryptographischen Schlüssel des zuvor bereitgestellten Zertifikats ein asymmetrisches Schlüsselpaar bildet, eine Signatur der Challenge als Response auf die Challenge. Beispielsweise wird zum Erzeugen der Response eine Datenkombination signiert, welche den Zufallswert als Challenge und den ephemeren öffentlichen kryptographischen Schlüssel des Personalisierungsservers, beispielsweise in komprimierter Form, umfasst. Der ID-Token empfängt die entsprechende Signatur über den verschlüsselten Kommunikationskanal und prüft mit dem zuvor empfangenen öffentlichen kryptographischen Schlüssel des Personalisierungsservers als Signaturprüfschlüssel. Hierzu verwendet der ID-Token beispielsweise ferner den zuvor als Challenge gesendeten Zufallswert sowie den zuvor empfangenen ephemeren öffentlichen kryptographischen Schlüssel des Personalisierungsservers.

Nach Ausführungsformen handelt es sich bei dem ersten und dem zweiten Zertifikat des Personalisierungsservers um unterschiedliche Zertifikate mit unterschiedlichen öffentlichen kryptographischen Schlüsseln des Personalisierungsservers. Somit handelt es sich in diesem Fall bei dem ersten und dem zweiten öffentlichen kryptographischen Schlüssel des Personalisierungsservers beispielsweise um unterschiedliche öffentliche kryptographische Schlüssel unterschiedlicher asymmetrischer kryptographischen Schlüsselpaare.

Nach Ausführungsformen handelt es sich bei dem zweiten Zertifikat des Personalisierungsservers um ein Lesezertifikats, welches eine Leseberechtigung des Personalisierungsservers zum Lesen der aus dem ersten ID-Token auszulesenden ersten Attribute nachweist.

Ausführungsformen können den Vorteil haben, dass der Personalisierungsserver mittels des entsprechenden Zertifikats eine Leseberechtigung zum Lesen der auszulesenden Attribute aus dem ID-Token nachweisen kann.

Nach Ausführungsformen wird das zweite Zertifikat des Personalisierungsservers als Teil einer Zertifikatskette empfangen, wobei das Verifizieren der Signatur des empfangenen Zertifikats ein Prüfen einer Signaturkette der Zertifikate der Zertifikatskette umfasst. Nach Ausführungsformen beginnt die Zertifikatskette mit einem Ausgangszertifikat, welches von einer Wurzelinstanz signiert ist, deren Signatur mit einem Wurzelsignaturprüfschlüssel verifizierbar ist, welcher in dem ID-Token gespeichert ist. Nach Ausführungsformen endet die Zertifikatskette mit dem Zertifikat des Personalisierungsservers.

Nach Ausführungsformen umfasst die Kombination ferner einen Identifikator des ID-Tokens, wobei der Identifikator des ID-Tokens ferner zum Verifizieren der empfangenen Signatur verwendet wird.

Nach Ausführungsformen wird der Identifikator des ID-Tokens beispielsweise unter Verwendung des ephemeren öffentlichen kryptographischen Schlüssels des ID-Tokens erzeugt. Beispielsweise handelt es sich bei dem Identifikator des ID-Tokens um den komprimierten ersten ephemeren öffentlichen kryptographischen Schlüssel des ID-Tokens.

Ausführungsformen können den Vorteil haben, dass anhand des Identifikators der ID-Token identifiziert werden kann. Beispielsweise kann als Identifikator des ID-Tokens ein ephemerer öffentlicher kryptographischer Schlüssel des ID-Tokens verwendet werden, welcher beispielsweise zuvor im Zuge des Authentifizierens des Nutzers gegenüber dem ID-Token erzeugt wurde. Der entsprechende ephemere öffentliche kryptographische Schlüssel des ID-Tokens kann beispielsweise von dem mobilen Endgerät an den Personalisierungsserver weitergeleitet werden. Somit erhält der Personalisierungsserver beispielsweise Zugriff auf den entsprechenden ephemeren öffentlichen kryptographischen Schlüssel und kann anhand dieses als Identifikator sicherstellen, dass der ID-Token, gegenüber welchem er sich authentisiert, derselbe ID-Token ist, gegenüber dem sich zuvor der Nutzer des mobilen Endgeräts authentisiert hat.

Nach Ausführungsformen umfasst das Aufbauen des ersten verschlüsselten Unterkanals ein Authentisieren des ID-Tokens gegenüber dem Personalisierungsserver über das mobile Endgerät.

Ausführungsformen können den Vorteil haben, dass eine gegenseitige Authentisierung zwischen ID-Token und Personalisierungsserver im Zuge des Aufbaus des verschlüsselten Unterkanals stattfindet.

Nach Ausführungsformen umfasst das Authentisieren des ID-Tokens gegenüber Personalisierungsserver:
- Senden des öffentlichen kryptographischen Schlüssels des ID-Tokens von dem ID-Token über den verschlüsselten Kommunikationskanal an den Personalisierungsserver,
- Empfangenen des zweiten ephemeren öffentlichen kryptographischen Schlüssels des Personalisierungsservers durch den ID-Token von dem Personalisierungsserver über den verschlüsselten Kommunikationskanal,
- Erzeugen eines mit dem Personalisierungsserver geteilten zweiten Geheimnisses durch den ID-Token unter Verwendung des privaten kryptographischen Schlüssels des ID-Tokens und des zweiten ephemeren öffentlichen kryptographischen Schlüssels des Personalisierungsservers,
- Erzeugen eines vierten Zufallswerts durch den ID-Token,
- Erzeugen eines zweiten gemeinsamen Authentisierungsschlüssels zum Authentisieren von über den ersten verschlüsselten Unterkanal gesendeten Daten durch den ID-Token, wobei der zweite gemeinsame Authentisierungsschlüssel unter Verwendung des geteilten zweiten Geheimnisses und des vierten Zufallswerts erzeugt wird,
- Erzeugen eines dritten Authentisierungstoken durch den ID-Token unter Verwendung des zweiten Authentisierungsschlüssels und des zweiten ephemeren öffentlichen kryptographischen Schlüssels des Personalisierungsservers zum Authentisieren des ID-Tokens gegenüber dem Personalisierungsserver,
- Senden des vierten Zufallswerts zusammen mit dem dritten Authentisierungstoken zum Authentifizieren des ID-Tokens durch den ID-Token über den verschlüsselten Kommunikationskanal an den Personalisierungsserver.

Ausführungsformen können den Vorteil haben, dass sich der ID-Token in kryptographisch gesicherter Weise gegenüber dem Personalisierungsserver authentisieren kann. Hierzu sendet der ID-Token einen öffentlichen kryptographischen Schlüssel an den Personalisierungsserver. Dies erfolgt über den verschlüsselten Kommunikationskanal. Im Gegenzug empfängt der ID-Token einen ephemeren öffentlichen kryptographischen Schlüssel des Personalisierungsservers über den verschlüsselten Kommunikationskanal. Der ID-Token berechnet ein mit dem Personalisierungsserver geteiltes Geheimnis unter Verwendung des privaten kryptographischen Schlüssels des ID-Tokens und des empfangen ephemeren öffentlichen kryptographischen Schlüssels des Personalisierungsservers. Der Personalisierungsserver kann dasselbe geteilte Geheimnis unter Verwendung des öffentlichen kryptographischen Schlüssels des ID-Tokens und des ephemeren privaten kryptographischen Schlüssels des Personalisierungsservers berechnen. Der ID-Token erzeugt einen Zufallswert, welchen er zum Berechnen eines gemeinsamen Authentisierungsschlüssels verwendet. Der Authentisierungsschlüssel dient zum Authentisieren von Daten, welche über den verschlüsselten Unterkanal gesendet werden. Den entsprechenden gemeinsamen Authentisierungsschlüssel erzeugt der ID-Token unter Verwendung des Zufallswerts und des geteilten Geheimnisses. Ferner erzeugt der ID-Token einen Authentisierungstoken unter Verwendung des entsprechenden Authentisierungsschlüssels und des ephemeren Schlüssels des Personalisierungsservers. Den so erzeugten Authentisierungstoken sendet der ID-Token zusammen mit dem Zufallswert an den Personalisierungsserver im Kommunikationskanal. Der Personalisierungsserver wird durch den Empfang des Zufallswerts dazu in die Lage versetzt, ebenfalls den Authentisierungsschlüssel unter Verwendung des geteilten Geheimnisses zu berechnen. Mit diesem gemeinsamen Authentisierungsschlüssel und dem ephemeren öffentlichen kryptographischen Schlüssel des Personalisierungsservers kann der Personalisierungsserver den empfangenen Authentisierungstoken verifizieren. Ist die Verifikation erfolgreich, so ist auch der ID-Token erfolgreich gegenüber dem Personalisierungsserver authentisiert und eine erfolgreiche gegenseitige Authentisierung von ID-Token und Personalisierungsserver verwirklicht. Ferner kann der so berechnete gemeinsame Authentisierungsschlüssel zum Authentisieren von Daten verwendet werden, welche über den verschlüsselten Unterkanal zwischen ID-Token und Personalisierungsserver ausgetauscht werden.

Nach Ausführungsformen wird der im Zuge des Authentifizierens des Personalisierungsservers, beispielsweise in komprimierter Form, empfangene ephemere öffentliche kryptographische Schlüssel des Personalisierungsservers mit dem im Zuge des Authentisierens des ID-Tokens empfangenen ephemeren öffentlichen kryptographischen Schlüssel des Personalisierungsservers verglichen, wobei eine Übereinstimmung beider ephemerer öffentlicher kryptographischer Schlüssel des Personalisierungsservers eine Voraussetzung für das Erzeugen des geteilten zweiten Geheimnisses ist. Beispielsweise wird der im Zuge des Authentisierens des ID-Tokens empfangene ephemere öffentliche kryptographische Schlüssel des Personalisierungsservers zum Zwecke des Vergleichs komprimiert.

Ausführungsformen können den Vorteil haben, dass eine Bindung zwischen dem Personalisierungsserver und dem Authentisierungsserver, mit dem im Zuge des Authentisierens des ID-Tokens kommuniziert wird, hergestellt werden kann.

Nach Ausführungsformen wird zum Erzeugen des geteilten zweiten Geheimnisses ferner ein Anwendungsbereichsidentifikator eines Anwendungsbereichs des ID-Tokens verwendet, wobei der Anwendungsbereichsidentifikator zusammen mit dem öffentlichen kryptogra-phischen Schlüssel des ID-Tokens von dem ID-Token an den Personalisierungsserver gesendet wird.

Ausführungsformen können den Vorteil haben, dass der ID-Token einem bestimmten Anwendungsbereich zugeordnet werden kann.

Nach Ausführungsformen handelt es sich bei dem zweiten Authentisierungsschlüssel um einen kryptographischen Schlüssel zum Erzeugen eines Message Authentication Codes, wobei es sich bei dem zweiten Authentisierungstoken um einen unter Verwendung des zweiten Authentisierungsschlüssels erzeugten zweiten MAC des zweiten ephemeren öffentlichen kryptographischen Schlüssels des Personalisierungsservers handelt.

Nach Ausführungsformen erzeugt der ID-Token ferner den zweiten kanalspezifischen ephemeren symmetrischen kryptographischen Sitzungsschlüssel unter Verwendung des geteilten zweiten Geheimnisses und vierten Zufallswerts.

Ausführungsformen können den Vorteil haben, dass in kryptographisch gesicherter Weise ein kanalspezifischer ephemerer symmetrischer kryptographischer Sitzungsschlüssel für den Unterkanal bereitgestellt werden kann, welcher nur dem ID-Token und dem Personalisierungsserver bekannt ist. Mithin kann eine Ende-zu-Ende-Verschlüsselung über den verschlüsselten Unterkanal zwischen dem ID-Token und dem Personalisierungsserver ermöglicht werden.

Nach Ausführungsformen umfasst das Aufbauen des zweiten verschlüsselten Unterkanals ein Authentifizieren des Nutzers durch das zweite Sicherheitselement. Das Aufbauen des zweiten verschlüsselten Unterkanals umfasst ferner ein Ausführen eines Challenge-Response-Verfahrens zwischen dem zweiten Sicherheitselement und dem ersten Sicherheitselement. Ein erfolgreiches Ausführen des Challenge-Response-Verfahrens bestätigt eine erfolgreiche Authentifizierung des Nutzers durch das zweite Sicherheitselement.

Ausführungsformen können den Vorteil haben, dass nach dem Auslesen der Attribute aus dem ID-Token vor dem Personalisieren des ersten Sicherheitselements, d.h. im Zuge des Aufbaus des zweiten Kanals, zunächst eine Authentifizierung des Nutzers durch das mobile Endgerät erfolgt. Diese Authentifizierung wird dem zu personalisierenden ersten Sicherheitselement durch ein weiteres Sicherheitselement des mobilen Endgeräts, welches dem Betriebssystem des mobilen Endgeräts zugeordnet ist und für die Authentifizierung des registrierten Nutzers des mobilen Endgeräts unter Verwendung des Authentifizierungssensors des mobilen Endgeräts konfiguriert ist, ausgeführt. Das entsprechende weitere Sicherheitselement authentifiziert den Nutzer und bestätigt auf einer erfolgreichen Authentifizierung hin den personalisierenden Sicherheitselement die erfolgreiche Authentifizierung. Somit kann nicht nur sichergestellt werden, dass die Personalisierung auf demselben mobilen Endgerät erfolgt, welches bereits zum Auslesen der Attribute aus dem ID-Token verwendet wurde, sondern auch dass die Personalisierung unter Zustimmung des registrierten Nutzers des mobilen Endgeräts erfolgt.

Nach Ausführungsformen umfasst das Challenge-Response-Verfahren, auf eine Authentifizierungsanfrage des ID-Anwendungsprogramms hin, ein Authentifizieren des Nutzers durch das Betriebssystem des mobilen Endgeräts unter Verwendung des Authentifizierungssensors und des zweiten Sicherheitselement, ein Erzeugen einer Response durch das zweite Sicherheitselement, ein Senden der Response durch das zweite Sicherheitselement an das erste Sicherheitselement und ein Validieren der Response durch das erste Sicherheitselement bzw. das Sicherheitsapplet, wobei das Erzeugen der Response ein Verschlüsseln der Challenge umfasst und wobei das Validieren der Response ein Entschlüsseln der Response umfasst.

Das mobile Endgerät kann beispielsweise als Authentisierungstoken, Autorisierungstoken und/oder als Identitätsnachweis, d.h. ID-Token, dienen, etwa in elektronischen Geschäftsprozessen. Zu diesem Zweck kann der Nutzer durch das mobile Endgerät sicher authentifiziert werden. Nach Ausführungsformen kann die lokale Authentifizierung des Nutzers durch das Endgerät als Grundlage für eine weitere Authentifizierung des Nutzers unter Verwendung von, beispielsweise auf dem mobilen Endgerät gespeicherten, Identitätsattributen für eine weiteren Authentifizierung durch einen ID-Provider-Dienst dienen.

Das mobile Endgerät ist für eine sichere Nutzerauthentifizierung unter Verwendung des Authentifizierungssensors und des Betriebssystems bzw. des zweiten Sicherheitselements konfiguriert. Die Authentifizierung kann beispielsweise auf einem Erfassen und Auswerten biometrischer Merkmale des Nutzers beruhen.

Ausführungsformen können den Vorteil haben, dass der Hersteller eines ID-Anwendungsprogramms bzw. das entsprechende ID-Anwendungsprogramm die Authentifizierungsfunktionalität des mobilen Endgeräts zur Nutzerauthentifizierung zurückgreifen können. Die Authentifizierungsfunktionalität des Endgeräts unter Verwendung des Authentifizierungssensors und des ersten Sicherheitselements implementieren eine sichere Bindung des Nutzers mit dem Endgerät. Es fehlt aber an einer sicheren Bindung des Endgeräts an das entsprechende ID-Anwendungsprogramm. Eine solche sichere Bindung kann durch Verwendung des ersten Sicherheitselements mit einem Sicherheitsapplet des ID-Anwendungsprogramms implementiert werden. Dabei stellt das zweite Sicherheitselement, bei welchem es sich beispielsweise um ein hardwarebasiertes Sicherheitselement des Geräteherstellers handelt, kryptographische Mittel, wie etwa kryptographisches Schlüsselmaterial und Protokolle, zur Verfügung, welche für eine sichere Zurverfügungstellung der Authentifizierungsergebnisse des Nutzers des mobilen Endgeräts für ein auf dem mobilen Endgerät installiertes ID-Anwendungsprogramm genutzt werden können. Mithin stellt das zweite Sicherheitselement die kryptographische Sicherheit des Betriebssystems sicher bzw. stellt dem Betriebssystem kryptographische Sicherungsfunktionalität zur Verfügung. Nach Ausführungsformen kann es sich bei dem zweiten Sicherheitselement beispielsweise auch um ein softwarebasiertes und/oder firmwarebasiertes Sicherheitselement des Geräteherstellers handeln. Das erste Sicherheitselement, welches unter Verwendung des Challenge-Response-Protokolls sicher mit dem zweiten Sicherheitselement kommuniziert und das Sicherheitsapplet des ID-Anwendungsprogramms umfasst, kann eine sichere Verbindung mit dem zweiten Sicherheitselement gewährleisten. Das erste Sicherheitselement stellt kryptographische Mittel, wie etwa kryptographisches Schlüsselmaterial und Protokolle, zur Verfügung, welche dem ID-Anwendungsprogramm zugeordnet sind und unter dessen Verfügungshoheit und/oder der Verfügungshoheit des Herstellers des ID-Anwendungsprogramms stehen. Mithin stellt das erste Sicherheitselement die kryptographische Sicherheit des ID-Anwendungsprogramms sicher bzw. stellt dem ID-Anwendungsprogramm kryptographische Sicherungsfunktionalität zur Verfügung. Bei dem zweiten Sicherheitselement handelt es sich beispielsweise um ein hardware-, softwareund/oder firmwarebasiertes Sicherheitselement. Beispielsweise umfasst das erste Sicherheitselement eine eSIM oder eine eUICC.

Ausführungsformen beschreiben ein Verfahren zur sicheren Authentisierung eines Nutzers an einem mobilen Endgerät sowie der sicheren Authentifizierung des Nutzers durch ein weiteres Sicherheitselement auf dem entsprechenden mobilen Endgerät mit einer geräteherstellerunabhängigen Sicherheitsapplikation bzw. Sicherheitsapplet.

Insbesondere wird eine sichere Verwendung von Merkmalen zur Nutzerauthentifizierung, wie etwa biometrische Merkmale, zur Authentifizierung gegenüber einem geräteherstellerunabhängigen ID-Anwendungsprogramm bzw. Sicherheitsapplet des ID-Anwendungsprogramms ermöglicht.

Nach Ausführungsformen wird zur Authentifizierung des Nutzers gegenüber dem ID-Anwendungsprogramm ein Challenge-Response Verfahren verwendet, welches zwischen dem betriebssystemzugeordneten und damit gerätespezifischen zweiten Sicherheitselement und dem geräteunabhängigen ersten Sicherheitselement ausgeführt wird, welches nicht dem Betriebssystem zugeordnet ist. Bei dem ersten Sicherheitselement bzw. dem Sicherheitsapplet des ID-Anwendungsprogramms handelt es sich beispielsweise um ein anwendungsspezifisches Sicherheitselement bzw. Sicherheitsapplet.

Zum Implementieren der kryptographisch gesicherten Verbindung zwischen dem ersten und dem zweiten Sicherheitselement wird beispielsweise in das geräteherstellerabhängige zweite Sicherheitselement kryptographisches Schlüsselmaterial eingebracht und/oder in diesem erzeugt. Dies geschieht beispielsweise im Zuge der Provisionierung des mobilen Endgeräts. Ferner wird in das geräteherstellerunabhängige Sicherheitsapplet des ersten Sicherheitselements kryptographisches Schlüsselmaterial eingebracht und/oder in diesem erzeugt. Dies geschieht beispielsweise im Zuge einer Provisionierung des Sicherheitsapplets bzw. des ersten Sicherheitselements. Das kryptographisch initialisierte zweite Sicherheitselement kann einen kryptographischen Schlüssel des zweiten Sicherheitselements in das Sicherheitsapplet des ersten Sicherheitselements einbringen bzw. diesem zur Verfügung stellen und/oder das Sicherheitsapplet des ersten Sicherheitselements kann einen kryptographischen Schlüssel des Sicherheitsapplets in das zweite Sicherheitselement einbringen bzw. diesem zur Verfügung stellen. Bei dem kryptographischen Schlüssel des zweiten Sicherheitselements handelt es sich beispielsweise um einen öffentlichen kryptographischen Schlüssel eines dem ID-Anwendungsprogramm zugeordneten asymmetrischen kryptographischen Schlüsselpaars des zweiten Sicherheitselements. Bei dem kryptographischen Schlüssel des Sicherheitsapplets handelt es sich beispielsweise um einen öffentlichen kryptographischen Schlüssel eines dem Sicherheitsapplet zugeordneten asymmetrischen kryptographischen Schlüsselpaars. Nach Ausführungsformen wird ein kryptographisches Geheimnis, beispielsweise ein kryptographischer Schlüssel, insbesondere ein symmetrischer kryptographischer Schlüssel zum Ausführen des Challenge-Response-Verfahren, erzeugt und übertragen. Beispielsweise erzeugt das zweite Sicherheitselement das kryptographische Geheimnis und überträgt dieses unter Verwendung des von dem Sicherheitsapplet bereitgestellten öffentlichen kryptographischen Schlüssel in kryptographisch abgesicherter Weise an das Sicherheitsapplet. Beispielsweise erzeugt das Sicherheitsapplet das kryptographische Geheimnis und überträgt dieses unter Verwendung des von dem zweiten Sicherheitselement bereitgestellten öffentlichen kryptographischen Schlüssel in kryptographisch abgesicherter Weise an das zweite Sicherheitselement.

Ausführungsformen können den Vorteil haben, dass ein sicheres Verfahren zum Authentifizieren eines Nutzers des mobilen Endgeräts gegenüber dem ID-Anwendungsprogram bereitgestellt wird. Das Verfahren ermöglicht ein Authentifizieren des Nutzers des mobilen Endgeräts unter Verwendung zweier Sicherheitselemente gegenüber dem ID-Anwendungsprogramm bzw. dem Sicherheitsapplet, welches dem ID-Anwendungsprogramm zugeordnet ist. Die Verwendung zweier unabhängiger Sicherheitselemente erlaubt es neben einem Sicherheitselement, d.h. dem zweiten Sicherheitselement, welches dem Betriebssystem zugeordnet und beispielsweise unter Kontrolle des Herstellers des mobilen Endgeräts steht, zusätzlich ein Sicherheitselement zu verwenden, d.h. das erste Sicherheitselement, welches unabhängig von dem zweiten Sicherheitselement ist und beispielsweise nicht unter der Kontrolle des Geräteherstellers steht. Nach Ausführungsformen steht das dem ID-Anwendungsprogramm zugeordnete Sicherheitsapplet des ersten Sicherheitselement beispielsweise unter der Kontrolle eines Herstellers des entsprechenden ID-Anwendungsprogramms. Damit ermöglicht das Verfahren auch eine Authentisierung Nutzers gegenüber dem ID-Anwendungsprogramm unter Verwendung des mobilen Endgeräts.

Ausführungsformen können den Vorteil haben, dass eine gleichzeitige Bindung des Nutzers an zwei voneinander unabhängige Sicherheitselemente mit einer gegenseitigen sicheren Verschränkung der beiden Sicherheitselemente auf einem mobilen Endgerät implementiert wird. Die Bindung des Nutzers wird beispielsweise dadurch implementiert, dass das zweite Sicherheitselement Zugriff auf Referenzwerte für die ein oder mehreren Authentifizierungsfaktoren des Nutzers besitzt. Beispielsweise sind die entsprechenden Referenzwerte in einem dem zweiten Sicherheitselement zugeordneten Speicherbereich des mobilen Endgeräts gespeichert. Beispielsweise umfasst das Sicherheitselement den entsprechenden Speicherbereich. Beispielsweise sind die Referenzwerte außerhalb des zweiten Sicherheitselements gespeichert. Nach Ausführungsformen sind die Referenzwerte in einer kryptographisch gesicherten Form gespeichert, beispielsweise in verschlüsselter oder gehashter Form. Nach Ausführungsformen ist das zweite Sicherheitselement unter Verwendung der entsprechenden Referenzwerte in der Lage den Nutzer anhand von mit dem Authentifizierungssensor erfassten Authentifizierungsfaktoren bzw. Authentifizierungsdaten zu authentifizieren. Dadurch kann eine Bindung des Nutzers an das zweite Sicherheitselement implementiert werden. Das Ergebnis der Authentifizierung kann mittels des Challenge-Response-Verfahrens in kryptographisch gesicherter Weise an das erste Sicherheitselement weitergeleitete werden, wodurch eine Bindung des Nutzers an das erste Sicherheitselement implementiert werden kann. Im Ergebnis kann der Nutzer mithin gleichzeitig an beide Sicherheitselemente gebunden werden. Mittels des Challenge-Response-Verfahrens und den diesem zugrundeliegenden kryptographischen Mitteln der Sicherheitselemente kann somit eine gegenseitige sichere Verschränkung der beiden Sicherheitselemente auf dem mobilen Endgerät implementiert werden. Beispielsweise umfassen die kryptographischen Mittel einen symmetrischen Schlüssel, welcher in dem ersten Sicherheitselement und in dem zweiten Sicherheitselement gespeichert ist und eine kryptographische Verschränkung der beiden Sicherheitselement bereitstellt.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale. Beispielsweise wird der entsprechende Nachweis durch einen Authentifizierungssensor des mobilen Endgeräts in Form von Authentifizierungsdaten ein oder mehrerer Authentifizierungsfaktoren des Nutzers erfasst und von einem Sicherheitselement des mobilen Endgeräts mit einem oder mehreren hinterlegten Referenzwerten verglichen. Bei dem die erfassten Authentifizierungsdaten auswertenden Sicherheitselement handelt es sich beispielsweise um ein Sicherheitselement des Betriebssystems des mobilen Endgeräts. Im Falle einer ausreichenden Übereinstimmung zwischen den erfassten Authentifizierungsdaten und den hinterlegten Referenzwerten, bestätigt das Sicherheitselement eine erfolgreiche Authentifizierung des Nutzers. Beispielsweise umfasst eine Bestätigung der erfolgreichen Authentifizierung des Nutzers ein Ausführen eines Challenge-Response-Verfahrens durch das bestätigende Sicherheitselement. Beispielsweise bestätigt das bestätigende Sicherheitselement auf eine erfolgreiche Authentifizierung des Nutzers hin diese erfolgreiche Authentifizierung gegenüber einem anderen Sicherheitselement des mobilen Endgeräts, wie etwa dem Sicherheitselement mit dem Sicherheitsapplet des ID-Anwendungsprogramms mittels einer korrekten Response auf eine Challenge des entsprechenden anderen Sicherheitselements.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten ein oder mehrerer Authentifizierungsfaktoren des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise eine Kamera des mobilen Endgeräts umfassen. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird ein sich authentisierende Sicherheitselement eines mobilen Endgeräts, etwa ein Sicherheitselement des Betriebssystems des mobilen Endgeräts, durch ein anderes authentifizierende Sicherheitselement des mobilen Endgeräts unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das sich authentisierende Sicherheitselement erzeugt wird. Somit weiß das authentifizierende Sicherheitselement, im Falle eines erfolgreichen Challenge-Response-Verfahrens nicht nur, dass die Nutzerauthentifizierung bestätigt wurde, sondern dass diese durch das sich authentisierende Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss.

Beispielsweise erzeugt die erste Instanz einen Zufallswert ("Nonce") und sendet diese an die zweite Instanz. Die zweite Instanz verwendet beispielsweise ein gemeinsames Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Alternativer Weise kann das gemeinsame Geheimnis, etwa ein symmetrischer kryptographischer Schlüssel, zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert.

Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Nach Ausführungsformen erfolgt das Verschlüsseln und Entschlüsseln unter Verwendung eines symmetrischen kryptographischen Schlüssels erfolgt. Nach Ausführungsformen erfolgt das Verschlüsseln unter Verwendung eines privaten kryptographischen Schlüssels eines asymmetrischen kryptographischen Schlüsselpaars des ersten Sicherheitselements und das Entschlüsseln erfolgt unter Verwendung eines öffentlichen kryptographischen Schlüssels des asymmetrischen kryptographischen Schlüsselpaars des ersten Sicherheitselements.

Nach Ausführungsformen umfasst das Aufbauen des zweiten verschlüsselten Unterkanals ferner ein Authentifizieren des Personalisierungsservers durch das Sicherheitsapplet des ersten Sicherheitselements.

Ausführungsformen können den Vorteil haben, dass eine Voraussetzung für den Aufbau des zweiten verschlüsselten Unterkanals ein erfolgreiches Authentifizieren des Personalisierungsservers durch das Sicherheitselement ist. Somit kann das Sicherheitselement nicht nur sicher sein, dass die Personalisierung durch denselben Personalisierungsserver erfolgt, die Attribute aus dem ID-Token ausgelesen hat, sondern dass der entsprechende auch zum Personalisieren des entsprechenden Sicherheitselements berechtigt ist.

Nach Ausführungsformen umfasst das Authentifizieren des Personalisierungsservers durch das Sicherheitsapplet des ersten Sicherheitselements:
- Empfangen eines dritten Zertifikats des Personalisierungsservers, welches einen dritten öffentlichen kryptographischen Schlüssel des Personalisierungsservers umfasst, durch das Sicherheitsapplet des ersten Sicherheitselements über den verschlüsselten Kommunikationskanal,
- Verifizieren einer Signatur des empfangenen dritten Zertifikats des Personalisierungsservers durch das Sicherheitsapplet des ersten Sicherheitselements,
- Erzeugen eines fünften Zufallswerts durch das Sicherheitsapplet des ersten Sicherheitselements,
- Senden des fünften Zufallswerts als Challenge durch das Sicherheitsapplet des ersten Sicherheitselements über den verschlüsselten Kommunikationskanal an den Personalisierungsserver,
- Empfangen einer zweiten Signatur der Challenge als Response von dem Personalisierungsserver, wobei die Challenge unter Verwendung eines dritten ephemeren privaten kryptographischen Schlüssels des Personalisierungsservers signiert ist,
- Verifizieren der empfangenen zweiten Signatur unter Verwendung des dritten öffentlichen kryptographischen Schlüssels des Personalisierungsservers und des gesendeten fünften Zufallswerts.

Nach Ausführungsformen wird ferner ein dritter ephemerer öffentlicher kryptographischer Schlüssel des Personalisierungsservers, beispielsweise in komprimierter Form, durch das Sicherheitsapplet über den verschlüsselten Kommunikationskanal empfangen.

Nach Ausführungsformen wird zum Erzeugen der Response eine zweite Datenkombination signiert, welche die Challenge umfasst. Beispielsweise umfasst die zweite Datenkombination neben dem als Challenge gesendeten fünften Zufallswert und den dritten ephemeren öffentlichen kryptographischen Schlüssel des Personalisierungsservers, beispielsweise in komprimierter Form.

Ausführungsformen können den Vorteil haben, dass das zu personalisierende erste Sicherheitselement zunächst ein Zertifikat des Personalisierungsservers über den verschlüsselten Kommunikationskanal empfängt. Das entsprechende Zertifikat kann von dem Sicherheitselement verifiziert werden. Beispielsweise wird das entsprechende Zertifikat als Teil einer Zertifikatskette bereitgestellt, welche das Sicherheitselement mit hinterlegten Wurzelsignaturprüfschlüsseln verifizieren kann. Somit kann der ID-Token die Authentizität des bereitgestellten Zertifikats anhand der Zertifikatskette, beispielsweise einer PKI, verifizieren. Ferner empfängt das Sicherheitselement einen ephemeren öffentlichen kryptographischen Schlüssel des Personalisierungsservers. Beispielsweise empfängt das Sicherheitselement den ephemeren öffentlichen kryptographischen Schlüssel des Personalisierungsservers in komprimierter Form. Im Gegenzug zum Empfang des Zertifikats des Personalisierungsservers erzeugt das Sicherheitselement einen Zufallswert und sendet den entsprechenden Zufallswert als Challenge an den Personalisierungsserver. In Antwort auf das Senden des Zufallswerts als Challenge empfängt das Sicherheitselement über den verschlüsselten Kommunikationskanal von dem Personalisierungsserver eine Signatur der Challenge als Response.

Zum Erstellen der Signatur wird der private kryptographische Schlüssel des Personalisierungsservers verwendet, welcher mit dem öffentlichen kryptographischen Schlüssel des zuvor bereitgestellten Zertifikats ein asymmetrisches Schlüsselpaar bildet. Beispielsweise wird zum Erzeugen der Response eine Datenkombination signiert. Die entsprechende Datenkombination umfasst beispielsweise den zuvor als Challenge gesendeten Zufallswert sowie den ephemeren öffentlichen kryptographischen Schlüssel des Personalisierungsservers, beispielsweise in komprimierter Form. Das Sicherheitselement kann unter Verwendung des zuvor empfangenen öffentlichen kryptographischen Schlüssels des Personalisierungsservers als Signaturprüfschlüssel die entsprechende Signatur prüfen. Hierzu verwendet das Sicherheitselement beispielsweise ferner den ephemeren öffentlichen kryptographischen Schlüssel des Personalisierungsservers und den zuvor als Challenge gesendeten Zufallswert. Ist die Signaturprüfung erfolgreich, so gilt der Personalisierungsserver als erfolgreich authentifiziert.

Nach Ausführungsformen handelt es sich bei dem ersten, zweiten und/oder dritten Zertifikat des Personalisierungsservers um unterschiedliche Zertifikate mit unterschiedlichen öffentlichen kryptographischen Schlüsseln des Personalisierungsservers. Somit handelt es sich in diesem Fall bei dem ersten, zweiten und/oder dritten öffentlichen kryptographischen Schlüssel des Personalisierungsservers beispielsweise um unterschiedliche öffentliche kryptographische Schlüssel unterschiedlicher asymmetrischer kryptographischen Schlüsselpaare.

Nach Ausführungsformen handelt es sich bei dem zweiten und dritten Zertifikat des Personalisierungsservers um dasselbe Zertifikat mit demselben öffentlichen kryptographischen Schlüsseln des Personalisierungsservers. Somit handelt es sich in diesem Fall bei dem zweiten und dritten öffentlichen kryptographischen Schlüssel des Personalisierungsservers beispielsweise um denselben öffentlichen kryptographischen Schlüssel desselben asymmetrischen kryptographischen Schlüsselpaars.

Nach Ausführungsformen wird das Zertifikat als Teil einer Zertifikatskette empfangen wird, wobei das Verifizieren der Signatur des empfangenen Zertifikats ein Prüfen einer Signaturkette der Zertifikate der Zertifikatskette umfasst. Nach Ausführungsformen beginnt die Zertifikatskette mit einem Ausgangszertifikat, welches von einer Wurzelinstanz signiert ist, deren Signatur mit einem Wurzelsignaturprüfschlüssel verifizierbar ist, auf welchen das Sicherheitsapplet des ersten Sicherheitselements Zugriff besitzt. Nach Ausführungsformen endet die Zertifikatskette mit dem Zertifikat des Personalisierungsservers.

Nach Ausführungsformen umfasst das Aufbauen des zweiten verschlüsselten Unterkanals ferner ein Authentisieren des Sicherheitsapplets des ersten Sicherheitselements gegenüber dem Personalisierungsserver.

Ausführungsformen können den Vorteil haben, dass eine Authentisierung des Sicherheitselements gegenüber dem Personalisierungsserver ausgeführt wird. Somit kann beispielsweise eine gegenseitige Authentisierung zwischen dem zu personalisierenden Sicherheitsapplet und dem Personalisierungsserver implementiert werden.

Nach Ausführungsformen umfasst das Authentisieren des Sicherheitsapplets des ersten Sicherheitselements gegenüber dem Personalisierungsserver:
- Empfangenen des dritten ephemeren öffentlichen kryptographischen Schlüssels des Personalisierungsservers durch das Sicherheitsapplet des ersten Sicherheitselements von dem Personalisierungsserver über den verschlüsselten Kommunikationskanal,
- Erzeugen eines mit dem Personalisierungsserver geteilten dritten Geheimnisses durch das Sicherheitsapplet des ersten Sicherheitselements unter Verwendung des privaten kryptographischen Schlüssels des Sicherheitsapplets des ersten Sicherheitselements und des ephemeren öffentlichen kryptographischen Schlüssels des Personalisierungsservers,
- Erzeugen eines sechsten Zufallswerts durch das Sicherheitsapplet des ersten Sicherheitselements,
- Erzeugen eines dritten gemeinsamen Authentisierungsschlüssels zum Authentisieren von über den zweiten verschlüsselten Unterkanal gesendeten Daten, wobei der dritte gemeinsame Authentisierungsschlüssel unter Verwendung des geteilten dritten Geheimnisses und des sechsten Zufallswerts erzeugt wird,
- Erzeugen eines vierten Authentisierungstoken durch das Sicherheitsapplet des ersten Sicherheitselements unter Verwendung des dritten Authentisierungsschlüssels und des dritten ephemeren öffentlichen kryptographischen Schlüssels des Personalisierungsservers zum Authentisieren des Sicherheitsapplets des ersten Sicherheitselements gegenüber dem Personalisierungsserver,
- Senden des sechsten Zufallswerts zusammen mit dem vierten Authentisierungstoken zum Authentifizieren des Sicherheitsapplets des ersten Sicherheitselements durch das Sicherheitsapplet des ersten Sicherheitselements über den verschlüsselten Kommunikationskanal an den Personalisierungsserver.

Ausführungsformen können den Vorteil haben, dass sich das noch nicht personalisierte Sicherheitsapplet des ersten Sicherheitselements gegenüber dem Personalisierungsserver authentisieren kann. Hierzu verwendet das entsprechende zu personalisierende Sicherheitsapplet zunächst den in dem ersten Sicherheitselement hinterlegten zweiten privaten kryptographischen Schlüssel des zweiten asymmetrischen Schlüsselpaars des Sicherheitsapplets bzw. des ID-Anwendungsprogramms. Der entsprechende zweite private kryptographische Schlüssel wird im Zuge einer Provisionierung des ID-Anwendungsprogramms zur Verwendung durch das Sicherheitsapplet in dem ersten Sicherheitselements hinterlegt. Zum Authentisieren des Sicherheitsapplets empfängt das entsprechende Sicherheitsapplet zunächst beispielsweise einen zum Zwecke des Authentisierens erzeugten ephemeren öffentlichen kryptographischen Schlüssel von dem Personalisierungsserver. Den entsprechenden ephemeren öffentlichen kryptographischen Schlüssel erzeugt der Personalisierungsserver beispielsweise für die Authentifizierung des zu personalisierenden Sicherheitsapplets. Den ephemeren öffentlichen kryptographischen Schlüssel empfängt das Sicherheitselement beispielsweise über den verschlüsselten Kommunikationskanal. Das Sicherheitselement berechnet ein geteiltes Geheimnis unter Verwendung des zweiten privaten kryptographischen Schlüssels des ID-Anwendungsprogramms und des empfangenen ephemeren öffentlichen kryptographischen Schlüssels des Personalisierungsservers. Das zu personalisierende Sicherheitsapplet erzeugt einen Zufallswert. Den entsprechenden Zufallswert verwendet das zu personalisierende Sicherheitsapplet zum Erzeugen eines gemeinsamen Authentisierungsschlüssels. Zum Erzeugen des entsprechenden gemeinsamen Authentisierungsschlüssels wird ferner das geteilte Geheimnis verwendet. Zudem erzeugt das Sicherheitsapplet einen Authentisierungstoken. Den entsprechenden Authentisierungstoken erzeugt das Sicherheitsapplet unter Verwendung des zuvor empfangenen öffentlichen kryptographischen Schlüssels des Personalisierungsservers sowie des zuvor erzeugten gemeinsamen Authentisierungsschlüssels. Diesen Authentisierungstoken sendet das zu personalisierende Sicherheitselement zusammen mit dem Zufallswert über den verschlüsselten Kommunikationskanal an den Personalisierungsserver. Der Personalisierungsserver kann zunächst ebenfalls das geteilte Geheimnis berechnen. Hierzu verwendet der Personalisierungsserver den zweiten öffentlichen kryptographischen Schlüssel des ID-Anwendungsprogramms, welcher dem Personalisierungsserver bekannt ist. Dieser wurde beispielsweise im Zuge der Registrierung des ID-Anwendungsprogramms beim Provisionieren auf dem Personalisierungsserver hinterlegt. Ferner verwendet der Personalisierungsserver den ephemeren privaten kryptographischen Schlüssel des Personalisierungsservers zum Berechnen des geteilten Geheimnisses. Mit dem entsprechenden geteilten Geheimnis ist der Personalisierungsserver dazu in der Lage, den gemeinsamen Authentisierungsschlüssel zu berechnen. Hierzu verwendet der Personalisierungsserver den empfangenen Zufallswert und das zuvor berechnete geteilte Geheimnis. Somit kann der Personalisierungsserver den empfangenen Authentisierungstoken verifizieren unter Verwendung des gemeinsamen Authentisierungsschlüssels und des ephemeren öffentlichen kryptographischen Schlüssels des Personalisierungsservers.

Somit kann das zu personalisierende Sicherheitselement authentifiziert werden. Dies kann beispielsweise den Vorteil haben, dass den Teilnehmern des verschlüsselten Unterkanals zwischen zu personalisierenden Sicherheitsapplet und Personalisierungsserver bekannt, mit wem sie kommunizieren bzw. sie können sicherstellen, dass sie mit dem richtigen Teilnehmer kommunizieren. Ferner kann der gemeinsame Authentisierungsschlüssel zum Authentisieren von Daten verwendet werden, welche über den zweiten verschlüsselten Unterkanal zwischen zum personalisierenden Sicherheitselement und dem Personalisierungsserver ausgetauscht werden.

Nach Ausführungsformen wird der im Zuge des Authentifizierens des Personalisierungsservers, beispielsweise in komprimierter Form, empfangenen ephemeren öffentlichen kryptographischen Schlüssels des Personalisierungsservers mit dem im Zuge des Authentisierens des Sicherheitsapplets des ersten Sicherheitselements, beispielsweise in komprimierter Form, empfangenen ephemeren öffentlichen kryptographischen Schlüssels des Personalisierungsservers verglichen, wobei eine Übereinstimmung beider ephemeren öffentlichen kryptographischen Schlüssels des Personalisierungsservers eine Voraussetzung für das Erzeugen des geteilten Geheimnisses ist.

Nach Ausführungsformen handelt es sich bei dem dritten Authentisierungsschlüssel um einen kryptographischen Schlüssel zum Erzeugen eines Message Authentication Codes, wobei es sich bei dem dritten Authentisierungstoken um einen unter Verwendung des dritten Authentisierungsschlüssels erzeugten dritten MAC des dritten ephemeren öffentlichen kryptographischen Schlüssels des Personalisierungsservers handelt.

Nach Ausführungsformen erzeugt das Sicherheitsapplet des ersten Sicherheitselements ferner den dritten kanalspezifischen ephemeren symmetrischen kryptographischen Sitzungsschlüssel unter Verwendung des geteilten dritten Geheimnisses und des sechsten Zufallswerts.

Ausführungsformen können den Vorteil haben, dass ein kanalspezifischer ephemerer symmetrischer kryptographischer Sitzungsschlüssel für das zu personalisierende Sicherheitselement und den Personalisierungsserver bereitgestellt werden kann, mittels dessen der zweite Unterkanal verschlüsselt werden kann. Insbesondere kann somit eine Ende-zu-Ende-Verschlüsselung zwischen den Endpunkten des entsprechenden Unterkanals, d.h. dem zu personalisierenden Sicherheitselement und dem Personalisierungsserver realisiert werden.

Nach Ausführungsformen ist der dritte kanalspezifische ephemere symmetrische kryptographische Sitzungsschlüssel zum Verschlüsseln des zweiten verschlüsselten Unterkanals zwischen dem Sicherheitsapplet des ersten Sicherheitselements und dem Personalisierungsserver als initialer Schlüssel zur Verwendung durch das Sicherheitsapplet in dem ersten Sicherheitselement und in dem Personalisierungsserver hinterlegt.

Beispielsweise wird die das Sicherheitsapplet für die Personalisierung durch den Personalisierungsserver in einer Subsecuritydomain des ersten Sicherheitselements bereitgestellt, welche ansonsten leer ist und beispielsweise kein Schlüsselmaterial für eine gegenseitige Authentifizierung mit dem Personalisierungsserver umfasst. In diesem Fall erfolgt beispielsweise im Zuge des Aufbaus des zweiten verschlüsselten Unterkanals keine entsprechende gegenseitige Authentifizierung mit dem Personalisierungsserver. Vielmehr ist beispielsweise lediglich der initiale Schlüssel zur Verwendung durch das Sicherheitsapplet in dem ersten Sicherheitselement hinterlegt.

Nach Ausführungsformen ist in dem ersten Sicherheitselement zur Verwendung durch das Sicherheitsapplet und in dem Personalisierungsserver ferner ein kanalspezifischer ephemerer symmetrischer kryptographischer Authentisierungsschlüssel zum Authentisieren von Daten hinterlegt, welche über den entsprechenden zweiten verschlüsselten Unterkanal übertragen werden.

Nach Ausführungsformen wird für die Personalisierung eine Mehrzahl von ID-Token verwendet.

Nach Ausführungsformen wird für die Personalisierung ferner ein zweites ID-Token verwendet. Die Personalisierung umfasst ferner:
- Aufbauen eines dritten verschlüsselten Unterkanals zwischen dem zweiten ID-Token und dem Personalisierungsserver innerhalb des verschlüsselten Kommunikationskanals über das mobile Endgerät, wobei zum Aufbauen des dritten verschlüsselten Unterkanals das ID-Anwendungsprogramm verwendet wird,
- Auslesen von ein oder mehreren der zweiten Attribute aus dem zweiten ID-Token durch den Personalisierungsserver über den dritten verschlüsselten Unterkanal innerhalb des verschlüsselten Kommunikationskanals,
- Aufbauen eines vierten verschlüsselten Unterkanals zwischen dem Sicherheitsapplet des ersten Sicherheitselements und dem Personalisierungsserver innerhalb des verschlüsselten Kommunikationskanals, wobei zum Aufbauen des vierten verschlüsselten Unterkanals das ID-Anwendungsprogramm verwendet wird,
- Empfangen der ausgelesenen zweiten Attribute durch das Sicherheitsapplet des ersten Sicherheitselements von dem Personalisierungsserver über den vierten verschlüsselten Unterkanal innerhalb des verschlüsselten Kommunikationskanals,
- Speichern der empfangenen zweiten Attribute durch das Sicherheitsapplet, wobei das ID-Anwendungsprogramm dazu konfiguriert ist, die zweiten Attribute zum Nachweis einer Identität des Nutzers gegenüber einem weiteren Computersystem zu verwenden.

Ausführungsformen können den Vorteil haben, dass Attribute aus unterschiedlichen ID-Token ausgelesen und im Zuge der Personalisierung in dem zu personalisierenden Sicherheitselement des mobilen Endgeräts hinterlegt werden können. Somit können auf dem mobilen Endgerät nicht nur digitale Identitäten, welche Identitäten widerspiegeln, die von einem ID-Token, d.h. elektronischem Identitätsdokument, bereitgestellt werden, sondern Identitäten, welche Kombinationen aus Attributen entsprechender ID-Token darstellen. Beispielsweise werden die Attribute aus unterschiedlichen ID-Token über denselben verschlüsselten Kommunikationskanal ausgelesen.

Beispielsweise werden Attribute aus unterschiedlichen ID-Token über verschiedene verschlüsselte Kommunikationskanäle ausgelesen. Nach Ausführungsformen wird ein dritter verschlüsselter Kommunikationskanals zwischen dem mobilen Endgerät und dem Personalisierungsserver über das Netzwerk aufgebaut, innerhalb dessen das Aufbauen eines dritten und vierten verschlüsselten Unterkanals erfolgt.

Beispielsweise ist das ID-Anwendungsprogramm dazu konfiguriert, die zweiten Attribute in Kombination mit den ersten Attributen zum Nachweis einer Identität des Nutzers gegenüber einem weiteren Computersystem zu verwenden.

Nach Ausführungsformen ist das ID-Anwendungsprogramm dazu konfiguriert, ein oder mehrere der ersten und/oder zweiten Attribute des Nutzers an ein weiteres Endgerät zu senden.

Nach Ausführungsformen ist das ID-Anwendungsprogramm dazu konfiguriert, ein oder mehrere der ersten und/oder zweiten Attribute des Nutzers unter Verwendung einer Kommunikationsschnittstelle des mobilen Endgeräts über das Netzwerk an einen ID-Provider-Server zum Bereitstellen für einen Service-Provider-Server und/oder zur Bestätigung gegenüber dem Service-Provider-Server zu senden.

Ausführungsformen umfassen ferner ein mobiles Endgerät, welches einen Prozessor und einen Speicher umfasst. In dem Speicher ist ein ID-Anwendungsprogramm gespeichert. Das ID-Anwendungsprogramm umfasst eine Provisionierungskomponente. Der Prozessor ist dazu konfiguriert, ein Verfahren zum Provisionieren des ID-Anwendungsprogramms mit kryptographischen Schlüsseln und einem Sicherheitsapplet auszuführen.

Das mobile Endgerät umfasst ferner ein erstes Sicherheitselement und ein zweites Sicherheitselement. Das erste Sicherheitselement ist unabhängig von dem zweiten Sicherheitselement. Das zweite Sicherheitselement ist einem Betriebssystem des mobilen Endgeräts zugeordnet. Das mobile Endgerät umfasst ferner eine Kommunikationsschnittstelle zur Kommunikation über ein Netzwerk mit einem Provisionierungsserver.

Das Provisionieren umfasst:
- auf ein Senden einer ersten Schlüsselerzeugungsanfrage der Provisionierungskomponente an das zweite Sicherheitselement hin, Erzeugen eines dem ID-Anwendungsprogramm zugeordneten ersten asymmetrischen Schlüsselpaars durch das zweite Sicherheitselement, wobei das erste asymmetrische Schlüsselpaar einen ersten privaten kryptographischen Schlüssel und einen ersten öffentlichen kryptographischen Schlüssel umfasst, wobei das zweite Sicherheitselement den ersten öffentlichen kryptographischen Schlüssel an die Provisionierungskomponente sendet,
- auf ein Senden einer ersten Anfrage der Provisionierungskomponente über das Netzwerk an den Provisionierungsserver zum Einbringen des Sicherheitsapplets für das ID-Anwendungsprogramm hin, Einbringen des Sicherheitsapplets für das ID-Anwendungsprogramm in das erste Sicherheitselement durch den Provisionierungsserver über das Netzwerk.

Nach Ausführungsformen ist das mobile Endgerät dazu konfiguriert jede der vorangehend beschriebenen Ausführungsformen des Verfahrens zum Provisionieren eines auf einem mobilen Endgerät installierten ID-Anwendungsprogramms mit kryptographischen Schlüsseln und einem Sicherheitsapplet auszuführen.

Nach Ausführungsformen umfasst das von dem Prozessor ausgeführte Provisionieren ferner: auf ein Senden einer zweiten Anfrage der Provisionierungskomponente über das Netzwerk an einen Provisionierungsserver zum Einbringen des ersten öffentlichen kryptographischen Schlüssels in das erste Sicherheitselement hin, ein Einbringen des ersten öffentlichen kryptographischen Schlüssels in das erste Sicherheitselement durch den Provisionierungsserver über das Netzwerk, wobei das erste asymmetrische Schlüsselpaar zum Bestätigen einer Nutzerauthentifizierung eines Nutzers des mobilen Endgeräts durch das zweite Sicherheitselement gegenüber dem ersten Sicherheitselement dient.

Nach Ausführungsformen umfasst das von dem Prozessor ausgeführte Provisionieren ferner: auf ein Senden einer dritten Anfrage der Provisionierungskomponente über das Netzwerk an einen Personalisierungsserver zum Einbringen des ersten öffentlichen kryptographischen Schlüssels in das erste Sicherheitselement hin, ein Einbringen des ersten öffentlichen kryptographischen Schlüssels in das erste Sicherheitselement durch den Personalisierungsserver über das Netzwerk, wobei das erste asymmetrische Schlüsselpaar zum Bestätigen einer Nutzerauthentifizierung eines Nutzers des mobilen Endgeräts durch das zweite Sicherheitselement gegenüber dem ersten Sicherheitselement dient.

Nach Ausführungsformen ist der Prozessor ferner dazu konfiguriert, ein Verfahren zum Personalisieren des Sicherheitsapplets unter Verwendung eines ID-Tokens und eines Personalisierungsservers auszuführen. Die Kommunikationsschnittstelle des mobilen Endgeräts ist ferner konfiguriert zur kontaktlosen Kommunikation mit dem ID-Token und zur Kommunikation über das Netzwerk mit dem Personalisierungsserver.

Das Personalisieren umfasst:
- Aufbauen eines verschlüsselten Kommunikationskanals zwischen dem mobilen Endgerät und dem Personalisierungsserver über das Netzwerk, wobei zum Aufbauen des verschlüsselten Kommunikationskanals das ID-Anwendungsprogramm verwendet wird,
- Aufbauen eines ersten verschlüsselten Unterkanals zwischen dem ID-Token und dem Personalisierungsserver innerhalb des verschlüsselten Kommunikationskanals über das mobile Endgerät, wobei zum Aufbauen des ersten verschlüsselten Unterkanals das ID-Anwendungsprogramm verwendet wird,
- Auslesen von ein oder mehreren der Attribute aus dem ID-Token durch den Personalisierungsserver über den ersten verschlüsselten Unterkanal innerhalb des verschlüsselten Kommunikationskanals,
- Aufbauen eines zweiten verschlüsselten Unterkanals zwischen dem Sicherheitsapplet des ersten Sicherheitselements und dem Personalisierungsserver innerhalb des verschlüsselten Kommunikationskanals, wobei zum Aufbauen des zweiten verschlüsselten Unterkanals das ID-Anwendungsprogramm verwendet wird,
- Empfangen der ausgelesenen Attribute durch das Sicherheitsapplet des ersten Sicherheitselements von dem Personalisierungsserver über den zweiten verschlüsselten Unterkanal innerhalb des verschlüsselten Kommunikationskanals,
- Speichern der empfangenen Attribute durch das Sicherheitsapplet, wobei das ID-Anwendungsprogramm dazu konfiguriert ist, die Attribute zum Nachweis einer Identität des Nutzers gegenüber einem weiteren Computersystem zu verwenden.

Ausführungsformen umfassen ferner ein System, welches ein mobiles Endgerät nach einer der vorangehend beschriebenen Ausführungsformen sowie einen Provisionierungsserver umfasst. Der Provisionierungsserver ist konfiguriert zum Empfangen des von dem zweiten Sicherheitselement des mobilen Endgeräts erzeugten ersten öffentlichen kryptographischen Schlüssels, zum Einbringen des Sicherheitsapplets für das ID-Anwendungsprogramm in dem ersten Sicherheitselement des mobilen Endgeräts und zum Einbringen des ersten öffentlichen kryptographischen Schlüssels in das erste Sicherheitselement des mobilen Endgeräts.

Nach Ausführungsformen ist das System dazu konfiguriert jede der vorangehend beschriebenen Ausführungsformen des Verfahrens zum Provisionieren eines auf einem mobilen Endgerät installierten ID-Anwendungsprogramms mit kryptographischen Schlüsseln und einem Sicherheitsapplet auszuführen.

Nach Ausführungsformen umfasst das System ferner einen Personalisierungsserver, welcher zum Auslesen von Attributen aus einem ID-Token über das mobile Endgerät und zum Personalisieren des Sicherheitsapplets des mobilen Endgeräts konfiguriert ist.

Nach Ausführungsformen umfasst das System ferner den ID-Token, in welchem die auszulesenden Attribute gespeichert sind.

Ausführungsformen umfassen ferner eine Verwendung einer Chipkarte zum Provisionieren eines auf dem mobilen Endgerät installierten ID-Anwendungsprogramms mit kryptographischen Schlüsseln und einem Sicherheitsapplet. Die Chipkarte ist als ein erstes Sicherheitselement konfiguriert ist. Die Chipkarte ist zum Einsetzen in eine Chipkartenlesevorrichtung eines mobilen Endgeräts konfiguriert, wobei das mobile Endgerät ferner ein zweites Sicherheitselement umfasst, welches einem Betriebssystem des mobilen Endgeräts zugeordnet ist.

Das Provisionieren umfasst:
- Einsetzen der Chipkarte in die Chipkartenlesevorrichtung des mobilen Endgeräts,
- Empfangen des Sicherheitsapplets für das ID-Anwendungsprogramm durch das erste Sicherheitselement von einem Provisionierungsserver über ein Netzwerk.

Nach Ausführungsformen kann die Verwendung der Chipkarte zum Provisionieren im Zuge jeder der vorangehend beschriebenen Ausführungsformen des Verfahrens zum Provisionieren eines auf einem mobilen Endgerät installierten ID-Anwendungsprogramms mit kryptographischen Schlüsseln und einem Sicherheitsapplet erfolgen.

Nach Ausführungsformen umfasst das Verwenden ferner ein Empfangen eines ersten öffentlichen kryptographischen Schlüssels eines von dem zweiten Sicherheitselement erzeugten und dem ID-Anwendungsprogramm zugeordneten ersten asymmetrischen Schlüsselpaars durch das erste Sicherheitselement von dem Provisionierungsserver über das Netzwerk, wobei der erste öffentliche kryptographischen Schlüssel zum Bestätigen einer Nutzerauthentifizierung eines Nutzers des mobilen Endgeräts durch das zweite Sicherheitselement gegenüber dem ersten Sicherheitselement dient.

Nach Ausführungsformen umfasst das Verwenden ferner ein Empfangen eines ersten öffentlichen kryptographischen Schlüssels eines von dem zweiten Sicherheitselement erzeugten und dem ID-Anwendungsprogramm zugeordneten ersten asymmetrischen Schlüsselpaars durch das erste Sicherheitselement von einem Personalisierungsserver über das Netzwerk, wobei der erste öffentliche kryptographischen Schlüssel zum Bestätigen einer Nutzerauthentifizierung eines Nutzers des mobilen Endgeräts durch das zweite Sicherheitselement gegenüber dem ersten Sicherheitselement dient.

Bei der Chipkarte handelt es sich beispielsweise um eine SmartMicroSD, d.h. eine Micro Secure Digital Memory Card mit Prozessor.

Ausführungsformen umfassen ferner eine provisionierte Chipkarte. Die provisionierte Chipkarte ist mit einem Sicherheitsapplet eines auf einem mobilen Endgerät installierten ID-Anwendungsprogramms. Die provisionierte Chipkarte ist als ein Sicherheitselement konfiguriert. Die provisionierte Chipkarte umfasst in einem geschützten Speicherbereich eines Speichers der provisionierten Chipkarte:
das Sicherheitsapplets für das ID-Anwendungsprogramm.

Nach Ausführungsformen kann die provisionierte Chipkarte gemäß jeder der vorangehend beschriebenen Ausführungsformen des Verfahrens zum Provisionieren eines auf einem mobilen Endgerät installierten ID-Anwendungsprogramms mit kryptographischen Schlüsseln und einem Sicherheitsapplet provisioniert werden.

Bei der provisionierten Chipkarte handelt es sich beispielsweise um eine provisionierte SmartMicroSD, d.h. eine provisionierte Micro Secure Digital Memory Card mit Prozessor.

Nach Ausführungsformen ist die provisionierte Chipkarte ferner mit einem öffentlichen kryptographischen Schlüssel eines auf einem mobilen Endgerät installierten ID-Anwendungsprogramms provisioniert. Die provisionierte Chipkarte umfasst in dem geschützten Speicherbereich des Speichers der provisionierten Chipkarte ferner:
den öffentlichen kryptographischen Schlüssel eines dem ID-Anwendungsprogramm zugeordneten asymmetrischen Schlüsselpaars, wobei der erste öffentliche kryptographischen Schlüssel zum Bestätigen einer Nutzerauthentifizierung eines Nutzers des mobilen Endgeräts durch ein weiteres Sicherheitselement des mobilen Endgeräts gegenüber der Chipkarte dient.

Im Weiteren werden Ausführungsformen der Erfindung mit Bezugnahme auf die Zeichnungen näher erläutert. Es zeigen:
- Figur 1: ein schematisches Diagramm eines exemplarischen mobilen Endgeräts,
- Figur 2: ein schematisches Diagramm eines exemplarischen mobilen Endgeräts,
- Figur 3: ein schematisches Diagramm eines exemplarischen Systems,
- Figur 4: ein Flussdiagramm eines exemplarischen Verfahrens zum Provisionieren eines ID-Anwendungsprogramms auf dem mobilen Endgerät,
- Figur 5: ein Flussdiagramm eines exemplarischen Verfahrens zum Provisionieren des ID-Anwendungsprogramms auf dem mobilen Endgerät,
- Figur 6: ein Flussdiagramm eines exemplarischen Verfahrens zum Provisionieren des ID-Anwendungsprogramms auf dem mobilen Endgerät,
- Figur 7: ein Flussdiagramm eines exemplarischen Verfahrens zum Personalisieren eines Sicherheitsapplets,
- Figur 8: ein schematisches Diagramm exemplarischer verschlüsselter Kanäle,
- Figur 9: ein Flussdiagramm eines exemplarischen Verfahrens zum Personalisieren des Sicherheitsapplets,
- Figur 10: eine Chipkarte zur Verwendung für ein Provisionieren, und
- Figur 11: eine provisionierte Chipkarte.

Elemente der nachfolgenden Ausführungsformen, die einander entsprechen, werden mit denselben Bezugszeichen gekennzeichnet.

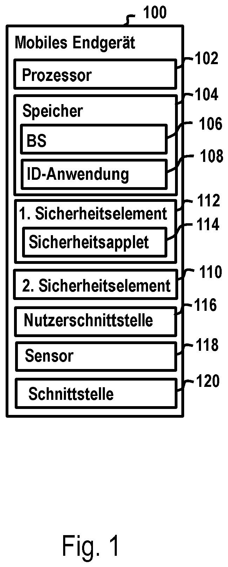

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installiertes Betriebssystem 106 und ein ID-Anwendungsprogramms 108 umfassen. Das ID-Anwendungsprogramm 108, ist dazu konfiguriert in personalisiertem Zustand Attribute bzw. Identitätsattribute eines Nutzers verwalten und beispielsweise zum Nachweis einer Identität des Nutzers gegenüber einem weiteren Computersystem bereitzustellen. Ferner umfasst das ID-Anwendungsprogramm 108 beispielsweise eine Provisionierungskomponente, welche ein Provisionieren des ID-Anwendungsprogramm 108 mit dem Sicherheitsapplet 114 sowie kryptographischen Schlüsseln steuert. Ferner umfasst das ID-Anwendungsprogramm 108 beispielsweise eine Personalisierungskomponente, welche eine Personalisierung eines dem ID-Anwendungsprogramm 108 zugeordneten Sicherheitsapplet 114 steuert. Insbesondere steuert die Personalisierungskomponente beispielsweise einen Aufbau von verschlüsselten Kanälen zur Kommunikation im Zuge einer entsprechenden Personalisierung. Die entsprechenden Attribute sind Teil bzw. bilden eine von dem ID-Anwendungsprogramms 108 verwaltete elektronische Identität des Nutzers, welche dieser mittels des mobilen Endgeräts 100 nutzen kann. Ferner umfasst das mobile Endgerät 100 beispielsweise zwei Sicherheitselemente 110, 112, welche beispielsweise jeweils als eSim und/oder eUICC implementiert sein können. Eines der beiden Sicherheitselement 110 ist dem Betriebssystem 106 zugeordnet und stellt für dieses kryptographische Mittel bereit, wie beispielsweise kryptographische Schlüssel, kryptographische Funktionen und/oder kryptographische Protokolle. Beispielsweise stellt das Sicherheitselement 110 einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Lesezertifikate, Public-Key-Zertifikate und/oder Attributzertifikate. Die von dem Sicherheitselement 110 bereitgestellten kryptographischen Mittel versetzten das Betriebssystem 106 dazu in die Lage, ein Challenge Response-Verfahrens auszuführen bzw. an diesem teilzunehmen. Auf dem anderen Sicherheitselement 112 ist beispielsweise das dem ID-Anwendungsprogramm 108 zugeordnetes Sicherheitsapplet 114 installiert. Dieses Sicherheitsapplet 114 stellt kryptographische Mittel für das ID-Anwendungsprogramm 108 bereit, wie beispielsweise kryptographische Schlüssel, kryptographische Funktionen und/oder kryptographische Protokolle. Das Sicherheitsapplet 114 bzw. ein dem Sicherheitsapplet 114 zugeordneter Speicherbereich des Sicherheitselements 112 stellt beispielsweise einen Key Store bzw. Schlüsselspeicher zum Speichern von kryptographischen Schlüsseln bereit, wie etwa symmetrischer, öffentlicher und/oder privater kryptographischer Schlüssel, und von Zertifikaten, wie beispielsweise Lesezertifikate, Public-Key-Zertifikate und/oder Attributzertifikate. Die von dem Sicherheitselement 112 bereitgestellten kryptographischen Mittel versetzten das ID-Anwendungsprogramm 108 dazu in die Lage, ein Challenge Response-Verfahrens auszuführen bzw. an diesem teilzunehmen. Beispielsweise dient ein solches Challenge Response-Verfahren einer Bestätigung einer erfolgreichen Nutzerauthentifizierung durch das Sicherheitselement 110 gegenüber dem ID-Anwendungsprogramm 108 bzw. dem Sicherheitsapplet 114 des Sicherheitselements 112, welches dem ID-Anwendungsprogramm 108 zugeordnet ist.

Ferner umfasst das mobile Endgerät 100 eine Nutzerschnittelle 116, welche beispielsweise ein Display, insbesondere ein Touchscreen umfasst. Unter Verwendung des Nutzerschnittelle 116, kann der Nutzer mit dem mobiles Endgerät 100 interagieren. Beispielsweise kann der Nutzer zum Bereitstellen von Authentifizierungsfaktoren bzw. Authentifizierungsmerkmalen aufgefordert werden. Zum Erfassen von Authentifizierungsdaten der Authentifizierungsfaktoren des Nutzers umfasst das mobile Endgerät 100 einen Authentifizierungssensor 118, welcher beispielsweise in die Nutzerschnittstelle 116 integriert oder als eigenständige Komponente implementiert sein kann. Schließlich umfasst das mobile Endgerät 100 eine Kommunikationsschnittstelle bzw. Antenne 120, welche konfiguriert ist für eine kabellose Kommunikation, beispielsweise über ein Netzwerk.

Unter Verwendung der Kommunikationsschnittstelle 120 kann das mobile Endgerät 100 beispielsweise mit einem Provisionierungsserver zum Zwecke der Provisionierung des ID-Anwendungsprogramms 108 kommunizieren. Unter Verwendung der Kommunikationsschnittstelle 120 kann das mobile Endgerät 100 ferner beispielsweise mit einem Personalisierungsserver zum Zwecke der Personalisierung des Sicherheitsapplets 114 in dem Sicherheitselement 112 und damit des ID-Anwendungsprogramms 108 kommunizieren. Unter Verwendung der Kommunikationsschnittstelle 120 kann das mobile Endgerät 100 zudem beispielsweise mit einem ID-Provider-Server zum Zwecke einer Verwendung bzw. einem Auslesen von Attributen der von dem ID-Anwendungsprogramm verwalteten elektronischen Identität durch ID-Provider-Server den kommunizieren. Ferner ist die Kommunikationsschnittstelle 120 beispielsweise zu einer kabellosen Kommunikation mit einem ID-Token konfiguriert, welcher die Attribute des Nutzers zum Zwecke der Personalisierung bereitstellt. Für unterschiedliche Kommunikationsverfahren umfasst die Kommunikationsschnittstelle 120 beispielsweise unterschiedliche Kommunikationskomponenten.

Das mobile Endgerät 100 mit der Kommunikationsschnittstelle 120 kann mithin als Transceiver eine Kommunikation zwischen dem ID-Token und dem Personalisierungsserver zum Auslesen der Attribute durch den Personalisierungsserver aus dem ID-Token ermöglichen. Dabei baut das mobile Endgerät 100 unter Verwendung des Sicherheitselements 110 einen verschlüsselten Kommunikationskanal zu dem Personalisierungsserver über ein Netzwerk auf. Der entsprechende Kommunikationskanal wird beispielsweise mittels Ende-zu-Ende-Verschlüsselung verschlüsselt. Innerhalb des verschlüsselten Kommunikationskanal wird ein erster verschlüsselter Unterkanal zwischen dem ID-Token und dem Personalisierungsserver unter Vermittlung des mobilen Endgeräts 100 bzw. einer Personalisierungskomponente des ID-Anwendungsprogramms 108 aufgebaut. Der entsprechende erste Unterkanal ist beispielsweise ebenfalls mittels Ende-zu-Ende-Verschlüsselung verschlüsselt. Dieser erste verschlüsselte Unterkanal dient beispielsweise einer Kommunikation zwischen dem ID-Token und dem Personalisierungsserver, beispielsweise zum Auslesen der von dem ID-Token bereitgestellten Attribute durch den Personalisierungsserver. Ferner kann innerhalb des verschlüsselten Kommunikationskanal ein zweiter verschlüsselter Unterkanal zwischen dem zu personalisierenden Sicherheitsapplet 114 des Sicherheitselements 112 und dem Personalisierungsserver aufgebaut werden. Der Aufbau erfolgt beispielsweise wiederum unter Vermittlung des Personalisierungskomponente des ID-Anwendungsprogramms 108. Der entsprechende zweite Unterkanal ist beispielsweise ebenfalls mittels Ende-zu-Ende-Verschlüsselung verschlüsselt. Dieser zweite verschlüsselte Unterkanal dient beispielsweise einer Kommunikation zwischen dem Sicherheitsapplet 114 des Sicherheitselements 112 und dem Personalisierungsserver, beispielsweise zum Personalisieren des Sicherheitsapplets 114 mit den aus dem ID-Token ausgelesenen Attributen durch den Personalisierungsserver.

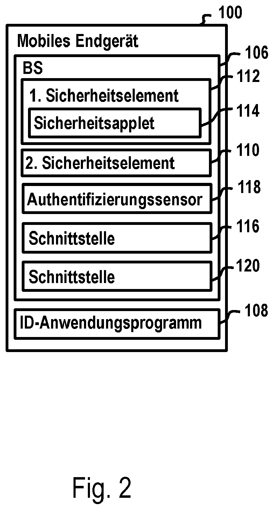

Figur 2 zeigt ein exemplarisches mobiles Endgerät 100, auf welchem ein Betriebssystem 106 installiert ist, welches die Ressourcen des mobiles Endgerät 100 verwaltet und dem ID-Anwendungsprogramm 108 zur Verfügung stellt. Die verwalteten Ressourcen umfassen beispielsweise die beiden Sicherheitselemente 110, 112, den Authentifizierungssensor 118, die Nutzerschnittstelle 116 und die Kommunikationsschnittstelle 120. Dabei wird das Sicherheitselement 112 zwar beispielsweise von dem Betriebssystem 106 bereitgestellt bzw. verwaltet, das von dem entsprechenden Sicherheitselement 112 umfasste Sicherheitsapplet 114 ist jedoch dem ID-Anwendungsprogramm 108 zugeordnet, d.h. das Sicherheitsapplet 114 stellt nur dem ID-Anwendungsprogramm 108 kryptographische Mittel zur Verfügung. Das Betriebssystem 106 kann diese kryptographische Mittel nicht nutzen. Für kryptographische Aufgaben, etwa im Zuge einer Verwendung des Authentifizierungssensors 118 oder der Kommunikationsschnittelle 120, steht dem Betriebssystem 106 vielmehr das andere Sicherheitselement 110 mit seinen kryptographischen Mitteln zur Verfügung.

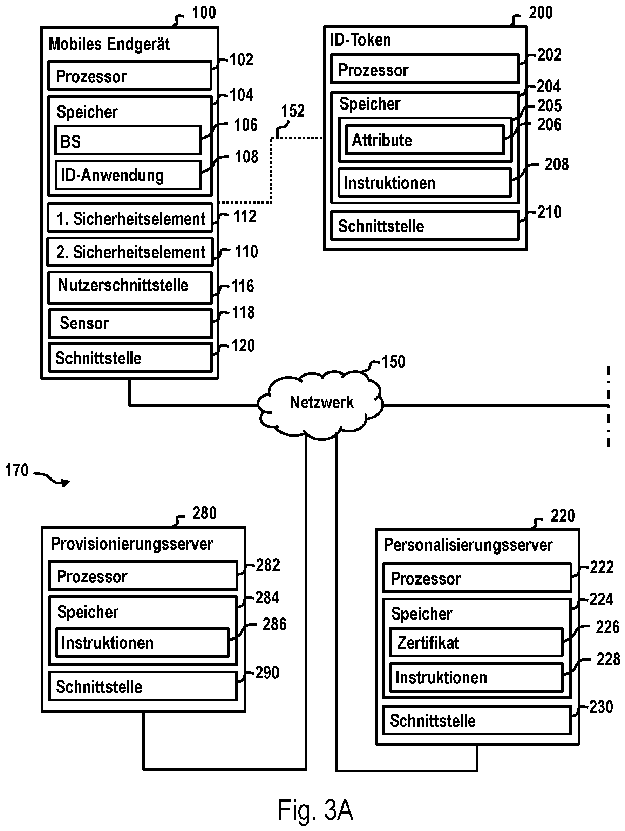

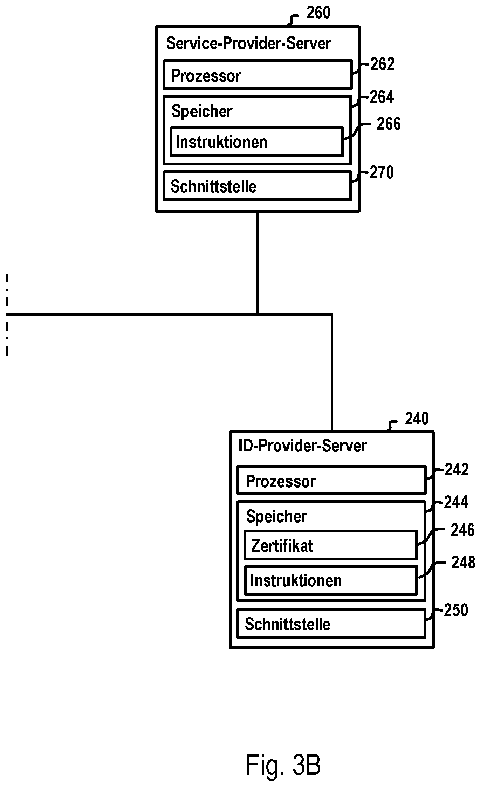

Figur 3 zeigt ein exemplarisches System 170, welches ein mobiles Endgerät 100 umfasst, das über ein Netzwerk 150, beispielsweise das Internet, mit einem Provisionierungsserver 280 verbunden ist. Ferner ist das mobiles Endgerät 100 über das Netzwerk 150 mit einem Personalisierungsserver 220 verbunden ist. Zudem kann das mobile Endgerät 100 über das Netzwerk 150 beispielsweise mit einem ID-Provider-Server 240 und/oder einem Service-Provider-Server 260 kommunizieren. Ferner ist das mobile Endgerät 100 beispielsweise über eine kabellose direkte Kommunikationsverbindung 152 mit einem ID-Token 200 verbindbar. Das mobile Endgerät 100 ist beispielsweise wie in Figur 1 beschrieben aufgebaut und weist die entsprechenden Funktionalitäten auf.

Ein Provisionieren des mobiles Endgeräts 100 bzw. des ID-Anwendungsprogramms 108 mit kryptographischen Schlüsseln und dem Sicherheitsapplet erfolgt beispielsweise durch den Provisionierungsserver 280. Der Provisionierungsserver 280 umfasst einen Prozessor 282, einen Speicher 284 und eine Kommunikationsschnittstelle 290. In dem Speicher 284 sind Programminstruktionen 288 gespeichert, bei deren Ausführung der Prozessor 282 den Provisionierungsserver 280 zum Provisionieren des ID-Anwendungsprogramms 108 des mobilen Endgeräts 100. Im Zuge der Provisionierung wird beispielsweise ein dem ID-Anwendungsprogramm 108 zugeordnetes erstes asymmetrisches Schlüsselpaar auf dem zweiten Sicherheitselement 110 erzeugt. Von dem Personalisierungsserver 220 wird beispielsweise ein Zertifikat bereitgestellt, welches einen ersten öffentlichen kryptographischen Schlüssel des ersten asymmetrischen Schlüsselpaars umfasst. Voraussetzung für die Zertifikatsausstellung ist beispielsweise eine Schlüsselattestierung bzw. Key Attestation, welche bescheinigt, dass der erste öffentlichen kryptographischen Schlüssel unter Einhaltung eines vordefinierten Satzes von Sicherheitsanforderungen erstellt wurde und/oder dass das den öffentlichen kryptographischen Schlüssel erstellende zweite Sicherheitselement 110 den vordefinierten Satz von Sicherheitsanforderungen erfüllt. Ferner wird im Zuge des Provisionierens beispielsweise von dem Provisionierungsserver 280 das Sicherheitsapplet für das ID-Anwendungsprogramm 108 in das erste Sicherheitselement 112 eingebracht. Von dem Provisionierungsserver 280 wird zudem der erste öffentliche kryptographische Schlüssel des ID-Anwendungsprogramms 108 in das Sicherheitsapplet eingebracht. Beispielsweise bringt der Provisionierungsserver 280 ein oder mehrere Wurzelsignaturprüfschlüssel, etwa CVCA Schlüssel einer Country Verifying Certificate Authority, d.h. einer nationalen Zertifikats-Autorität für Verifizierung, in das Sicherheitsapplet des Sicherheitselements 112 ein. Diese Wurzelsignaturprüfschlüssel dienen zum Verifizieren von Zertifikatsignaturen ein oder mehrerer Wurzelinstanzen. Ferner wird beispielsweise von dem Provisionierungsserver 280 ein von dem Personalisierungsserver 220 erzeugtes zweites asymmetrisches Schlüsselpaar für das ID-Anwendungsprogramm 108 in das Sicherheitsapplet auf dem ersten Sicherheitselement 112 eingebracht.

Alternativer Weise kann der erste öffentliche kryptographische Schlüssel des ID-Anwendungsprogramms 108 von dem Personalisierungsserver 220 in das Sicherheitsapplet eingebracht werden. Beispielsweise bringt der Personalisierungsserver 220 die ein oder mehrere Wurzelsignaturprüfschlüssel, etwa CVCA Schlüssel einer Country Verifying Certificate Authority, d.h. einer nationalen Zertifikats-Autorität für Verifizierung, in das Sicherheitsapplet des Sicherheitselements 112 ein. Diese Wurzelsignaturprüfschlüssel dienen zum Verifizieren von Zertifikatsignaturen ein oder mehrerer Wurzelinstanzen. Ferner wird von dem Personalisierungsserver 220 beispielsweise das von dem Personalisierungsserver 220 erzeugte zweite asymmetrische Schlüsselpaar für das ID-Anwendungsprogramm 108 in das Sicherheitsapplet auf dem ersten Sicherheitselement 112 eingebracht.

Zum Personalisieren des Sicherheitsapplets des Sicherheitselements 112 werden beispielsweise Attribute 206 verwendet, welche ein ID-Token 200 bereitstellt. Der ID-Token 200 umfasst einen Prozessor 202 und einen Speicher 204. In einem geschützten Speicherbereich 205 des Speichers 204 sind die Attribute 206 gespeichert, bei welchen es sich um Identitätsattribute des Inhabers des ID-Tokens 200 handelt. Ferner sind in dem Speicher 204 Programminstruktionen 208 gespeichert, deren Ausführen durch den Prozessor 202 den Prozessor dazu veranlasst ein Auslesen der Attribute 206 durch eine dazu berechtigte Instanz, wie etwa den Personalisierungsserver 220, zu ermöglichen. Hierzu stellt der ID-Token 200 beispielsweise unter Verwendung seiner Kommunikationsschnittstelle 210 eine kabellose Direktverbindung 152 mit dem mobilen Endgerät 100, über welche der Personalisierungsserver 220 die Attribute 206 auslesen kann.

Der Personalisierungsserver 220 umfasst einen Prozessor 222, einen Speicher 224 und eine Kommunikationsschnittstelle 230. In dem Speicher 204 sind Programminstruktionen 228 gespeichert, bei deren Ausführung der Prozessor 222 den Personalisierungsserver 220 zum Aufbau verschlüsselter Kanäle mit dem mobilen Endgerät 100, dem ID-Token 200 über das mobile Endgerät 100 sowie mit dem Sicherheitsapplet in dem Sicherheitselement 112 des mobilen Endgeräts 100 steuert. Diese Kanäle verwendet der Personalisierungsserver 220 zum Auslesen von Attributen 206 aus dem ID-Token 200 und Einbringen der ausgelesenen Attribute 206 in das Sicherheitselement 112 im Zuge der Personalisierung. Zum Nachweis einer Leseberechtigung der Attribute 206 aus dem ID-Token 200 sowie einer Schreibberechtigung zum Schreiben der ausgelesenen Attribute 206 in das Sicherheitselement 112 des mobile Endgeräts 100 verwendet der Personalisierungsserver 220 beispielsweise entsprechende Zertifikate 226.

Ferner umfasst das System beispielsweise einen Service-Provider-Server 260. Der Service-Provider-Server 260 umfasst einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 150 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Servers 260 durch das mobile Endgerät 100 sendet das Service-Provider-Servers 260 eine Identitätsattributsanfrage nach Identitätsattributen des Nutzers des mobilen Endgeräts 100 an einen ID-Provider-Server 240. Die Identitätsattributsanfrage kann von dem Service-Provider-Servers 260 beispielsweise direkt oder über das mobile Endgerät 100 an den ID-Provider-Server 240 gesendet werden.

Der ID-Provider-Server 240 umfasst einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 240 zum Auslesen der in der Identitätsattributsanfrage spezifizierten Identitätsattribute aus einem Speicher des mobilen Endgeräts 100. Hierzu baut der ID-Provider-Server 240 einen kryptographisch gesicherten Kommunikationskanal mit dem mobilen Endgerät 100 auf. Bei dem einen kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von ID-Provider-Server 240 und mobilem Endgerät 100 voraus. Für einen Lesezugriff auf die Identitätsattribute verwendet der ID-Provider-Server 240 ein ID-Anwendungsprogramm 108 auf dem mobilen Endgerät 100, welches die Identitätsattribute verwaltet. Eine Leseberechtigung zum Auslesen der in der Identitätsattributsanfrage spezifizierten Identitätsattribute weist der ID-Provider-Server 240 beispielsweise mit dem Berechtigungszertifikat 248 nach. Ferner setzt ein Lesezugriff des ID-Provider-Server 240 auf die in der Identitätsattributsanfrage spezifizierten Identitätsattribute eine Zustimmung des Nutzers des mobilen Endgeräts 100 voraus. Hierzu muss sich der Nutzer gegenüber dem ID-Anwendungsprogramm 108 erfolgreich authentisieren. Beispielsweise wird dem Nutzer über eine Anzeigevorrichtung der Nutzerschnittstelle 116 angezeigt, welche Identitätsattribut an den ID-Provider-Server 240 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung und eine erfolgreiche Nutzerauthentifizierung werden dem ID-Provider-Server 240 die freigegebenen Identitätsattribute zugesendet. Der ID-Provider-Server 240 signiert die empfangenen Identitätsattribute und sendet diese an den Service-Provider-Server 260.

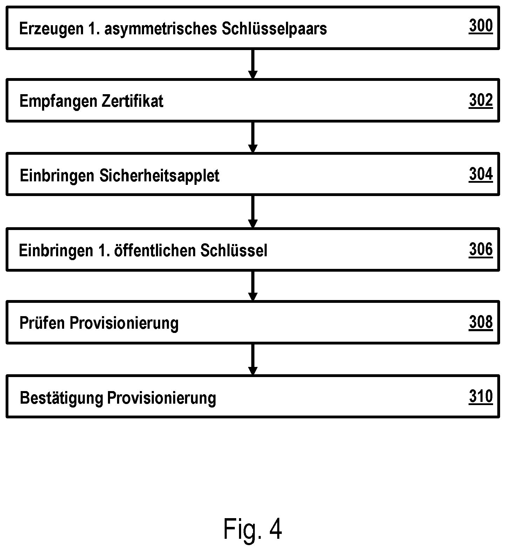

Figur 4 zeigt ein exemplarisches Verfahren zum Provisionieren eines auf einem mobilen Endgerät installierten ID-Anwendungsprogramms mit kryptographischen Schlüsseln und einem Sicherheitsapplet. Das ID-Anwendungsprogramm umfasst eine Provisionierungskomponente, welche das Provisionieren auf Seiten des mobilen Endgeräts steuert. Das mobile Endgerät umfasst zwei voneinander unabhängige Sicherheitselemente. Auf ein erstes dieser beiden Sicherheitselement hat ein Provisionierungsserver Zugriff, während das zweite Sicherheitselement einem Betriebssystem des mobilen Endgeräts zugeordnet ist. Auf dieses zweite Sicherheitselement hat der Provisionierungsserver keinen Zugriff. Der Provisionierungsserver wird beispielsweise von einem Hersteller des ID-Anwendungsprogramms verwaltet oder von einer von dem Hersteller des ID-Anwendungsprogramms beauftragten Instanz. In Block 300 wird auf eine ersten Schlüsselerzeugungsanfrage der Provisionierungskomponente hin von dem zweiten Sicherheitselement ein dem ID-Anwendungsprogramm zugeordnetes erstes asymmetrisches Schlüsselpaar erzeugt. Dieses erste asymmetrische Schlüsselpaar umfasst einen ersten privaten kryptographischen Schlüssel und einen ersten öffentlichen kryptographischen Schlüssel. Den ersten öffentlichen kryptographischen Schlüssel sendet das zweite Sicherheitselement an die Provisionierungskomponente. Das mobile Endgerät umfasst ferner ein oder mehrere Authentifizierungssensoren zum Erfassen von ein oder mehreren Authentifizierungsfaktoren eines Nutzers des mobilen Endgeräts. Voraussetzung für das Erzeugen des ersten asymmetrischen Schlüsselpaars in Block 300 ist beispielsweise eine erfolgreiche Authentisierung des Nutzers gegenüber dem zweiten Sicherheitselement. Mit der Authentisierung stimmt der Nutzer der Erzeugung des ersten asymmetrischen Schlüsselpaars zu. Zugleich wird eine Verwendung eines ersten privaten kryptographischen Schlüssels des ersten asymmetrischen Schlüsselpaars beispielsweise an eine erfolgreiche Authentisierung des Nutzers und damit den Nutzer des mobilen Endgeräts gebunden.

In Block 302 empfängt die Provisionierungskomponente auf eine über ein Netzwerk an einen Personalisierungsserver gesendete Zertifikatsausstellungsanfrage ein von dem Personalisierungsserver ausgestelltes Zertifikat des ID-Anwendungsprogramms. Dieses Zertifikat umfasst den ersten öffentlichen kryptographischen Schlüssel. Hierbei kann es sich beispielsweise um ein X.509 Zertifikat handeln. Beispielsweise ist eine Voraussetzung für das Erzeugen eine erfolgreiche Schlüsselattestierung. In Block 304 wird auf eine erste Anfrage der Provisionierungskomponente über das Netzwerk an einen Provisionierungsserver hin das Sicherheitsapplet für das ID-Anwendungsprogramm durch den Provisionierungsserver in das erste Sicherheitselement eingebracht. In Block 306 wird auf eine zweite Anfrage der Provisionierungskomponente an den Provisionierungsserver hin von dem Provisionierungsserver der erste öffentliche kryptographische Schlüssel in das erste Sicherheitselement eingebracht. Der erste öffentliche kryptographische Schlüssel wird dem Provisionierungsserver beispielsweise von der Provisionierungskomponente zur Verfügung gestellt. Das erste asymmetrische Schlüsselpaar dient zum Bestätigen einer Nutzerauthentifizierung eines Nutzers des mobilen Endgeräts durch das zweite Sicherheitselement gegenüber dem ersten Sicherheitselement. Die Kommunikation der Provisionierungskomponente mit dem Provisionierungsserver erfolgt beispielsweise über eine auf dem mobilen Endgerät installierte API-Applikation ("Application Programming Interface") eines Provisionierungsdienstes.

Alternativer Weise kann die Provisionierungskomponente eine zweite Anfrage an den Personalisierungsserver senden. Auf diese Anfrage hin wird von dem Personalisierungsserver der erste öffentliche kryptographische Schlüssel in das erste Sicherheitselement eingebracht. Der erste öffentliche kryptographische Schlüssel wird dem Personalisierungsserver beispielsweise von der Provisionierungskomponente zur Verfügung gestellt. Das erste asymmetrische Schlüsselpaar dient zum Bestätigen einer Nutzerauthentifizierung eines Nutzers des mobilen Endgeräts durch das zweite Sicherheitselement gegenüber dem ersten Sicherheitselement.

In Block 308 wird die Provisionierung des ersten asymmetrischen Schlüsselpaars des ID-Anwendungsprogramms und des Sicherheitsapplets geprüft. Diese Prüfung umfasst beispielsweise ein Challenge-Response-Verfahren unter Verwendung der beiden Sicherheitselementen. Im Zuge dieses Challenge-Response-Verfahrens sendet die Provisionierungskomponente eine Challenge-Anfrage an das erste Sicherheitselement. Auf die Challenge-Anfrage hin empfängt die Provisionierungskomponente von dem ersten Sicherheitselement eine Challenge, beispielsweise einen Zufallswert. Die Provisionierungskomponente sendet eine Response-Anfrage mit der Challenge an das zweite Sicherheitselement. Auf die Response-Anfrage hin, empfängt die Provisionierungskomponente von dem zweiten Sicherheitselement eine Response auf die Challenge. Das Erzeugen der Response durch das zweite Sicherheitselement umfasst ein Signieren der Challenge mit dem ersten privaten kryptographischen Schlüssel als erstem Signaturschlüssel. Voraussetzung für das Verwenden des ersten privaten kryptographischen Schlüssels zum Erzeugen der Response durch das zweite Sicherheitselement ist beispielsweise eine erfolgreiche Authentisierung des Nutzers gegenüber dem zweiten Sicherheitselement. Auf ein Senden einer ersten Validierungsanfrage der Provisionierungskomponente mit der Response an das erste Sicherheitselement, empfängt die Provisionierungskomponente eine Bestätigung der Validität der Response unter der Voraussetzung einer erfolgreichen Signaturprüfung der Response unter Verwendung des ersten öffentlichen kryptographischen Schlüssels als Signaturprüfschlüssel. In Block 310 sendet die Provisionierungskomponente, auf eine erfolgreiche Prüfung der Provisionierung hin, eine Provisionierungsbestätigung an den Personalisierungsserver. Der Personalisierungsserver registriert auf die Provisionierungsbestätigung hin das ID-Anwendungsprogramm. Hierzu speichert der Personalisierungsserver beispielsweise eine Zuordnung des Zertifikats des ID-Anwendungsprogramms mit dem ersten öffentlichen kryptographischen Schlüssel zu der auf dem mobilen Endgerät installierten Instanz des ID-Anwendungsprogramms. Die Instanz des ID-Anwendungsprogramms wird beispielsweise durch einen eindeutigen Identifikator, d.h. eine Anwendungs-ID, identifiziert. Beispielsweise umfasst das Zertifikat des ID-Anwendungsprogramms 108 einen entsprechenden eindeutigen Identifikator.

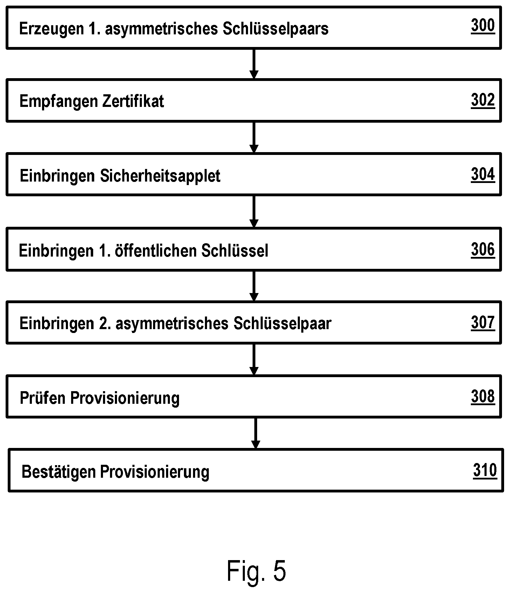

Figur 5 zeigt ein weiteres exemplarisches Verfahren zum Provisionieren eines auf einem mobilen Endgerät installierten ID-Anwendungsprogramms mit kryptographischen Schlüsseln und einem Sicherheitsapplet. Die Blöcke 300 bis 306 der Figur 5 sind identisch mit den Blöcke 300 bis 306 der Figur 4. Zusätzlich umfasst das Verfahren gemäß Figur 5 den Block 307. In Block 307 wird auf eine zweite Schlüsselerzeugungsanfrage der Provisionierungskomponente ein von dem Provisionierungsserver ein zweites asymmetrisches Schlüsselpaar in das erste Sicherheitselement eingebracht. Das zweite asymmetrische Schlüsselpaar wird von dem Personalisierungsserver erzeugten und ist dem ID-Anwendungsprogramm zugeordnet. Beispielsweise empfängt der Provisionierungsserver das zweite asymmetrische Schlüsselpaar von dem Personalisierungsserver auf eine entsprechende Anfrage hin. Das zweite asymmetrische Schlüsselpaar dient als initiales asymmetrisches Schlüsselpaar des Sicherheitsapplets beispielsweise zu einem initialen Authentisieren des ID-Anwendungsprogramms. Das zweite asymmetrische Schlüsselpaar umfasst einen zweiten privaten kryptographischen Schlüssel und einen zweiten öffentlichen kryptographischen Schlüssel. Auf ein erfolgreiches Einbringen des zweiten asymmetrischen Schlüsselpaars hin, empfängt die Provisionierungskomponente den zweiten öffentlichen kryptographischen Schlüssel.

Im Zuge der Prüfung der Provisionierung in Block 308 erfolgt zusätzlich eine Prüfung der der Provisionierung des zweiten asymmetrischen Schlüsselpaars. Hierzu wird beispielsweise ein zusätzliches zweites Challenge-Response-Verfahren ausgeführt. Dieses zweite Challenge-Response-Verfahren umfasst ein Senden einer zweiten Challenge-Anfrage der Provisionierungskomponente an das zweite Sicherheitselement. In Antwort auf die zweite Challenge-Anfrage empfängt die Provisionierungskomponente eine von dem zweiten Sicherheitselement erzeugten zweiten Challenge, beispielsweise in Form eines Zufallswerts. Auf eine zweite Response-Anfrage der Provisionierungskomponente mit der zweiten Challenge an das erste Sicherheitselement, empfängt die Provisionierungskomponente eine von dem ersten Sicherheitselement erzeugte zweite Response auf die zweiten Challenge. Das Erzeugen der zweiten Response umfasst ein Signieren der zweiten Challenge mit dem zweiten privaten kryptographischen Schlüssel als zweitem Signaturschlüssel. Auf eine zweite Validierungsanfrage der Provisionierungskomponente mit der zweiten Response an das zweite Sicherheitselement, empfängt die Provisionierungskomponente eine zweite Bestätigung der Validität der zweiten Response unter der Voraussetzung einer erfolgreichen Prüfung der Signatur der zweiten Response mit dem zweiten öffentlichen kryptographischen Schlüssel als zweitem Signaturprüfschlüssel.

Alternativer Weise umfasst das Prüfen der Provisionierung in Block 308 beispielsweise auf ein Senden einer ersten Prüfanfrage der Provisionierungskomponente an das erste Sicherheitselement, ein Berechnen eines ersten symmetrischen kryptographischen Schlüssels durch das erste Sicherheitselements unter Verwendung des ersten öffentlichen kryptographischen Schlüssels und des zweiten privaten kryptographischen Schlüssels. Auf ein Senden einer zweiten Prüfanfrage der Provisionierungskomponente an das zweite Sicherheitselement hin, wird der erste symmetrische kryptographische Schlüssel zudem durch das zweite Sicherheitselement berechnet unter Verwendung des ersten privaten kryptographischen Schlüssels und des zweiten öffentlichen kryptographischen Schlüssels. Es wird eine verschlüsselte Kommunikation zwischen dem ersten und dem zweiten Sicherheitselement unter Verwendung des ersten symmetrischen kryptographischen Schlüssels zum Verschlüsseln einer Testnachricht getestet. Ist der Test erfolgreich, d.h. kann eine verschlüsselte Testnachricht von einem der beiden Sicherheitselemente erstellt und von dem anderen der beiden entschlüsselt werden, ist die Provisionierung erfolgreich. Alternativer Weise kann das zweite Sicherheitselement den ersten symmetrischen Schlüssel beispielsweise der Provisionierungskomponente zur Verfügung stellen, welche den empfangenen ersten symmetrischen Schlüssel mit dem von dem ersten Sicherheitselement berechneten ersten symmetrischen Schlüssel abgleicht. Stimmen die ersten symmetrischen Schlüssel überein, war die Provisionierung erfolgreich. Voraussetzung für das Berechnen des ersten symmetrischen kryptographischen Schlüssels durch das zweite Sicherheitselement ist dabei beispielsweise eine erfolgreiche Authentisierung des Nutzers gegenüber dem zweiten Sicherheitselement.

Ferner umfasst das Prüfen der Provisionierung beispielsweise auf ein Senden der ersten Prüfanfrage der Provisionierungskomponente an das erste Sicherheitselement ein zusätzliches Berechnen eines zweiten symmetrischen kryptographischen Schlüssels durch das erste Sicherheitselements unter Verwendung des ersten öffentlichen kryptographischen Schlüssels und des zweiten privaten kryptographischen Schlüssels. Auf ein Senden der zweiten Prüfanfrage der Provisionierungskomponente an das zweite Sicherheitselement wird der zweite symmetrische kryptographische Schlüssel zusätzlich durch das zweite Sicherheitselement unter Verwendung des ersten privaten kryptographischen Schlüssels und des zweiten öffentlichen kryptographischen Schlüssels berechnet. Voraussetzung für das Berechnen des zweiten symmetrischen kryptographischen Schlüssels durch das zweite Sicherheitselement ist dabei beispielsweise eine erfolgreiche Authentisierung des Nutzers gegenüber dem zweiten Sicherheitselement. Der zweite symmetrische kryptographische Schlüssel dient zum Erstellen von Authentisierungstoken, beispielsweise in Form von MAC-Codes. Beispielsweise wird ein Authentisierungstoken zum Nachweis der Authentizität der Testnachricht erstellt und mit der Testnachricht zum Testen der Provisionierung verwendet. Zum Erstellen des Authentisierungstoken wird beispielsweise die Testnachricht und der zweite symmetrische kryptographische Schlüssel verwendet.

Alternativer Weise kann das zweite Sicherheitselement der Provisionierungskomponente zusätzlich zu dem ersten symmetrischen Schlüssel auch den zweiten symmetrischen Schlüssel zur Verfügung stellen, welche den empfangenen zweiten symmetrischen Schlüssel mit dem von dem ersten Sicherheitselement berechneten zweiten symmetrischen Schlüssel abgleicht. Stimmen die auch die zweiten symmetrischen Schlüssel überein, war die Provisionierung erfolgreich.

In Block 310 der Figur 5 erfolgt, wie in Block 320 der Figur 4, die Bestätigung der Personalisierung gegenüber dem Personalisierungsserver. Zusätzlich zu der dem ersten öffentlichen kryptographischen Schlüssel wird der auf dem mobilen Endgerät installierten Instanz des ID-Anwendungsprogramms im Zuge der Registrierung der zweite öffentliche kryptographische Schlüssel zugeordnet.

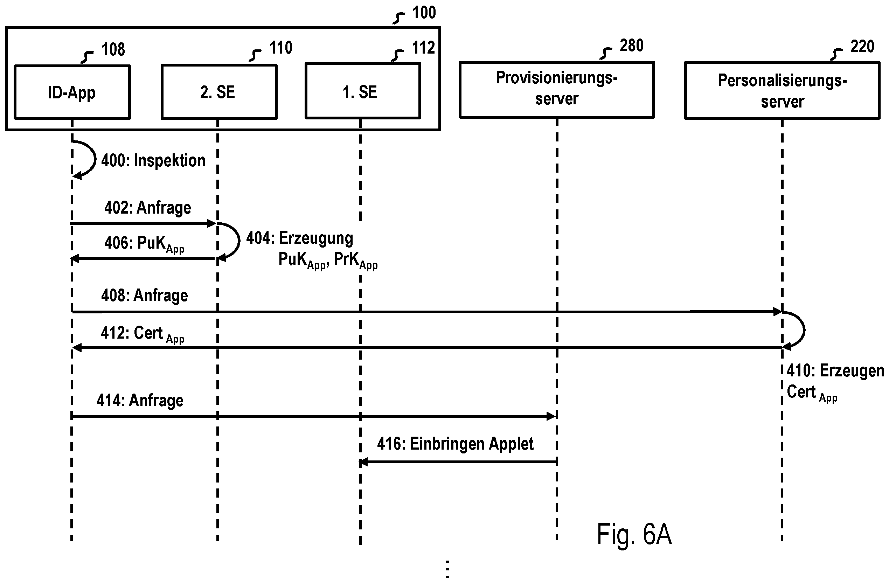

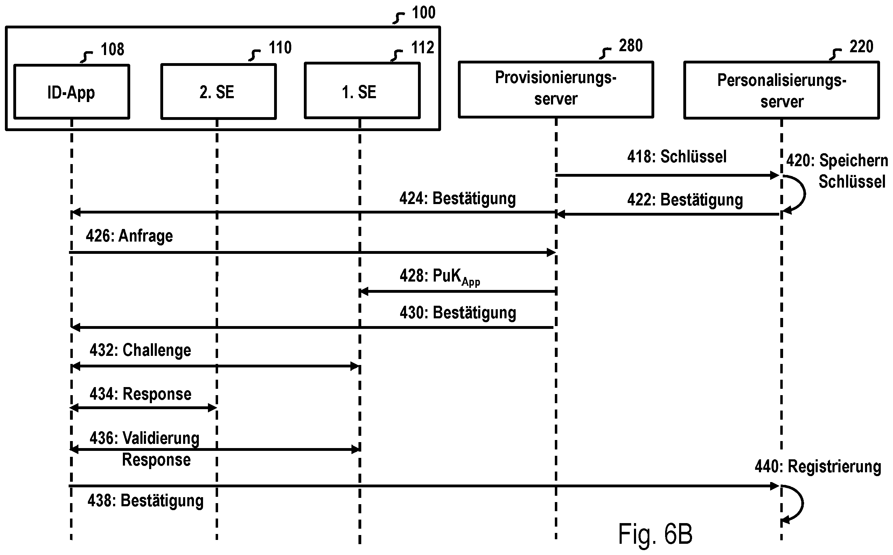

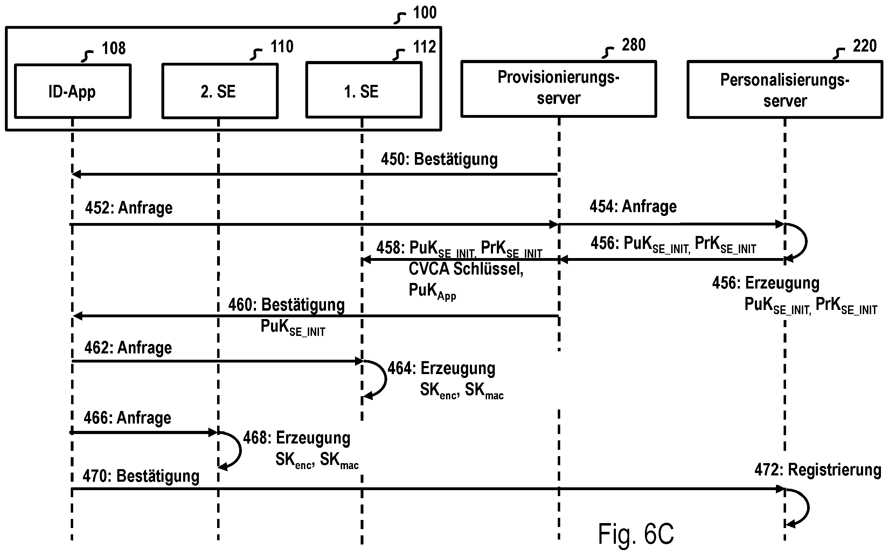

Figur 6 zeigt ein exemplarisches Verfahren zum Provisionieren eines auf einem mobilen Endgerät installierten ID-Anwendungsprogramms 108 mit kryptographischen Schlüsseln und einem Sicherheitsapplet. Die Figur 6 zeigt zwei alternative Implementierungen, d.h. der in Figur 6A gezeigte Verfahrensteil kann entweder mit dem in Figur 6B gezeigten Verfahrensteil oder dem in Figur 6C gezeigten Verfahrensteil fortgesetzt werden. Somit umfasst eine erste Variante also die Schritte 400 bis 416 und 418 bis 440 gemäß den Figuren 6A und 6B, während eine zweite Variante die Schritte 400 bis 416 und 450 bis 472 gemäß den Figuren 6A und 6B umfasst.

Die Provisionierung wird seitens des ID-Anwendungsprogramms 108 beispielsweise von einer Provisionierungskomponente gesteuert. Diese Provisionierungskomponente kommuniziert mit dem Provisionierungsserver 280 beispielsweise über eine auf dem mobilen Endgerät installierte API-Applikation eines Provisionierungsdienstes. In Schritt 400 erfolgt eine initiale Sicherheitsinspektion der Software des mobilen Endgeräts 100 durch die Provisionierungskomponente des ID-Anwendungsprogramms 108. Hierbei kann das mobile Endgerät 100 beispielsweise auf Manipulationen, Modifikationen und/oder Sicherheitslücken geprüft werden. Dabei kann die Integrität des mobilen Endgeräts 100 validiert werden, um sicherzustellen, dass das mobile Endgerät 100 nicht gefährdet ist und eine gesicherte Umgebung zum Erstellen einer elektronischen Identität bietet. Zudem kann ein Kombatibilitätscheck durch die Provisionierungskomponente vorgenommen werden, in welchem die Provisionierungskomponente prüft, ob das mobile Endgerät 100 alle für die Provisionierung notwendigen Einrichtungen umfasst, wie etwa die beiden Sicherheitselemente 110, 112 und Kommunikationsschnittstellen zur Kommunikation mit den externen Servern 220, 280.

In Schritt 402 sendet die Provisionierungskomponente des ID-Anwendungsprogramms 108 eine Schlüsselerzeugungsanfrage an das zweite Sicherheitselement 110. In Schritt 404 erzeugt das zweite Sicherheitselement 110 ein dem ID-Anwendungsprogramm zugeordnetes erstes asymmetrisches Schlüsselpaar mit einem ersten öffentlichen kryptographischen Schlüssel PuK_{App} und einem ersten privaten kryptographischen Schlüssel PrK_{App}. Das mobile Endgerät 100 umfasst ferner ein oder mehrere Authentifizierungssensoren zum Erfassen von ein oder mehreren Authentifizierungsfaktoren eines Nutzers des mobilen Endgeräts 100. Voraussetzung für das Erzeugen des ersten asymmetrischen Schlüsselpaars in Schritt 404 ist beispielsweise eine erfolgreiche Authentisierung des Nutzers gegenüber dem zweiten Sicherheitselement 110. Mit der Authentisierung stimmt der Nutzer der Erzeugung des ersten asymmetrischen Schlüsselpaars zu. Zugleich wird eine Verwendung eines ersten privaten kryptographischen Schlüssels PrK_{App} des ersten asymmetrischen Schlüsselpaars beispielsweise an eine erfolgreiche Authentisierung des Nutzers und damit den Nutzer des mobilen Endgeräts 100 gebunden. In Schritt 406 sendet das zweite Sicherheitselement 110 den ersten öffentlichen kryptographischen Schlüssels PuK_{App} des ersten asymmetrischen Schlüsselpaars an die Provisionierungskomponente des ID-Anwendungsprogramms 108.

In Schritt 408 sendet die Provisionierungskomponente des ID-Anwendungsprogramms 108 über ein Netzwerk eine Zertifikatsausstellungsanfrage an einen Personalisierungsserver 220 zum Ausstellen eines Zertifikats mit dem ersten öffentlichen kryptographischen Schlüssel PuK_{App}. Die Kommunikation mit dem Personalisierungsserver 220 erfolgt beispielsweise über eine verschlüsselte Kommunikationsverbindung, beispielsweise eine HTTPS-Verbindung. Die Zertifikatsausstellungsanfrage umfasst beispielsweise den ersten öffentlichen kryptographischen Schlüssel PuK_{App} sowie Daten einer Schlüsselattestierung. Die Daten der Schlüsselattestierung bescheinigen, dass der erste öffentlichen kryptographischen Schlüssel PuK_{App} unter Einhaltung eines vordefinierten Satzes von Sicherheitsanforderungen erstellt wurde und/oder dass das den öffentlichen kryptographischen Schlüssel PuK_{App} erstellende zweite Sicherheitselement 110 den vordefinierten Satz von Sicherheitsanforderungen erfüllt. In Schritt 410 prüft der Personalisierungsserver 220 die Daten der Schlüsselattestierung und erzeugt auf eine erfolgreiche Prüfung hin ein Zertifikat Cert_{App} für das ID-Anwendungsprogramms 108 mit dem öffentlichen kryptographischen Schlüssel PuK_{App}. Bei dem Zertifikat Cert_{App} handelt es sich beispielsweise um ein X.509 Zertifikat. In Schritt 412 sendet der Personalisierungsserver 220 das Zertifikat Cert_{App} an die Provisionierungskomponente des ID-Anwendungsprogramms 108. Ferner sendet der Personalisierungsserver 220 beispielsweise das Ergebnis der Prüfung der Daten der Schlüsselattestierung an die Provisionierungskomponente des ID-Anwendungsprogramms 108.

In Schritt 414 sendet die Provisionierungskomponente des ID-Anwendungsprogramms 108 eine Anfrage zum Einbringen eines Sicherheitsapplets in das erste Sicherheitselement 112 über das Netzwerk an den Provisionierungsserver 280. Dies erfolgt wie bereits zuvor erläutert beispielsweise über eine API-Applikation des mobilen Endgeräts 100. Beispielsweise führt die API-Applikation zusätzlich einen Test durch, ob das mobile Endgerät 100 bzw. das erste Sicherheitselement 112 zum Einbringen des Sicherheitsapplets geeignet sind. In Schritt 416 bringt der Provisionierungsserver 280 das Sicherheitsapplet in das Sicherheitselement 112 ein. Hierzu baut der Provisionierungsserver 280 beispielsweise einen verschlüsselten Kommunikationskanal zu dem Sicherheitselement 112 auf. Beispielsweise handelt es sich bei dem verschlüsselten Kommunikationskanal um einen Secure Chanel gemäß dem Secure Channel Protocol (SCP) der GlobalPlatform.

Das Verfahren kann nun je nach Variante mit Schritt 418 der Figur 6B oder dem Schritt 450 der Figur 6C fortgesetzt werden. In Schritt 418 sendet der Provisionierungsserver 280 kryptographische Schlüssel an den Personalisierungsserver 220, welche dem Personalisierungsserver 220 einen Zugriff auf das erste Sicherheitselement 112 bzw. das Sicherheitsapplet auf dem ersten Sicherheitselement 112 ermöglichen, etwa zum Zwecke einer nachfolgenden Personalisierung. Die Kommunikation des Provisionierungsservers 280 mit dem Personalisierungsserver 220 erfolgt beispielsweise über eine verschlüsselte Kommunikationsverbindung, beispielsweise eine HTTPS-Verbindung. Beispielsweise ist von dem Provisionierungsserver auf dem Sicherheitselement 112 eine Sub-SSD eingerichtet, in welche das Sicherheitsapplet eingebracht wurde. Beispielsweise kann zur Zugriffssicherung auf die Sub-SSD das Global Privacy Protocol (GPP) des Global Privacy Services der GlobalPlatform verwendet werden. Hierzu kann eine Global Privacy Protocol Application (GPPA) verwendet werden, an welche die Instanz des eingebrachten Sicherheitsapplets gebunden wird. Bei den in Schritt 418 gesendeten kryptographische Schlüssel handelt es sich beispielsweise um kryptographische Schlüssel gemäß GPP, welche einen Zugriff auf die Sub-SSD unter Verwendung des GPP ermöglichen. Der Personalisierungsserver 220 speichert die empfangenen kryptographischen Schlüssel in Schritt 420 und sendet in Schritt 422 eine Bestätigung an den Provisionierungsserver 280. Der Provisionierungsserver bestätigt in Schritt 424 gegenüber der Provisionierungskomponente des ID-Anwendungsprogramms 108 das erfolgreiche Einbringen des Sicherheitsapplets in das erste Sicherheitselement 112. In Schritt 426 sendet die Provisionierungskomponente des ID-Anwendungsprogramms 108 eine weitere Anfrage an den Provisionierungsserver 280 zum Einbringen des öffentlichen kryptographischen Schlüssel PuK_{App} in das erste Sicherheitselement 112. Beispielsweise umfasst die Anfrage den einzubringenden öffentlichen kryptographischen Schlüssel PuK_{App}. In Schritt 428 bringt der Provisionierungsserver 280 den öffentlichen kryptographischen Schlüssel PuK_{App} in das Sicherheitselement 112 bzw. das Sicherheitsapplet ein. Hierzu baut der Provisionierungsserver 280 beispielsweise einen verschlüsselten Kommunikationskanal zu dem Sicherheitselement 112 auf. Beispielsweise handelt es sich bei dem verschlüsselten Kommunikationskanal um einen Secure Chanel gemäß dem Secure Channel Protocol (SCP) der GlobalPlatform. In Schritt 430 sendet der Provisionierungsserver 280 eine Bestätigung an die Provisionierungskomponente des ID-Anwendungsprogramms 108 über ein erfolgreiches Einbringen des öffentlichen kryptographischen Schlüssels PuK_{App} in das erste Sicherheitselement 112 bzw. das Sicherheitsapplet.

Alternativer Weise kann die weitere Anfrage der Provisionierungskomponente des ID-Anwendungsprogramms 108 in Schritt 426 beispielsweise auch an den Personalisierungsserver 220 gesendet werden. Beispielsweise umfasst die Anfrage den einzubringenden öffentlichen kryptographischen Schlüssel PuK_{App}. In Schritt 428 bringt dann der Personalisierungsserver 220 den öffentlichen kryptographischen Schlüssel PuK_{App} in das Sicherheitselement 112 bzw. das Sicherheitsapplet ein. Hierzu baut der Personalisierungsserver 220 beispielsweise einen verschlüsselten Kommunikationskanal zu dem Sicherheitselement 112 auf. Beispielsweise handelt es sich bei dem verschlüsselten Kommunikationskanal um einen Secure Chanel gemäß dem Secure Channel Protocol (SCP) der GlobalPlatform. Beispielsweise erfolgt im Zuge des Einbringens des öffentlichen kryptographischen Schlüssel PuK_{App} auch das Erzeugen und Bereitstellen des Zertifikats Cert_{App} für das ID-Anwendungsprogramms 108 mit dem öffentlichen kryptographischen Schlüssel PuK_{App}. Bei dem Zertifikat Cert_{App} handelt es sich beispielsweise um ein X.509 Zertifikat. In diesem Fall entfallen die Schritte 408, 410 und 412 zwischen der Provisionierungskomponente des ID-Anwendungsprogramms 108 und dem Personalisierungsserver 220. Beispielsweise werden diese Schritte dann erst nach dem Einbringen des Sicherheitsapplets ausgeführt.

Auf die Bestätigung des erfolgreichen Einbringens des öffentlichen kryptographischen Schlüssels PuK_{App} hin, erfolgt eine Prüfung der Provisionierung. Diese Prüfung umfasst beispielsweise ein Challenge-Response-Verfahren unter Verwendung der beiden Sicherheitselementen 110, 112. Im Zuge dieses Challenge-Response-Verfahrens sendet die Provisionierungskomponente des ID-Anwendungsprogramms 108 in Schritt 432 eine Challenge-Anfrage an das erste Sicherheitselement 122 und empfängt auf die Challenge-Anfrage hin eine Challenge von dem ersten Sicherheitselement 112, beispielsweise einen Zufallswert. In Schritt 434 sendet die Provisionierungskomponente des ID-Anwendungsprogramms 108 sendet eine Response-Anfrage mit der Challenge an das zweite Sicherheitselement 110 und empfängt auf die Response-Anfrage hin eine Response auf die Challenge. Das Erzeugen der Response durch das zweite Sicherheitselement 110 umfasst ein Signieren der Challenge mit dem ersten privaten kryptographischen Schlüssel PrK_{App} als erstem Signaturschlüssel. Voraussetzung für das Verwenden des ersten privaten kryptographischen Schlüssels PrK_{App} zum Erzeugen der Response durch das zweite Sicherheitselement 110 ist beispielsweise eine erfolgreiche Authentisierung des Nutzers gegenüber dem zweiten Sicherheitselement 112. In Schritt 436 sendet die Provisionierungskomponente des ID-Anwendungsprogramms 108 eine ersten Validierungsanfrage mit der Response an das erste Sicherheitselement 112 und empfängt eine Bestätigung der Validität der Response unter der Voraussetzung einer erfolgreichen Signaturprüfung der Response unter Verwendung des ersten öffentlichen kryptographischen Schlüssels PuK_{App} als Signaturprüfschlüssel.

Auf eine erfolgreiche Prüfung der Provisionierung hin, sendet die Provisionierungskomponente des ID-Anwendungsprogramms 108 in Schritt 438 eine Provisionierungsbestätigung an den Personalisierungsserver 220. Die Kommunikation mit dem Personalisierungsserver 220 erfolgt beispielsweise über eine verschlüsselte Kommunikationsverbindung, beispielsweise eine HTTPS-Verbindung. Die Provisionierungsbestätigung umfasst beispielsweise das Zertifikat Cert_{App}. Auf die Provisionierungsbestätigung hin registriert der Personalisierungsserver 220 das ID-Anwendungsprogramm. Hierzu speichert der Personalisierungsserver 220 beispielsweise eine Zuordnung des Zertifikats Cert_{App} des ID-Anwendungsprogramms 108 mit dem ersten öffentlichen kryptographischen Schlüssel PuK_{App} zu der auf dem mobilen Endgerät 100 installierten Instanz des ID-Anwendungsprogramms 108. Die Instanz des ID-Anwendungsprogramms 108 wird beispielsweise durch einen eindeutigen Identifikator, d.h. eine Anwendungs-ID, identifiziert. Beispielsweise umfasst das Zertifikat Cert_{App} des ID-Anwendungsprogramms 108 einen entsprechenden eindeutigen Identifikator.

Im Zuge der zweiten Variante des Verfahrens, wie es in Figur 6C exemplarisch dargestellt ist, sendet der Provisionierungsserver 280 in Schritt 450 eine Bestätigung an die Provisionierungskomponente des ID-Anwendungsprogramms 108, dass das Einbringen des Sicherheitsapplets in das erste Sicherheitselement 112 erfolgreich war. In Schritt 452 sendet die Provisionierungskomponente des ID-Anwendungsprogramms 108 eine zweite Schlüsselerzeugungsanfrage an den Provisionierungsserver 280. Die zweite Schlüsselerzeugungsanfrage umfasst beispielsweise den ersten öffentlichen kryptographischen Schlüssel PuK_{App} und eine ID des ID-Anwendungsprogramms 108. In Schritt 454 sendet der Provisionierungsserver 280 die zweite Schlüsselerzeugungsanfrage an den Personalisierungsserver 220. Die Kommunikation mit dem Personalisierungsserver 220 erfolgt beispielsweise über eine verschlüsselte Kommunikationsverbindung, beispielsweise eine HTTPS-Verbindung. Der Personalisierungsserver 220 validiert in Schritt 456 beispielsweise den ersten öffentlichen kryptographischen Schlüssel PuK_{App} und die ID des ID-Anwendungsprogramms 108. Ferner, beispielsweise auf eine erfolgreiche Validierung hin, erzeugt der Personalisierungsserver 220 in Schritt 456 ein zweites asymmetrisches Schlüsselpaar für das ID-Anwendungsprogramm 108. Das dem ID-Anwendungsprogramm zugeordnete zweite asymmetrische Schlüsselpaar umfasst einen zweiten öffentlichen kryptographischen Schlüssel PuK_{SE_init} und einem zweiten privaten kryptographischen Schlüssel PuK_{SE_init}. In Schritt 456 sendet der Personalisierungsserver 220 die kryptographischen Schlüssel PuK_{SE_init} und PrK_{SE_init} an den Provisionierungsserver 280. In Schritt 458 bringt der Provisionierungsserver 280 die kryptographischen Schlüssel PuK_{SE_init} und PrK_{SE_init}, den öffentlichen kryptographischen Schlüssel PuK_{App} in das Sicherheitselement 112 bzw. das Sicherheitsapplet ein. Ferner bringt der Provisionierungsserver 280 beispielsweise ein oder mehrere Wurzelsignaturprüfschlüssel, etwa CVCA Schlüssel einer Country Verifying Certificate Authority, d.h. einer nationalen Zertifikats-Autorität für Verifizierung, in das Sicherheitselement 112 bzw. das Sicherheitsapplet ein. Diese Wurzelsignaturprüfschlüssel dienen zum Verifizieren von Zertifikatsignaturen ein oder mehrerer Wurzelinstanzen dienen. Zum Einbringen der Daten in Schritt 458 baut der Provisionierungsserver 280 beispielsweise einen verschlüsselten Kommunikationskanal zu dem Sicherheitselement 112 auf. Beispielsweise handelt es sich bei dem verschlüsselten Kommunikationskanal um einen Secure Chanel gemäß dem Secure Channel Protocol (SCP) der GlobalPlatform. In Schritt 460 sendet der Provisionierungsserver 280 eine Bestätigung an die Provisionierungskomponente des ID-Anwendungsprogramms 108 über ein erfolgreiches Einbringen der Daten in das erste Sicherheitselement 112 bzw. das Sicherheitsapplet.

Die entsprechende Bestätigung umfasst beispielsweise den öffentlichen kryptographischen Schlüssel PuK_{SE_init}.

Alternativer Weise kann das Einbringen des ersten öffentlichen kryptographischen Schlüssels PuK_{App} auch unabhängig vom Einbringen des zweiten asymmetrischen Schlüsselpaars mit dem zweiten öffentlichen kryptographischen Schlüssel PuK_{SE_init} und dem zweiten privaten kryptographischen Schlüssel PuK_{SE_init} Durch den Personalisierungsserver 220 erfolgen.

Alternativer Weise kann die Schlüsselerzeugungsanfrage auch direkt an den Personalisierungsserver 220 gesendet werden. Der Personalisierungsserver 220 validiert beispielsweise den ersten öffentlichen kryptographischen Schlüssel PuK_{App} und die ID des ID-Anwendungsprogramms 108. Ferner, beispielsweise auf eine erfolgreiche Validierung hin, erzeugt der Personalisierungsserver 220 das zweite asymmetrische Schlüsselpaar für das ID-Anwendungsprogramm 108 mit dem zweiten öffentlichen kryptographischen Schlüssel PuK_{SE_init} und dem zweiten privaten kryptographischen Schlüssel PuK_{SE}_ᵢₙᵢₜ. Beispielsweise bringt der Personalisierungsserver 220 die kryptographischen Schlüssel PuK_{SE_init} und PrK-_{SE-init}, den öffentlichen kryptographischen Schlüssel PuK_{App} in das Sicherheitselement 112 bzw. das Sicherheitsapplet ein. Ferner bringt der Personalisierungsserver 220 beispielsweise die ein oder mehrere Wurzelsignaturprüfschlüssel, etwa CVCA Schlüssel einer Country Verifying Certificate Authority, d.h. einer nationalen Zertifikats-Autorität für Verifizierung, in das Sicherheitselement 112 bzw. das Sicherheitsapplet ein. Zum Einbringen der Daten baut der Personalisierungsserver 220 beispielsweise einen verschlüsselten Kommunikationskanal zu dem Sicherheitselement 112 auf. Beispielsweise handelt es sich bei dem verschlüsselten Kommunikationskanal um einen Secure Chanel gemäß dem Secure Channel Protocol (SCP) der GlobalPlatform. Ferner sendet der Personalisierungsserver 220 beispielswiese eine Bestätigung an die Provisionierungskomponente des ID-Anwendungsprogramms 108 über ein erfolgreiches Einbringen der Daten in das erste Sicherheitselement 112 bzw. das Sicherheitsapplet. Die entsprechende Bestätigung umfasst beispielsweise den öffentlichen kryptographischen Schlüssel PuK_{SE_init}.

Beispielsweise erfolgt im Zuge des Einbringens des öffentlichen kryptographischen Schlüssel PuK_{App} auch das Erzeugen und Bereitstellen des Zertifikats Cert_{App} für das ID-Anwendungsprogramms 108 mit dem öffentlichen kryptographischen Schlüssel PuK_{App}. Bei dem Zertifikat Cert_{App} handelt es sich beispielsweise um ein X.509 Zertifikat. In diesem Fall entfallen die Schritte 408, 410 und 412 zwischen der Provisionierungskomponente des ID-Anwendungsprogramms 108 und dem Personalisierungsserver 220. Beispielsweise werden diese Schritte dann erst nach dem Einbringen des Sicherheitsapplets ausgeführt.

Auf die Bestätigung des erfolgreichen Einbringens der in das erste Sicherheitselement 112 bzw. das Sicherheitsapplet hin, erfolgt eine Prüfung der Provisionierung. In Schritt 462 sendet die Provisionierungskomponente des ID-Anwendungsprogramms 108 eine erste Prüfanfrage an das Sicherheitsapplet des ersten Sicherheitselements 112. Das Sicherheitsapplet berechnet in Schritt 464 zwei symmetrische kryptographische Schlüssel SK_{enc} und SK_{mac} unter Verwendung des ersten öffentlichen kryptographischen Schlüssels PuK_{App} und des zweiten privaten kryptographischen Schlüssels PrK_{SE_init}. Zur Berechnung der symmetrische kryptographische Schlüssel SK_{enc} und SK_{mac} wird beispielsweise ein Diffie-Hellmann-Verfahren verwendet. Der erste symmetrische kryptographische Schlüssel SK_{enc} dient beispielsweise eine Verschlüsselung von Nachrichten. Der zweite symmetrische kryptographische Schlüssel SK_{mac} dient beispielsweise als Authentisierungsschlüssel zu einer Erzeugung von Authentisierungstoken der Nachrichten, etwa in Form von MAC-Codes, zum Nachweis der Authentizität der entsprechenden Nachrichten. In Schritt 466 sendet die Provisionierungskomponente des ID-Anwendungsprogramms 108 eine zweite Prüfanfrage an das zweite Sicherheitselement 110. Das zweite Sicherheitselement 110 berechnet in Schritt 468 ebenfalls die beiden symmetrischen kryptographischen Schlüssel SK_{enc} und SK_{mac} unter Verwendung des ersten privaten kryptographischen Schlüssels PrK_{App} und des zweiten öffentlichen kryptographischen Schlüssels PuK_{SE_init}. Anhand eines Abgleichs der durch die beiden Sicherheitselemente 110, 112 berechneten symmetrischen kryptographischen Schlüssel SK_{enc} und SK_{mac} kann geprüft werden, ob die Provisionierung erfolgreich war. Hierzu kann beispielsweise eine Testnachricht zwischen den beiden Sicherheitselementen 110, 112 ausgetauscht werden. Alternativer Wiese kann das zweite Sicherheitselement 110 die symmetrischen kryptographischen Schlüssel SK_{enc} und SK_{mac} der Provisionierungskomponente des ID-Anwendungsprogramms 108 zur Verfügung stellen, welche den Abgleich vornimmt. Hierzu kann die Provisionierungskomponente des ID-Anwendungsprogramms 108 eine Testnachricht mit dem Sicherheitsapplet des ersten Sicherheitselements 112 austauschen oder es kann ein direkter Abgleich erfolgen, etwa indem das die Provisionierungskomponente des ID-Anwendungsprogramms 108 die symmetrischen kryptographischen Schlüssel SK_{enc} und SK_{mac} an das Sicherheitsapplet des ersten Sicherheitselements 112 weitergeleitet.

Alternativer Weise kann die Prüfung beispielsweise ein doppeltes ein Challenge-Response-Verfahren unter Verwendung der beiden Sicherheitselementen 110, 112 umfassen.

Auf eine erfolgreiche Prüfung der Provisionierung hin, sendet die Provisionierungskomponente des ID-Anwendungsprogramms 108 in Schritt 470 eine Provisionierungsbestätigung an den Personalisierungsserver 220. Die Kommunikation mit dem Personalisierungsserver 220 erfolgt beispielsweise über eine verschlüsselte Kommunikationsverbindung, beispielsweise eine HTTPS-Verbindung. Die Provisionierungsbestätigung umfasst beispielsweise das Zertifikat Cert_{App}. Auf die Provisionierungsbestätigung hin registriert der Personalisierungsserver 220 das ID-Anwendungsprogramm. Hierzu speichert der Personalisierungsserver 220 beispielsweise eine Zuordnung des Zertifikats Cert_{App} des ID-Anwendungsprogramms 108 mit dem ersten öffentlichen kryptographischen Schlüssel PuK_{App} zu der auf dem mobilen Endgerät 100 installierten Instanz des ID-Anwendungsprogramms 108. Die Instanz des ID-Anwendungsprogramms 108 wird beispielsweise durch einen eindeutigen Identifikator, d.h. eine Anwendungs-ID, identifiziert. Beispielsweise umfasst das Zertifikat Cert_{App} des ID-Anwendungsprogramms 108 einen entsprechenden eindeutigen Identifikator. Ferner ordnet der Personalisierungsserver 220 im Zuge der Registrierung der installierten Instanz des ID-Anwendungsprogramms 108 den zweiten öffentlichen kryptographischen Schlüssels PuK_{SE_init} zu.

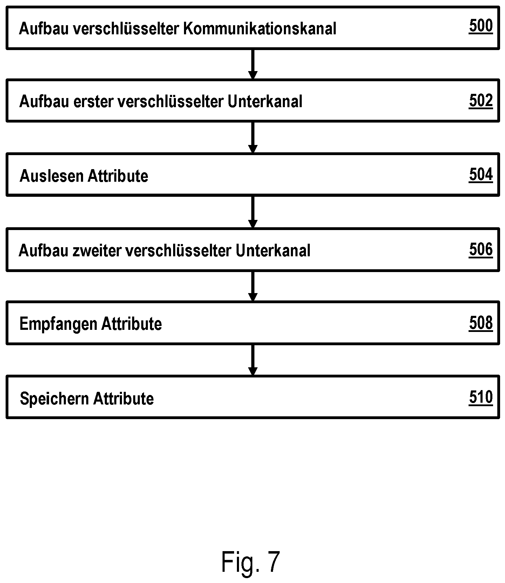

Figur 7 zeigt ein exemplarisches Verfahren zum Personalisieren eines Sicherheitsapplets. Das zu personalisierende Sicherheitsapplet ist auf einem Sicherheitselement eines mobilen Endgeräts installiert und einem auf dem mobilen Endgerät installierten ID-Anwendungsprogramm zugeordnet. Die Personalisierung erfolgt unter Verwendung eines ID-Tokens, auf welchem Attribute eines Nutzers gespeichert sind, und eines Personalisierungsservers, welcher sowohl eine Berechtigung zum Auslesen der Attribute aus dem ID-Token besitzt, als auch eine Berechtigung zum Einbringen der ausgelesenen Attribute in das Sicherheitsapplet zum Zwecke einer Personalisierung. Die entsprechenden Berechtigungen weist der Personalisierungsserver unter Verwendung von Zertifikaten und/oder dem Besitz und der Verwendung bestimmter kryptographischer Schlüssel nach.

Das Personalisieren umfasst in Block 500 ein Aufbauen eines verschlüsselten Kommunikationskanals zwischen dem mobilen Endgerät und dem Personalisierungsserver über ein Netzwerk. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von mobilem Endgerät und Personalisierungsserver, etwa unter Verwendung von Challenge-Response-Verfahren. Ferner wird beispielsweise ein erster kanalspezifischer ephemerer symmetrischer kryptographischer Sitzungsschlüssel zum Verschlüsseln des Kommunikationskanals zwischen dem mobilen Endgerät und dem Personalisierungsserver ausgehandelt.

In Block 502 wird ein erster verschlüsselter Unterkanal zwischen dem ID-Token und dem Personalisierungsserver innerhalb des verschlüsselten Kommunikationskanals über das mobile Endgerät aufgebaut. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von ID-Token und Personalisierungsserver, etwa unter Verwendung von Challenge-Response-Verfahren. Ferner wird beispielsweise ein zweiter kanalspezifischer ephemerer symmetrischer kryptographischer Sitzungsschlüssel zum Verschlüsseln des ersten Unterkanals zwischen dem ID-Token und dem Personalisierungsserver ausgehandelt. In Block 504 werden ein oder mehreren der Attribute aus dem ID-Token durch den Personalisierungsserver über den ersten verschlüsselten Unterkanal innerhalb des verschlüsselten Kommunikationskanals ausgelesen.

Ferner wird in Block 506 ein zweiter verschlüsselter Unterkanal zwischen dem Sicherheitsapplet des Sicherheitselements und dem Personalisierungsserver innerhalb des verschlüsselten Kommunikationskanals aufgebaut. Hierbei wird beispielsweise das ID-Anwendungsprogramm bzw. eine Personalisierungskomponente des ID-Anwendungsprogramm verwendet, welche den Aufbau steuert. Im Zuge des Aufbaus erfolgt beispielsweise eine gegenseitige Authentifizierung von dem ID-Anwendungsprogramm bzw. dem zugeordneten Sicherheitsapplet und dem Personalisierungsserver, etwa unter Verwendung von Challenge-Response-Verfahren. Ferner wird beispielsweise ein dritter kanalspezifischer ephemerer symmetrischer kryptographischer Sitzungsschlüssel zum Verschlüsseln des zweiten Unterkanals zwischen dem Sicherheitsapplet und dem Personalisierungsserver ausgehandelt. In Block 508 empfängt das Sicherheitsapplet die ausgelesenen Attribute von dem Personalisierungsserver über den zweiten verschlüsselten Unterkanal innerhalb des verschlüsselten Kommunikationskanals. In Block 510 speichert das Sicherheitsapplet die empfangenen Attribute, womit es dem entsprechenden Nutzer zugeordnet bzw. personalisiert ist. Das ID-Anwendungsprogramm ist dazu konfiguriert, die gespeicherten Attribute zum Nachweis einer elektronischen Identität des entsprechenden Nutzers gegenüber einem weiteren Computersystem zu verwenden. Im Zuge der Personalisierung wird ferner beispielsweise ein Erzeugen eines dem ID-Anwendungsprogramm zugeordneten asymmetrischen kryptographischen Schlüsselpaars durch das Sicherheitsapplet seitens des Personalisierungsservers initiiert. Das asymmetrische kryptographische Schlüsselpaar umfasst einen privaten kryptographischen Schlüssel und einen öffentlichen kryptographischen Schlüssel des ID-Anwendungsprogramms, welche beispielsweise zu einem Authentisieren des ID-Anwendungsprogramms im Zuge einer Verwendung der Attribute dienen. Der öffentliche kryptographische Schlüssel des ID-Anwendungsprogramms wird beispielsweise von dem Sicherheitsapplet an den Personalisierungsserver über den zweiten verschlüsselten Unterkanal innerhalb des verschlüsselten Kommunikationskanals gesendet. Ferner empfängt das Sicherheitsapplet beispielsweise ein oder mehrere Wurzelsignaturprüfschlüssel durch von dem Personalisierungsserver über den zweiten verschlüsselten Unterkanal innerhalb des verschlüsselten Kommunikationskanals. Diese empfangenen Wurzelsignaturprüfschlüssel werden gespeichert und dienen zum Verifizieren von Zertifikatsignaturen ein oder mehrerer Wurzelinstanzen, welche Zertifikate aufweisen, die jeweils im Zuge eines Auslesens der ersten Attribute zum Authentisieren eines auslesenden Computersystems gegenüber dem ID-Anwendungsprogramm verwendet werden. Zudem empfängt und speichert das Sicherheitsapplet beispielsweise eine Signatur der empfangenen Attribute von dem Personalisierungsserver über den zweiten verschlüsselten Unterkanal innerhalb des verschlüsselten Kommunikationskanals. Die Signatur dient als Authentizitätsnachweis der Attribute, insbesondere im Falle einer Verwendung der Attribute zum Zwecke eines Identitätsnachweises im Offlinemodus.

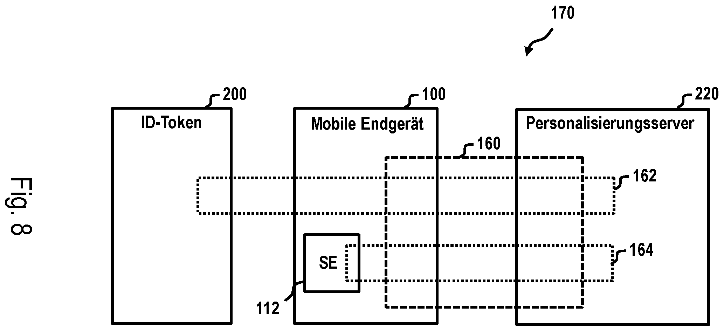

Figur 8 zeigt exemplarische verschlüsselte Kanäle 160, 162, 164, welche im Zuge der Personalisierung des Sicherheitsapplets auf dem Sicherheitselement 112 aufgebaut werden. Zwischen dem mobilen Endgerät 100 und dem Personalisierungsserver 220 wird ein verschlüsselter Kommunikationskanal 160 aufgebaut. Dieser dient der Sicherung der Kommunikation zwischen dem mobilen Endgerät 100 und dem Personalisierungsserver 220. Zugleich wird durch diesen das mobile Endgerät 100 im Zuge der Kommunikation an den Personalisierungsserver 220 gebunden. Der Personalisierungsserver 220 kann somit sicherstellen, dass sämtliche Kommunikation über den verschlüsselten Kommunikationskanal 160 über dasselbe mobile Endgerät 100 erfolgt. Dabei wird beispielsweise dasselbe mobile Endgerät 100 zum Auslesen von Attributen aus dem ID-Token verwendet, welches nachfolgend mit den ausgelesenen Attributen personalisiert wird.

Im Zuge der weiteren Personalisierung erfolgt die Kommunikation zwischen dem mobilen Endgerät 100 und dem Personalisierungsserver 220 über den ein verschlüsselter Kommunikationskanal 160. Dies schließt auch eine Kommunikation zwischen dem Personalisierungsserver 220 und dem ID-Token 200 ein, welche über das mobile Endgerät 100 erfolgt. Der verschlüsselte Kommunikationskanal 160 ist beispielsweise mittels Ende-zu-Ende-Verschlüsselung verschlüsselt. Das Verschlüsseln und entschlüsseln der Kommunikation erfolgt auf Seiten des mobilen Endgeräts 100 beispielsweise mittels des weiteren Sicherheitselements des Betriebssystems des mobilen Endgeräts 100. Innerhalb des verschlüsselten Kommunikationskanals 160 wird ferner ein erster verschlüsselter Unterkanal 162 zwischen dem ID-Token 200 und dem Personalisierungsserver 220 unter Vermittlung des mobilen Endgeräts 100 bzw. einer Personalisierungskomponente des ID-Anwendungsprogramms aufgebaut. Dieser erste verschlüsselte Unterkanal 162 dient beispielsweise einer Kommunikation zwischen dem ID-Token 200 und dem Personalisierungsserver 220, beispielsweise zum Auslesen der von dem ID-Token 200 bereitgestellten Attribute durch den Personalisierungsserver 220. Der entsprechende erste Unterkanal 162 ist beispielsweise ebenfalls mittels Ende-zu-Ende-Verschlüsselung verschlüsselt. Die Datenübertragung zwischen mobilem Endgerät 100 und Personalisierungsserver220 erfolgt beispielsweise über ein Netzwerk, während die Datenübertragung zwischen mobilem Endgerät 100 und ID-Token 200 beispielsweise über eine direkte Funkverbindung erfolgt.

In diesem Kontext heißt Unterkanal, dass über den entsprechenden Unterkanal zu übertragende Daten zunächst mittels eines kryptographischen Sitzungsschlüssels des entsprechenden Unterkanals verschlüsselt werden. Beispielsweise wird zusätzlich noch ein MAC der Daten unter Verwendung eines kryptographischen Authentisierungsschlüssels des entsprechenden Unterkanals erzeugt und mit den verschlüsselten Daten zusammen übertragen. Zusätzlich werden die zu übertragende Daten mittels eines weiteren kryptographischen Sitzungsschlüssels des Kommunikationskanals verschlüsselt, welcher dem Unterkanal übergeordnet ist. Beispielsweise wird zusätzlich noch ein weiteren MAC der Daten unter Verwendung eines weiteren kryptographischen Authentisierungsschlüssels des entsprechenden Kommunikationskanals erzeugt und mit den verschlüsselten Daten zusammen übertragen. Gelangen die übertragenen Daten ans Ende des Kommunikationskanals, werden zuerst die Verschlüsslung des Kommunikationskanals entschlüsselt. Gelangen die übertragenen Daten dann ans Ende des Unterkanals wird auch noch die Verschlüsslung des Unterkanals entschlüsselt. Bei einer Übertragung über einen verschlüsselten Unterkanal innerhalb eines verschlüsselten Kommunikationskanals handelt es sich mithin um eine doppelte Verschlüsselung mit zwei voneinander unabhängigen Sitzungsschlüsseln. Unabhängig sind die Sitzungsschlüssel insofern, als dass sich aus einem Zugriff auf einen der beiden Sitzungsschlüssel kein automatischer Zugriff auf den anderen Sitzungsschlüssel ergibt.

Innerhalb des verschlüsselten Kommunikationskanals 160 wird ferner ein zweiter verschlüsselter Unterkanal 164 zwischen dem Sicherheitselement 112 bzw. einem zu personalisierenden Sicherheitsapplet 114 des Sicherheitselements 112 und dem Personalisierungsserver 220 unter Vermittlung der Personalisierungskomponente des ID-Anwendungsprogramms aufgebaut. Der entsprechende zweite Unterkanal 164 ist beispielsweise ebenfalls mittels Ende-zu-Ende-Verschlüsselung verschlüsselt. Dieser zweite verschlüsselte Unterkanal 164 dient beispielsweise einer Kommunikation zwischen dem Sicherheitselements 112 und dem Personalisierungsserver 220, beispielsweise zum Personalisieren des Sicherheitsapplets 114 des Sicherheitselements 112 mit den aus dem ID-Token 200 ausgelesenen Attributen durch den Personalisierungsserver 220.

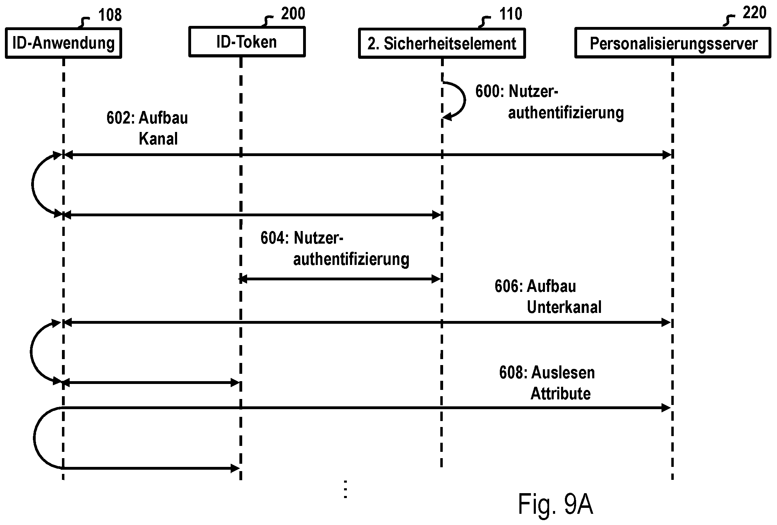

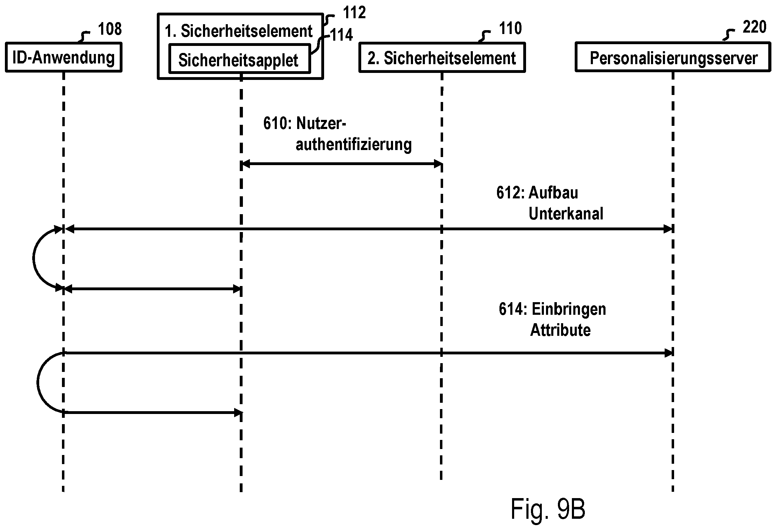

Figur 9 zeigt ein exemplarisches Verfahren zum Personalisieren eines Sicherheitsapplets 114 in einem Sicherheitselement 112. Zunächst authentisiert sich ein Nutzer des mobilen Endgeräts in Schritt 600 gegenüber einem dafür konfigurierten Sicherheitselement 110 des mobilen Endgeräts 100. Beispielsweise sind in dem Sicherheitselement 110 Referenzwerte für ein oder mehrere Authentifizierungsfaktoren, wie etwa biometrische Merkmale oder eine PIN, eines auf dem mobilen Endgerät registrierten Nutzes hinterlegt. Im Zuge einer Nutzerauthentifizierung werden ein oder mehrere Authentifizierungsfaktoren des Nutzers erfasst und mit den Referenzwerten abgeglichen. Im Falle einer Übereinstimmung gilt der Nutzer beispielsweise als erfolgreich authentifiziert. In Schritt 602 wird ein verschlüsselter Kommunikationskanal zwischen dem mobilen Endgerät, beispielsweise dem Sicherheitselement 110 und dem Personalisierungsserver 220 aufgebaut. Dies umfasst beispielsweise ein gegenseitiges Authentifizieren von mobilem Endgerät bzw. Sicherheitselement 110 und Personalisierungsserver 220, etwa mittels Challenge-Response-Verfahrens, sowie ein Aushandeln eines kryptographischen Schlüssels, beispielsweise eines kanalspezifischen ephemeren symmetrischen kryptographischen Sitzungsschlüssels, zum Verschlüsseln des Kommunikationskanals.

Beispielsweise wird zunächst ein erster initialer Zufallswert durch das mobile Endgerät bzw. das Sicherheitselement 110 erzeugt und an den Personalisierungsserver 220 gesendet. Nach dem Empfang des entsprechenden ersten initialen Zufallswerts erzeugt der Personalisierungsserver 220 einen zweiten initialen Zufallswert, welchen er an das mobile Endgerät 100 sendet. Somit verfügen beide Teilnehmer, das mobile Endgerät sowie der Personalisierungsserver 220, über beide initialen Zufallswerte. Ferner sendet der Server beispielsweise sein Zertifikat an das mobile Endgerät und empfängt von dem mobilen Endgerät nach einer erfolgreichen Prüfung des entsprechenden Zertifikats ein Zertifikat des mobilen Endgeräts. Bei dem Zertifikat des mobilen Endgeräts kann es sich beispielsweise um ein dem ID-Anwendungsprogramm zugeordnetes Zertifikat handeln. Das durch den Personalisierungsserver 220 empfangene Zertifikat des mobilen Endgeräts wird ebenfalls verifiziert. Die beiden Zertifikate umfassen dabei jeweils einen öffentlichen kryptographischen Schlüssel, d.h. das Zertifikat des Personalisierungsservers 220 umfasst einen öffentlichen kryptographischen Schlüssel eines asymmetrischen Schlüsselpaars des Personalisierungsservers 220 und das Zertifikat des mobilen Endgeräts umfasst einen öffentlichen kryptographischen Schlüssel eines asymmetrischen Schlüsselpaars des mobilen Endgeräts. Somit verfügen nun beide Teilnehmer jeweils über öffentliche kryptographische Schlüssel der Gegenseite, dessen Authentizität durch ein Zertifikat belegt ist. Daraufhin erzeugt das mobile Endgerät beispielsweise den ersten Zufallswert, welchen es an den Personalisierungsserver 220 sendet. Somit verfügen nun beide Teilnehmer der Kommunikation jeweils über drei Zufallswerte, aus welchen beispielsweise der kanalspezifische ephemere symmetrische kryptographische Sitzungsschlüssel berechnet werden kann. Ferner sendet das mobile Endgerät beispielsweise eine Signatur einer, mehrerer oder aller vorangehenden im Zuge des Kanalaufbaus ausgetauschten Nachrichten an den Personalisierungsserver 220. Durch Prüfung der entsprechenden Signatur unter Verwendung von dem Zertifikat des mobilen Endgeräts bereitgestellten öffentlichen kryptographischen Schlüssel als Signaturprüfschlüssel kann der Personalisierungsserver 220 das mobile Endgerät authentifizieren. Sendet im Folgenden der Personalisierungsserver 220 eine mit dem ersten kanalspezifischen ephemeren symmetrischen kryptographischen Sitzungsschlüssel verschlüsselte Nachricht an das mobile Endgerät, so wird dadurch auch der Personalisierungsserver 220 gegenüber dem mobilen Endgerät authentifiziert. Der Personalisierungsserver 220 kann den ersten kanalspezifischen ephemeren symmetrischen kryptographischen Sitzungsschlüssel nur berechnen, wenn er über einen privaten kryptographischen Schlüssel verfügt, mit welchem er den von dem mobilen Endgerät empfangenen ersten Zufallswert entschlüsseln kann. Somit ist nur der im Besitz des entsprechenden privaten kryptographischen Schlüssels befindliche Personalisierungsserver 220, welchem das Zertifikat des Personalisierungsservers 220 zugeordnet ist, zu einer verschlüsselten Kommunikation über den verschlüsselten Kommunikationskanal in der Lage.

Zum Freigeben eines Aufbauens eines ersten verschlüsselten Unterkanals wird in Schritt 604 der Nutzer des mobilen Endgeräts durch den ID-Token 200 unter Verwendung des mobilen Endgeräts bzw. des Sicherheitselements 110 authentifiziert. Beispielsweise erfolgt das Authentisieren des Nutzers gegenüber dem ID-Token 200 unter Verwendung des mobilen Endgeräts. Beispielsweise wird unter Verwendung der erfassten Authentifizierungsfaktors des Nutzers ein ephemerer symmetrischer kryptographischer Schlüssel abgeleitet. Das mobile Endgerät empfängt einen Zufallswert von dem ID-Token 200, welcher mit demselben ephemeren symmetrischen kryptographischen Schlüssel verschlüsselt ist. Den entsprechenden ephemeren symmetrischen kryptographischen Schlüssel leitet der ID-Token 200 beispielsweise aus einem Referenzwert für den Authentifizierungsfaktor ab oder der entsprechend abgeleitete ephemere symmetrische kryptographische Schlüssel ist auf dem ID-Token 200 gespeichert. Ist das mobile Endgerät dazu in der Lage, den empfangenen verschlüsselten Zufallswert korrekt zu entschlüsseln, stellt dies einen Nachweis dar, dass dem mobilen Endgerät der korrekte Authentifizierungsfaktor vorliegt. Das mobile Endgerät erzeugt ein ephemeres asymmetrisches Schlüsselpaar, dessen öffentlichen kryptographischen Schlüssel das mobile Endgerät an den ID-Token 200 sendet. Im Gegenzug empfängt das mobile Endgerät den öffentlichen kryptographischen Schlüssel des ID-Tokens 200. An dieser Stelle des Verfahrens sind mithin keine statischen kryptographischen Schlüssel notwendig, sondern es können ausschließlich zufallsbasiert erzeugte ephemere asymmetrische Schlüsselpaar verwendet werden. Das mobile Endgerät erzeugt unter Verwendung des entschlüsselten Zufallswerts, des ephemeren privaten kryptographischen Schlüssels des ID-Anwendungsprogramms sowie des ephemeren öffentlichen kryptographischen Schlüssels des ID-Tokens 200 ein mit dem ID-Token 200 geteiltes Geheimnis. Der ID-Token 200 ist ebenfalls dazu in der Lage, das entsprechende Geheimnis unter Verwendung des von ihm erzeugten Zufallswerts, des ephemeren privaten kryptographischen Schlüssels des ID-Tokens 200 sowie des von dem mobilen Endgerät empfangenen ephemeren öffentlichen kryptographischen Schlüssels des mobilen Endgeräts zu berechnen.

Das mobile Endgerät kann nun das so erzeugte geteilte Geheimnis zum Berechnen eines gemeinsamen Authentisierungsschlüssels zum gegenseitigen Authentisieren von ID-Anwendungsprogramm und ID-Token 200 verwenden. So kann beispielsweise das mobile Endgerät einen ersten Authentisierungstoken unter Verwendung des entsprechenden Authentisierungsschlüssels und des ephemeren öffentlichen kryptographischen Schlüssels des ID-Tokens 200 erzeugen. Der entsprechende Authentisierungstoken kann von dem mobilen Endgerät an das ID-Token 200 gesendet werden, welches den empfangenen Authentisierungstoken unter Verwendung des gemeinsamen Authentisierungsschlüssels und des ephemeren privaten kryptographischen Schlüssels des ID-Tokens 200 verifizieren kann. Somit kann sich das mobile Endgerät gegenüber dem ID-Token 200 authentisieren. Ebenso kann im Gegenzug der ID-Token 200 einen Authentisierungstoken an das mobile Endgerät senden. Das mobile Endgerät empfängt den Authentisierungstoken, welcher beispielsweise unter Verwendung des geteilten Geheimnisses sowie den ephemeren öffentlichen kryptographischen Schlüssel des mobilen Endgeräts erzeugt ist. Unter Verwendung des Authentisierungsschlüssels und des öffentlichen kryptographischen Schlüssels des ID-Anwendungsprogramms kann der Authentisierungstoken verifiziert werden.

In Schritt 606 wird auf eine erfolgreiche Authentifizierung des Nutzers in Schritt 604 hin ein erster verschlüsselter Unterkanal aufgebaut. Der Aufbau des ersten verschlüsselten Unterkanals umfasst beispielsweise ein gegenseitiges Authentisieren von ID-Token 200 und Personalisierungsserver 220 sowie ein Aushandeln eines kryptographischen Schlüssels zum Verschlüsseln des entsprechenden Unterkanals.

Beispielsweise wird zunächst der Personalisierungsserver 220 durch den ID-Token 200 in kryptographisch gesicherter Weise authentifiziert. Hierzu empfängt der ID-Token 200 beispielsweise ein Zertifikat des Personalisierungsservers 220, welches einen öffentlichen kryptographischen Schlüssel des Personalisierungsservers 220 zum Authentifizieren bereitstellt. Der ID-Token 200 verifiziert die Signatur des empfangenen Zertifikats. Beispielsweise wird das entsprechende Zertifikat als Teil einer Zertifikatskette empfangen, für deren Prüfung entsprechende Signaturprüfschlüssel, insbesondere Wurzelsignaturprüfschlüssel, auf dem ID-Token 200 hinterlegt sind. Somit kann der ID-Token 200 die Authentizität des bereitgestellten Zertifikats anhand der Zertifikatskette, beispielsweise einer PKI, verifizieren. Ferner empfängt der ID-Token 200 beispielsweise einen ephemeren öffentlichen kryptographischen Schlüssel des Personalisierungsservers 220. Beispielsweise empfängt der ID-Token 200 den ephemeren öffentlichen kryptographischen Schlüssel des Personalisierungsservers 220 in komprimierter Form. Im Gegenzug zum Empfang des Zertifikats des Personalisierungsservers 220 erzeugt der ID-Token 200 einen Zufallswert, welchen er als Challenge über den verschlüsselten Kommunikationskanal an den Personalisierungsserver 220 sendet. Der Personalisierungsserver 220 erstellt unter Verwendung eines privaten kryptographischen Schlüssels, welcher mit dem öffentlichen kryptographischen Schlüssel des zuvor bereitgestellten Zertifikats ein asymmetrisches Schlüsselpaar bildet, eine Signatur der Challenge als Response auf die Challenge. Beispielsweise wird zum Erzeugen der Response eine Datenkombination signiert, welche den Zufallswert als Challenge und den ephemeren öffentlichen kryptographischen Schlüssel des Personalisierungsservers 220, beispielsweise in komprimierter Form, umfasst. Der ID-Token 200 empfängt die entsprechende Signatur über den verschlüsselten Kommunikationskanal und prüft mit dem zuvor empfangenen öffentlichen kryptographischen Schlüssel des Personalisierungsservers 220 als Signaturprüfschlüssel. Hierzu verwendet der ID-Token 200 beispielsweise ferner den zuvor gesendeten Zufallswert sowie den zuvor als Challenge empfangenen ephemeren öffentlichen kryptographischen Schlüssel des Personalisierungsservers 220.

Anschließend authentisiert sich der ID-Token 200 in kryptographisch gesicherter Weise gegenüber dem Personalisierungsserver 220. Hierzu sendet der ID-Token 200 einen öffentlichen kryptographischen Schlüssel an den Personalisierungsserver 220. Dies erfolgt über den verschlüsselten Kommunikationskanal. Im Gegenzug empfängt der ID-Token 200 einen ephemeren öffentlichen kryptographischen Schlüssel des Personalisierungsservers 220 über den verschlüsselten Kommunikationskanal. Der ID-Token 200 berechnet ein mit dem Personalisierungsserver 220 geteiltes Geheimnis unter Verwendung des privaten kryptographischen Schlüssels des ID-Tokens 200 und des empfangen ephemeren öffentlichen kryptographischen Schlüssels des Personalisierungsservers 220. Der Personalisierungsserver 220 kann dasselbe geteilte Geheimnis unter Verwendung des öffentlichen kryptographischen Schlüssels des ID-Tokens 200 und des ephemeren privaten kryptographischen Schlüssels des Personalisierungsservers 220 berechnen. Der ID-Token 200 erzeugt einen Zufallswert, welchen er zum Berechnen eines gemeinsamen Authentisierungsschlüssels verwendet. Der Authentisierungsschlüssel dient zum Authentisieren von Daten, welche über den verschlüsselten Unterkanal gesendet werden. Den entsprechenden gemeinsamen Authentisierungsschlüssel erzeugt der ID-Token 200 unter Verwendung des Zufallswerts und des geteilten Geheimnisses. Ferner erzeugt der ID-Token 200 einen Authentisierungstoken unter Verwendung des entsprechenden Authentisierungsschlüssels und des ephemeren Schlüssels des Personalisierungsservers 220. Den so erzeugten Authentisierungstoken sendet der ID-Token 200 zusammen mit dem Zufallswert an den Personalisierungsserver 220 im Kommunikationskanal. Der Personalisierungsserver 220 wird durch den Empfang des Zufallswerts dazu in die Lage versetzt, ebenfalls den Authentisierungsschlüssel unter Verwendung des geteilten Geheimnisses zu berechnen. Mit diesem gemeinsamen Authentisierungsschlüssel und dem ephemeren öffentlichen kryptographischen Schlüssel des Personalisierungsservers 220 kann der Personalisierungsserver 220 den empfangenen Authentisierungstoken verifizieren. Ist die Verifikation erfolgreich, so ist auch der ID-Token 200 erfolgreich gegenüber dem Personalisierungsserver 220 authentisiert und eine erfolgreiche gegenseitige Authentisierung von ID-Token 200 und Personalisierungsserver 220 verwirklicht. Ferner kann der so berechnete gemeinsame Authentisierungsschlüssel zum Authentisieren von Daten verwendet werden, welche über den verschlüsselten Unterkanal zwischen ID-Token 200 und Personalisierungsserver 220 ausgetauscht werden.

Ferner können der ID-Token 200 und der Personalisierungsserver 220 jeweils für sich den kanalspezifischen ephemeren symmetrischen kryptographischen Sitzungsschlüssel zum Verschlüsseln des ersten Unterkanals unter Verwendung des geteilten Geheimnisses und des Zufallswerts erzeugen.

Den so aufgebauten ersten verschlüsselten Unterkanal zwischen dem Personalisierungsserver 220 und dem ID-Token 200 innerhalb des verschlüsselten Kommunikationskanal zwischen dem Personalisierungsserver 220 und dem mobilen Endgerät bzw. dem Sicherheitselement 110 verwendet der Personalisierungsserver 220 in Schritt 608 zum Auslesen der Attribute aus dem ID-Token 200 über das mobile Endgerät.

Zum Einbringen der ausgelesenen Attribute wird ein zweiter verschlüsselter Unterkanal zwischen dem Sicherheitsapplet 114 des Sicherheitselements und dem Personalisierungsserver 220 aufgebaut. In Schritt 610 erfolgt beispielsweise eine Authentifizierung des Nutzers durch das Sicherheitselement 110, welches dem Sicherheitsapplet des Sicherheitselements 112 gegenüber die erfolgreiche Authentifizierung, beispielsweise mittels eines Challenge-Response-Verfahrens, bestätigt.

In Schritt 612 wird auf eine erfolgreiche Authentifizierung des Nutzers in Schritt 610 hin ein zweiter verschlüsselter Unterkanal aufgebaut. Der Aufbau des zweiten verschlüsselten Unterkanals umfasst beispielsweise ein gegenseitiges Authentisieren von Sicherheitsapplets und Personalisierungsserver 220 sowie ein Aushandeln eines kryptographischen Schlüssels zum Verschlüsseln des entsprechenden Unterkanals.

Zunächst wird beispielsweise der Personalisierungsserver 220 durch das erste Sicherheitselement 112 bzw. das Sicherheitsapplet 114 in kryptographisch gesicherter Weise authentifiziert. Hierzu empfängt das zu personalisierende Sicherheitselement 112 zunächst ein Zertifikat des Personalisierungsservers 220 über den verschlüsselten Kommunikationskanal empfängt. Das entsprechende Zertifikat kann von dem Sicherheitselement 112verifiziert werden. Beispielsweise wird das entsprechende Zertifikat als Teil einer Zertifikatskette bereitgestellt, welche das Sicherheitselement 112 mit hinterlegten Wurzelsignaturprüfschlüsseln verifizieren kann. Somit kann das Sicherheitselement 112 die Authentizität des bereitgestellten Zertifikats anhand der Zertifikatskette, beispielsweise einer PKI, verifizieren. Ferner empfängt das Sicherheitselement 112 einen ephemeren öffentlichen kryptographischen Schlüssel des Personalisierungsservers 220. Beispielsweise empfängt das Sicherheitselement 112 den ephemeren öffentlichen kryptographischen Schlüssel des Personalisierungsservers 220 in komprimierter Form. Im Gegenzug zum Empfang des Zertifikats des Personalisierungsservers erzeugt das Sicherheitselement 112 einen Zufallswert und sendet den entsprechenden Zufallswert als Challenge an den Personalisierungsserver 220. In Antwort auf das Senden des Zufallswerts als Challenge empfängt das Sicherheitselement 112 über den verschlüsselten Kommunikationskanal von dem Personalisierungsserver 220 eine Signatur der Challenge als Response. Zum Erstellen der Signatur wird der private kryptographische Schlüssel des Personalisierungsservers 220 verwendet, welcher mit dem öffentlichen kryptographischen Schlüssel des zuvor bereitgestellten Zertifikats ein asymmetrisches Schlüsselpaar bildet. Beispielsweise wird zum Erzeugen der Response eine Datenkombination signiert. Die entsprechende Datenkombination umfasst beispielsweise den zuvor als Challenge gesendeten Zufallswert sowie den ephemeren öffentlichen kryptographischen Schlüssel des Personalisierungsservers 220, beispielsweise in komprimierter Form. Das Sicherheitselement 112 kann unter Verwendung des zuvor empfangenen öffentlichen kryptographischen Schlüssels des Personalisierungsservers 220 als Signaturprüfschlüssel die entsprechende Signatur prüfen. Hierzu verwendet das Sicherheitselement 112 beispielsweise ferner den ephemeren öffentlichen kryptographischen Schlüssel des Personalisierungsservers 220 und den zuvor als Challenge gesendeten Zufallswert. Ist die Signaturprüfung erfolgreich, so gilt der Personalisierungsserver 220 als erfolgreich authentifiziert.

Anschließend authentisiert sich das Sicherheitselement 112 bzw. das Sicherheitsapplet 114 in kryptographisch gesicherter Weise gegenüber dem Personalisierungsserver 220. Hierzu verwendet das entsprechende zu personalisierende Sicherheitsapplet 114 zunächst den in dem ersten Sicherheitselement hinterlegten zweiten privaten kryptographischen Schlüssel des zweiten asymmetrischen Schlüsselpaars des Sicherheitsapplets 114. Der entsprechende zweite private kryptographische Schlüssel wird beispielsweise im Zuge der Provisionierung des ID-Anwendungsprogramms 108 zur Verwendung durch das Sicherheitsapplet 114 in dem ersten Sicherheitselements 112 hinterlegt. Zum Authentisieren des Sicherheitsapplets 114 empfängt das entsprechende Sicherheitsapplet 114 zunächst beispielsweise einen zum Zwecke des Authentisierens erzeugten ephemeren öffentlichen kryptographischen Schlüssel von dem Personalisierungsserver 220. Den entsprechenden ephemeren öffentlichen kryptographischen Schlüssel erzeugt der Personalisierungsserver 220 beispielsweise für die Authentifizierung des zu personalisierenden Sicherheitsapplets 114. Den ephemeren öffentlichen kryptographischen Schlüssel empfängt das Sicherheitsapplet 114 beispielsweise über den verschlüsselten Kommunikationskanal. Das Sicherheitsapplet 114 berechnet ein geteiltes Geheimnis unter Verwendung des zweiten privaten kryptographischen Schlüssels des ID-Anwendungsprogramms 108 und des empfangenen ephemeren öffentlichen kryptographischen Schlüssels des Personalisierungsservers 220. Das zu personalisierende Sicherheitsapplet 114 erzeugt einen Zufallswert. Den entsprechenden Zufallswert verwendet das zu personalisierende Sicherheitsapplet 114 zum Erzeugen eines gemeinsamen Authentisierungsschlüssels. Zum Erzeugen des entsprechenden gemeinsamen Authentisierungsschlüssels wird ferner das geteilte Geheimnis verwendet. Zudem erzeugt das Sicherheitsapplet 114 einen Authentisierungstoken. Den entsprechenden Authentisierungstoken erzeugt das Sicherheitsapplet 114 unter Verwendung des zuvor empfangenen ephemeren öffentlichen kryptographischen Schlüssels des Personalisierungsservers 220 sowie des zuvor erzeugten gemeinsamen Authentisierungsschlüssels. Diesen Authentisierungstoken sendet das zu personalisierende Sicherheitsapplet 114 zusammen dem Zufallswert über den verschlüsselten Kommunikationskanal an den Personalisierungsserver 220. Der Personalisierungsserver 220 kann zunächst ebenfalls das geteilte Geheimnis berechnen. Hierzu verwendet der Personalisierungsserver 220 den zweiten öffentlichen kryptographischen Schlüssel des ID-Anwendungsprogramms 108, welcher dem Personalisierungsserver 220 bekannt ist. Dieser wurde beispielsweise im Zuge der Registrierung des ID-Anwendungsprogramms 108 beim Provisionieren auf dem Personalisierungsserver 220 hinterlegt. Ferner verwendet der Personalisierungsserver 220 den ephemeren privaten kryptographischen Schlüssel des Personalisierungsservers 220 zum Berechnen des geteilten Geheimnisses. Mit dem entsprechenden geteilten Geheimnis ist der Personalisierungsserver 220 dazu in der Lage, den gemeinsamen Authentisierungsschlüssel zu berechnen. Hierzu verwendet der Personalisierungsserver 220 den empfangenen Zufallswert und das zuvor berechnete geteilte Geheimnis. Somit kann der Personalisierungsserver 220 den empfangenen Authentisierungstoken verifizieren unter Verwendung des gemeinsamen Authentisierungsschlüssels und des ephemeren öffentlichen kryptographischen Schlüssels des Personalisierungsservers 220.

Ferner können das Sicherheitsapplet 114 des Sicherheitselements 112 und der Personalisierungsserver 220 jeweils für sich den kanalspezifischen ephemeren symmetrischen kryptographischen Sitzungsschlüssel zum Verschlüsseln des zweiten Unterkanals unter Verwendung des geteilten Geheimnisses und des Zufallswerts erzeugen. Den so aufgebauten zweiten verschlüsselten Unterkanal zwischen dem Personalisierungsserver 220 und dem Sicherheitsapplet 114 des Sicherheitselements 112 innerhalb des verschlüsselten Kommunikationskanal verwendet der Personalisierungsserver 220 in Schritt 614 zum Einbringen der Attribute aus dem ID-Token 200 das in zu personalisierende Sicherheitsapplet 114 des ersten Sicherheitselements 112.

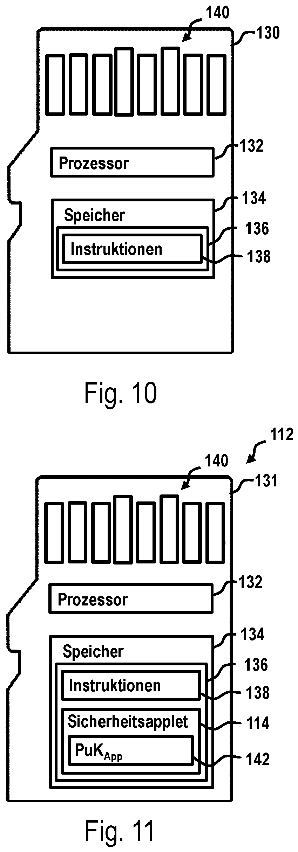

Figur 10 zeigt eine Chipkarte 130, beispielsweise eine MicroSmartSD, zur Verwendung zum Provisionieren eines auf dem mobilen Endgerät installierten ID-Anwendungsprogramms mit kryptographischen Schlüsseln und einem Sicherheitsapplet. Die Chipkarte 130 als ein erstes Sicherheitselement 112 konfiguriert. Ferner ist die Chipkarte 130 zum Einsetzen in eine Chipkartenlesevorrichtung eines mobilen Endgeräts konfiguriert. Die Chipkarte 130 umfasst einen Prozessor 132 und einen Speicher 134. In einem geschützten Bereich 136 des Speichers 134 sind Programminstruktionen 138 gespeichert, welche bei einem Ausführen durch den Prozessor 132 kryptographische Funktionalitäten eines Sicherheitselements implementieren. Beispielsweise ist der gesamte Speicher 134 als ein geschützter Speicherbereich 136 konfiguriert. Beispielsweise ist ein Teilbereich des Speichers 134 als ein geschützter Speicherbereich 136 konfiguriert. Die Chipkarte umfasst eine Kommunikationsschnittstelle 140 zur Kommunikation mit dem mobilen Endgerät. Über die 140 können von einem Provisionierungsserver über ein Netzwerk und das mobile Endgerät im Zuge eines Provisionierens ein oder mehrere kryptographische Schlüssel und ein Sicherheitsapplet eingebracht werden.

Figur 11 zeigt eine provisionierte Chipkarte 131. Die provisionierte Chipkarte 131 entspricht der Chipkarte 130 der Figur 10, wobei die provisionierte Chipkarte 131 zusätzlich ein Sicherheitsapplet 114 des auf dem mobilen Endgerät 100 installierten ID-Anwendungsprogramms umfasst, welches im Zuge eines Provisionierens in dem geschützten Speicherbereich 136 des Speichers 134 gespeichert wurde. Ferner umfasst die provisionierte Chipkarte 131 beispielsweise zusätzlich einen öffentlichen kryptographischen Schlüssel 142 PuK_{App} des auf dem mobilen Endgerät 100 installierten ID-Anwendungsprogramms umfasst, welcher im Zuge eines Provisionierens in dem geschützten Speicherbereich 136 des Speichers 134 gespeichert wurde. Der öffentliche kryptographische Schlüssel 142 PuK_{App} ist beispielsweise in dem Sicherheitsapplet 114 oder in einem Zugriffsbereich des Sicherheitsapplets 114 gespeichert. Zusätzlich können in dem Sicherheitsapplet 114 oder in einem Zugriffsbereich des Sicherheitsapplets 114 beispielsweise ein oder mehrere Wurzelsignaturprüfschlüssel, etwa CVCA Schlüssel einer Country Verifying Certificate Authority, d.h. einer nationalen Zertifikats-Autorität für Verifizierung, gespeichert sein. Diese Wurzelsignaturprüfschlüssel dienen zum Verifizieren von Zertifikatsignaturen ein oder mehrerer Wurzelinstanzen dienen. Zusätzlich können in dem Sicherheitsapplet 114 oder in einem Zugriffsbereich des Sicherheitsapplets 114 beispielsweise ein weiteres asymmetrisches Schlüsselpaar PuK_{SE_init} und PrK_{SE_init} für das ID-Anwendungsprogramm gespeichert sein.

### Bezugszeichenliste

- 100: mobiles Endgerät
- 102: Prozessor
- 104: Speicher
- 106: Betriebssystem
- 108: ID-Anwendungsprogramm
- 110: Sicherheitselement
- 112: Sicherheitselement
- 114: Sicherheitsapplet
- 116: Nutzerschnittstelle
- 118: Authentifizierungssensor
- 120: Kommunikationsschnittstelle
- 130: Chipkarte
- 131: provisionierte Chipkarte
- 132: Prozessor
- 134: Speicher
- 136: Geschützter Speicherbereich
- 138: Programminstruktionen
- 140: Kommunikationsschnittstelle
- 142: kryptographischer Schlüssel
- 150: Netzwerk
- 160: verschlüsselter Kommunikationskanal
- 162: verschlüsselter Unterkanal
- 164: verschlüsselter Unterkanal
- 170: System
- 200: ID-Token
- 202: Prozessor
- 204: Speicher
- 205: geschützter Speicherbereich
- 206: Attribute
- 208: Programminstruktionen
- 210: Kommunikationsschnittstelle
- 220: Personalisierungsserver
- 222: Prozessor
- 224: Speicher
- 226: Zertifikat
- 228: Programminstruktionen
- 230: Kommunikationsschnittstelle
- 240: ID-Provider-Server
- 242: Prozessor
- 244: Speicher
- 246: Zertifikat
- 248: Programminstruktionen
- 250: Kommunikationsschnittstelle
- 260: Service-Provider-Server
- 262: Prozessor
- 264: Speicher
- 266: Programminstruktionen
- 270: Kommunikationsschnittstelle
- 280: Provisionierungsserver
- 282: Prozessor
- 284: Speicher
- 286: Programminstruktionen
- 290: Kommunikationsschnittstelle

## Patentansprüche

1. Verfahren zum Provisionieren eines auf einem mobilen Endgerät (100) installierten ID-Anwendungsprogramms (108) mit kryptographischen Schlüsseln und einem Sicherheitsapplet (114), wobei das ID-Anwendungsprogramm (108) eine Provisionierungskomponente umfasst,
wobei das mobile Endgerät (100) ein erstes Sicherheitselement (112) und ein zweites Sicherheitselement (110) umfasst, wobei das erste Sicherheitselement (112) unabhängig von dem zweiten Sicherheitselement (110) ist, wobei das zweite Sicherheitselement (110) einem Betriebssystem (106) des mobilen Endgeräts (100) zugeordnet ist,
wobei das Verfahren umfasst:
• auf ein Senden einer ersten Schlüsselerzeugungsanfrage der Provisionierungskomponente an das zweite Sicherheitselement (110) hin, Erzeugen eines dem ID-Anwendungsprogramm (108) zugeordneten ersten asymmetrischen Schlüsselpaars durch das zweite Sicherheitselement (110), wobei das erste asymmetrische Schlüsselpaar einen ersten privaten kryptographischen Schlüssel und einen ersten öffentlichen kryptographischen Schlüssel (142) umfasst, wobei das zweite Sicherheitselement (110) den ersten öffentlichen kryptographischen Schlüssel (142) an die Provisionierungskomponente zum Einbringen in das erste Sicherheitselement (112) sendet, wobei das erste asymmetrische Schlüsselpaar zum Bestätigen einer Nutzerauthentifizierung eines Nutzers des mobilen Endgeräts (100) durch das zweite Sicherheitselement (110) gegenüber dem ersten Sicherheitselement (112) dient,
• auf ein Senden einer ersten Anfrage der Provisionierungskomponente über ein Netzwerk (150) an einen Provisionierungsserver (280) zum Einbringen des Sicherheitsapplets (114) für das ID-Anwendungsprogramm (108) hin, Einbringen des Sicherheitsapplets (114) für das ID-Anwendungsprogramm (108) in das erste Sicherheitselement (112) durch den Provisionierungsserver (280) über das Netzwerk (150), wobei das Verfahren zum Einbringen des Sicherheitsapplets (114) ein Aufbauen eines ersten verschlüsselten Kommunikationskanals zwischen dem ersten Sicherheitselement (112) und dem Provisionierungsserver (280) umfasst.

2. Verfahren nach Anspruch 1, wobei das Verfahren ferner umfasst:
auf ein Senden einer zweiten Anfrage der Provisionierungskomponente über das Netzwerk (150) an den Provisionierungsserver (280) zum Einbringen des ersten öffentlichen kryptographischen Schlüssels (142) in das erste Sicherheitselement (112) hin, Einbringen des ersten öffentlichen kryptographischen Schlüssels (142) in das erste Sicherheitselement (112) durch den Provisionierungsserver (280) über das Netzwerk (150),
wobei das Verfahren beispielsweise ferner umfasst:
auf ein Senden einer Zertifikatsausstellungsanfrage der Provisionierungskomponente mit dem ersten öffentlichen kryptographischen Schlüssel (142) über das Netzwerk (150) an einen Personalisierungsserver (220) hin, Empfangen eines von dem Personalisierungsserver (220) ausgestellten Zertifikats des ID-Anwendungsprogramms (108), welches den ersten öffentlichen kryptographischen Schlüssel (142) umfasst, durch die Provisionierungskomponente.

3. Verfahren nach Anspruch 1, wobei das Verfahren ferner umfasst:
auf ein Senden einer dritten Anfrage der Provisionierungskomponente über das Netzwerk (150) an den Personalisierungsserver (220) zum Einbringen des ersten öffentlichen kryptographischen Schlüssels (142) in das erste Sicherheitselement (112) hin, Einbringen des ersten öffentlichen kryptographischen Schlüssels (142) in das erste Sicherheitselement (112) durch den Personalisierungsserver (280) über das Netzwerk (150),
wobei auf das Senden der dritten Anfrage hin beispielsweise ferner das von dem Personalisierungsserver (220) ausgestellte Zertifikat des ID-Anwendungsprogramms (108), welches den ersten öffentlichen kryptographischen Schlüssel (142) umfasst, durch die Provisionierungskomponente empfangen wird.

4. Verfahren nach einem der vorangehenden Ansprüche, wobei das Verfahren, auf das Einbringen des Sicherheitsapplets (114) hin, ferner umfasst:
• auf ein Senden einer zweiten Schlüsselerzeugungsanfrage der Provisionierungskomponente an den Provisionierungsserver (280) hin, Einbringen eines von dem Provisionierungsserver (280) erzeugten und dem ID-Anwendungsprogramm (108) zugeordneten zweiten asymmetrischen Schlüsselpaars in das erste Sicherheitselement (112) durch den Provisionierungsserver (280) über das Netzwerk (150), wobei das zweite asymmetrische Schlüsselpaar als initiales asymmetrisches Schlüsselpaar des Sicherheitsapplets (114) zum initialen Authentisieren des ID-Anwendungsprogramms (108) dient, wobei das zweite asymmetrische Schlüsselpaar einen zweiten privaten kryptographischen Schlüssel und einen zweiten öffentlichen kryptographischen Schlüssel umfasst,
• auf ein erfolgreiches Einbringen des zweiten asymmetrischen Schlüsselpaars hin, Empfangen des zweiten öffentlichen kryptographischen Schlüssels durch die Provisionierungskomponente,
wobei das Verfahren beispielsweise ferner umfasst:
Einbringen des zweiten öffentlichen kryptographischen Schlüssels in das zweite Sicherheitselement (110) durch die Provisionierungskomponente.

5. Verfahren nach einem der vorangehenden Ansprüche, wobei das Verfahren zum Einbringen des ersten öffentlichen kryptographischen Schlüssels (142) ein Aufbauen eines zweiten verschlüsselten Kommunikationskanals zwischen dem ersten Sicherheitselement (112) und dem Provisionierungsserver (280) umfasst, und/oder
wobei das mobile Endgerät (100) ferner ein oder mehrere Authentifizierungssensoren (118) zum Erfassen von ein oder mehreren Authentifizierungsfaktoren eines Nutzers des mobilen Endgeräts (100) umfasst, wobei das Betriebssystems (106) des mobilen Endgeräts (100) dazu konfiguriert ist, die Authentifizierungssensor (118) zu steuern, wobei Voraussetzung für das Erzeugen des ersten asymmetrischen Schlüsselpaars eine erfolgreiche Authentisierung des Nutzers gegenüber dem zweiten Sicherheitselement (110) ist, wobei der Nutzer auf dem mobilen Endgerät (100) registriert ist und in dem zweiten Sicherheitselement (110) ein oder mehrere Referenzwerte des registrierten Nutzers zum Verifizieren zumindest eines erfassten Authentifizierungsfaktors des registrierten Nutzers gespeichert sind.

6. Verfahren nach einem der vorangehenden Ansprüche, wobei das Verfahren ferner ein Prüfen der Provisionierung des ersten asymmetrischen Schlüsselpaars des ID-Anwendungsprogramms (108) und des Sicherheitsapplets (114) umfasst.

7. Verfahren nach Anspruch 6, wobei das Prüfen der Provisionierung ein Ausführen eines ersten Challenge-Response-Verfahrens umfasst, wobei das erste Challenge-Response-Verfahren umfasst:
• auf ein Senden einer ersten Challenge-Anfrage der Provisionierungskomponente an das erste Sicherheitselement (112) hin, Empfangen einer von dem ersten Sicherheitselement (112) erzeugten ersten Challenge durch die Provisionierungskomponente,
• auf ein Senden einer ersten Response-Anfrage der Provisionierungskomponente mit der ersten Challenge an das zweite Sicherheitselement (110) hin, Empfangen einer von dem zweiten Sicherheitselement (110) erzeugten ersten Response auf die ersten Challenge, wobei das Erzeugen der ersten Response ein Signieren der ersten Challenge unter Verwendung des ersten privaten kryptographischen Schlüssels als erstem Signaturschlüssel umfasst,
• auf ein Senden einer ersten Validierungsanfrage der Provisionierungskomponente mit der ersten Response an das erste Sicherheitselement (112), Empfangen einer ersten Bestätigung der Validität der ersten Response unter der Voraussetzung einer erfolgreichen Prüfung der Signatur der ersten Response unter Verwendung des ersten öffentlichen kryptographischen Schlüssels (142) als erstem Signaturprüfschlüssel.

8. Verfahren nach Anspruch 7, wobei Voraussetzung für das Erzeugen der ersten Response durch das zweite Sicherheitselement (110) eine erfolgreiche Authentisierung des Nutzers gegenüber dem zweiten Sicherheitselement (110) ist, und/oder
wobei das Prüfen der Provisionierung ferner ein Ausführen eines zweiten Challenge-Response-Verfahrens zusätzlich zu dem ersten Challenge-Response-Verfahrens umfasst, wobei das zweite Challenge-Response-Verfahren umfasst:
• auf ein Senden einer zweiten Challenge-Anfrage der Provisionierungskomponente an das zweite Sicherheitselement (110) hin, Empfangen einer von dem zweiten Sicherheitselement (110) erzeugten zweiten Challenge durch die Provisionierungskomponente,
• auf ein Senden einer zweiten Response-Anfrage der Provisionierungskomponente mit der zweiten Challenge an das erste Sicherheitselement (112) hin, Empfangen einer von dem ersten Sicherheitselement (112) erzeugten zweiten Response auf die zweiten Challenge, wobei das Erzeugen der zweiten Response ein Signieren der zweiten Challenge unter Verwendung des zweiten privaten kryptographischen Schlüssels als zweitem Signaturschlüssel umfasst,
• auf ein Senden einer zweiten Validierungsanfrage der Provisionierungskomponente mit der zweiten Response an das zweite Sicherheitselement (110), Empfangen einer zweiten Bestätigung der Validität der zweiten Response unter der Voraussetzung einer erfolgreichen Prüfung der Signatur der zweiten Response unter Verwendung des zweiten öffentlichen kryptographischen Schlüssels als zweitem Signaturprüfschlüssel.

9. Verfahren nach Anspruch 6, wobei das Prüfen der Provisionierung umfasst:
• auf ein Senden einer ersten Prüfanfrage der Provisionierungskomponente an das erste Sicherheitselement (112) hin, Berechnen eines ersten symmetrischen kryptographischen Schlüssels durch das erste Sicherheitselements (112) unter Verwendung des ersten öffentlichen kryptographischen Schlüssels (142) und des zweiten privaten kryptographischen Schlüssels,
• auf ein Senden einer zweiten Prüfanfrage der Provisionierungskomponente an das zweite Sicherheitselement (110) hin, Berechnen des ersten symmetrischen kryptographischen Schlüssels durch das zweite Sicherheitselement (110) unter Verwendung des ersten privaten kryptographischen Schlüssels und des zweiten öffentlichen kryptographischen Schlüssels,
• Testen einer verschlüsselten Kommunikation zwischen dem ersten und dem zweiten Sicherheitselement (110, 112) unter Verwendung des ersten symmetrischen kryptographischen Schlüssels zum Verschlüsseln einer Testnachricht.

10. Verfahren nach Anspruch 9, wobei Voraussetzung für das Berechnen des ersten symmetrischen kryptographischen Schlüssels durch das zweite Sicherheitselement (110) eine erfolgreiche Authentisierung des Nutzers gegenüber dem zweiten Sicherheitselement (110) ist, und/oder
wobei das Prüfen der Provisionierung ferner umfasst:
• auf ein Senden der ersten Prüfanfrage der Provisionierungskomponente an das erste Sicherheitselement (112) hin, zusätzliches Berechnen eines zweiten symmetrischen kryptographischen Schlüssels durch das erste Sicherheitselements (112) unter Verwendung des ersten öffentlichen kryptographischen Schlüssels (142) und des zweiten privaten kryptographischen Schlüssels,
• auf ein Senden der zweiten Prüfanfrage der Provisionierungskomponente an das zweite Sicherheitselement (110) hin, zusätzliches Berechnen des zweiten symmetrischen kryptographischen Schlüssels durch das zweite Sicherheitselement (110) unter Verwendung des ersten privaten kryptographischen Schlüssels und des zweiten öffentlichen kryptographischen Schlüssels,
• wobei der zweite symmetrische kryptographische Schlüssel zum Erstellen eines Authentisierungstoken verwendet wird, wobei der Authentisierungstoken einem Nachweis der Authentizität der Testnachricht dient, wobei der Authentisierungstoken unter Verwendung der Testnachricht und des zweiten symmetrischen kryptographischen Schlüssels erstellt wird.
wobei es sich bei dem zweiten symmetrischen kryptographischen Schlüssel beispielsweise um einen Schlüssel zum Erzeugen eines Message Authentication Codes handelt, wobei es sich bei dem Authentisierungstoken beispielsweise um einen unter Verwendung des zweiten symmetrischen kryptographischen Schlüssels erzeugten MAC-Code der Testnachricht handelt.

11. Mobiles Endgerät (100), wobei das mobile Endgerät (100) einen Prozessor (102) und einen Speicher (104) umfasst, wobei in dem Speicher (104) ein ID-Anwendungsprogramm (108) gespeichert ist, wobei das ID-Anwendungsprogramm (108) eine Provisionierungskomponente umfasst, wobei der Prozessor (102) dazu konfiguriert ist, ein Verfahren zum Provisionieren des ID-Anwendungsprogramms (108) mit kryptographischen Schlüsseln und einem Sicherheitsapplet (114) auszuführen,
wobei das mobile Endgerät (100) ferner ein erstes Sicherheitselement (112) und ein zweites Sicherheitselement (110) umfasst, wobei das erste Sicherheitselement (112) unabhängig von dem zweiten Sicherheitselement (110) ist, wobei das zweite Sicherheitselement (110) einem Betriebssystem (106) des mobilen Endgeräts (100) zugeordnet ist,
wobei das mobile Endgerät (100) ferner eine Kommunikationsschnittstelle (120) zur Kommunikation über ein Netzwerk (150) mit einem Provisionierungsserver (280) umfasst,
wobei das Provisionieren umfasst:
• auf ein Senden einer ersten Schlüsselerzeugungsanfrage der Provisionierungskomponente an das zweite Sicherheitselement (110) hin, Erzeugen eines dem ID-Anwendungsprogramm (108) zugeordneten ersten asymmetrischen Schlüsselpaars durch das zweite Sicherheitselement (110), wobei das erste asymmetrische Schlüsselpaar einen ersten privaten kryptographischen Schlüssel und einen ersten öffentlichen kryptographischen Schlüssel (142) umfasst, wobei das zweite Sicherheitselement (110) den ersten öffentlichen kryptographischen Schlüssel (142) an die Provisionierungskomponente zum Einbringen in das erste Sicherheitselement (112) sendet, wobei das erste asymmetrische Schlüsselpaar zum Bestätigen einer Nutzerauthentifizierung eines Nutzers des mobilen Endgeräts (100) durch das zweite Sicherheitselement (110) gegenüber dem ersten Sicherheitselement (112) dient,
• auf ein Senden einer ersten Anfrage der Provisionierungskomponente über das Netzwerk (150) an den Provisionierungsserver (280) zum Einbringen des Sicherheitsapplets (114) für das ID-Anwendungsprogramm (108) hin, Einbringen des Sicherheitsapplets (114) für das ID-Anwendungsprogramm (108) in das erste Sicherheitselement (112) durch den Provisionierungsserver (280) über das Netzwerk (150), wobei das Verfahren zum Einbringen des Sicherheitsapplets (114) ein Aufbauen eines ersten verschlüsselten Kommunikationskanals zwischen dem ersten Sicherheitselement (112) und dem Provisionierungsserver (280) umfasst.

12. Mobiles Endgerät (100) nach Anspruch 11, wobei das von dem Prozessor ausgeführte Provisionieren ferner umfasst:
auf ein Senden einer zweiten Anfrage der Provisionierungskomponente an den Provisionierungsserver (280) zum Einbringen des ersten öffentlichen kryptographischen Schlüssels (142) in das erste Sicherheitselement (112) hin, Einbringen des ersten öffentlichen kryptographischen Schlüssels (142) in das erste Sicherheitselement (112) durch den Provisionierungsserver (280), oder
wobei das von dem Prozessor ausgeführte Provisionieren ferner umfasst:
auf ein Senden einer zweiten Anfrage der Provisionierungskomponente an einen Personalisierungsserver (220) zum Einbringen des ersten öffentlichen kryptographischen Schlüssels (142) in das erste Sicherheitselement (112) hin, Einbringen des ersten öffentlichen kryptographischen Schlüssels (142) in das erste Sicherheitselement (112) durch den Personalisierungsserver (220).

13. System (170), wobei das System (170) ein mobiles Endgerät (100) nach einem der Ansprüche 11 bis 12 sowie einen Provisionierungsserver (280) umfasst, wobei der Provisionierungsserver (280) konfiguriert ist zum Empfangen des von dem zweiten Sicherheitselement (110) des mobilen Endgeräts (100) erzeugten ersten öffentlichen kryptographischen Schlüssels (142), zum Einbringen des Sicherheitsapplets (114) für das ID-Anwendungsprogramm (108) in dem ersten Sicherheitselement (112) des mobilen Endgeräts (100) und zum Einbringen des ersten öffentlichen kryptographischen Schlüssels (142) in das erste Sicherheitselement (112) des mobilen Endgeräts (100).

14. Verwendung einer Chipkarte (130) zum Provisionieren eines auf dem mobilen Endgerät (100) installierten ID-Anwendungsprogramms (108) mit kryptographischen Schlüsseln und einem Sicherheitsapplet (114), wobei die Chipkarte (130) als ein erstes Sicherheitselement (112) konfiguriert ist, wobei die Chipkarte (130) zum Einsetzen in eine Chipkartenlesevorrichtung eines mobilen Endgeräts (100) konfiguriert ist, wobei das mobile Endgerät (100) ferner ein zweites Sicherheitselement (110) umfasst, welches einem Betriebssystem (106) des mobilen Endgeräts (100) zugeordnet ist,
wobei das Provisionieren umfasst:
• Einsetzen der Chipkarte (130) in die Chipkartenlesevorrichtung des mobilen Endgeräts (100),
• Empfangen des Sicherheitsapplets (114) für das ID-Anwendungsprogramm (108) durch das erste Sicherheitselement (112) von einem Provisionierungsserver (280) über ein Netzwerk (150), wobei zum Einbringen des Sicherheitsapplets (114) ein verschlüsselter Kommunikationskanal zwischen dem ersten Sicherheitselement (112) und dem Provisionierungsserver (280) aufgebaut wird,
wobei das Verwenden ferner umfasst:
Empfangen eines ersten öffentlichen kryptographischen Schlüssels (142) eines von dem zweiten Sicherheitselement (110) erzeugten und dem ID-Anwendungsprogramm (108) zugeordneten ersten asymmetrischen Schlüsselpaars durch das erste Sicherheitselement (112) von dem Provisionierungsserver (280) oder von einem Personalisierungsserver (220) über das Netzwerk (150), wobei der erste öffentliche kryptographischen Schlüssel (142) zum Bestätigen einer Nutzerauthentifizierung eines Nutzers des mobilen Endgeräts (100) durch das zweite Sicherheitselement (110) gegenüber dem ersten Sicherheitselement (112) dient.

15. Provisionierte Chipkarte (131), wobei die provisionierte Chipkarte (131) mit einem Sicherheitsapplet (114) eines auf einem mobilen Endgerät (100) installierten ID-Anwendungsprogramms (108) provisioniert ist, wobei die provisionierte Chipkarte (131) als ein Sicherheitselement (112) konfiguriert ist, wobei die provisionierte Chipkarte (131) in einem geschützten Speicherbereich (136) eines Speichers (134) der provisionierten Chipkarte (131) umfasst:
das Sicherheitsapplets (114) für das ID-Anwendungsprogramm (108),
wobei die provisionierte Chipkarte (131) ferner mit einem öffentlichen kryptographischen Schlüssel (142) eines auf einem mobilen Endgerät (100) installierten ID-Anwendungsprogramms (108) provisioniert ist, wobei die provisionierte Chipkarte (131) in dem geschützten Speicherbereich (136) des Speichers (134) der provisionierten Chipkarte (131) ferner umfasst:
den öffentlichen kryptographischen Schlüssel (142) eines dem ID-Anwendungsprogramm (108) zugeordneten und von einem weiteren Sicherheitselement (110) des mobilen Endgeräts (100) erzeugten asymmetrischen Schlüsselpaars, wobei der öffentliche kryptographischen Schlüssel (142) zum Bestätigen einer Nutzerauthentifizierung eines Nutzers des mobilen Endgeräts (100) durch das weitere Sicherheitselement (110) des mobilen Endgeräts (100) gegenüber der Chipkarte dient.

## Claims

1. Method for provisioning an ID application program (108) installed on a mobile terminal device (100) with cryptographic keys and a security applet (114), wherein the ID application program (108) comprises a provisioning component,
wherein the mobile terminal device (100) comprises a first security element (112) and a second security element (110), wherein the first security element (112) is independent of the second security element (110), wherein the second security element (110) is assigned to an operating system (106) of the mobile terminal device (100), wherein the method comprises:
• upon sending a first key generation request from the provisioning component to the second security element (110), generating a first asymmetric key pair assigned to the ID application program (108) by means of the second security element (110), wherein the first asymmetric key pair comprises a first private cryptographic key and a first public cryptographic key (142), wherein the second security element (110) sends the first public cryptographic key (142) to the provisioning component for being incorporated in the first security element (112), wherein the first asymmetric key pair is used to confirm a user authentication of a user of the mobile terminal device (100) to the first security element (112) by means of the second security element (110),
• upon sending a first request from the provisioning component over a network (150) to a provisioning server (280) for incorporating the security applet (114) for the ID application program (108), incorporating the security applet (114) for the ID application program (108) in the first security element (112) by means of the provisioning server (280) over the network (150), wherein the method for incorporating the security applet (114) includes establishing a first encrypted communication channel between the first security element (112) and the provisioning server (280).

2. Method according to claim 1, wherein the method further comprises:
upon sending a second request from the provisioning component over the network (150) to the provisioning server (280) for incorporating the first public cryptographic key (142) in the first security element (112), incorporating the first public cryptographic key (142) in the first security element (112) by means of the provisioning server (280) over the network (150),
wherein the method for example further comprises:
upon sending a certificate issuance request from the provisioning component with the first public cryptographic key (142) over the network (150) to a personalization server (220), receiving a certificate, issued by the personalization server (220), of the ID application program (108), which comprises the first public cryptographic key (142), by means of the provisioning component.

3. Method according to claim 1, wherein the method further comprises:
upon sending a third request from the provisioning component over the network (150) to the personalization server (220) for incorporating the first public cryptographic key (142) in the first security element (112), incorporating the first public cryptographic key (142) in the first security element (112) by means of the personalization server (280) over the network (150),
wherein, upon sending the third request, the certificate, issued by the personalization server (220), of the ID application program (108), which comprises the first public cryptographic key (142), is further received by means of the provisioning component, for example.

4. Method according to any one of the preceding claims, wherein upon incorporating the security applet (114), the method further comprises:
• upon sending a second key generation request from the provisioning component to the provisioning server (280), incorporating a second asymmetric key pair, which is generated by the provisioning server (280) and is assigned to the ID application program (108), in the first security element (112) by means of the provisioning server (280) over the network (150), wherein the second asymmetric key pair is used as the initial asymmetric key pair of the security applet (114) for the initial authentication of the ID application program (108), wherein the second asymmetric key pair comprises a second private cryptographic key and a second public cryptographic key,
• upon successfully incorporating the second asymmetric key pair, receiving the second public cryptographic key by means of the provisioning component,
wherein the method for example further comprises:
incorporating the second public cryptographic key in the second security element (110) by means of the provisioning component.

5. Method according to any one of the preceding claims, wherein the method for incorporating the first public cryptographic key (142) comprises establishing a second encrypted communication channel between the first security element (112) and the provisioning server (280), and/or
wherein the mobile terminal device (100) further comprises one or more authentication sensors (118) for capturing one or more authentication factors of a user of the mobile terminal device (100), wherein the operating system (106) of the mobile terminal device (100) is configured to control the authentication sensor (118), wherein a condition for generating the first asymmetric key pair is a successful authentication of the user to the second security element (110), wherein the user is registered to the mobile terminal device (100) and one or more reference values of the registered user are stored in the second security element (110) for verifying at least one captured authentication factor of the registered user.

6. Method according to any one of the preceding claims, wherein the method further comprises checking the provisioning of the first asymmetric key pair of the ID application program (108) and the security applet (114).

7. Method according to claim 6, wherein checking the provisioning comprises carrying out a first challenge-response method, wherein the first challenge-response method comprises:
• upon sending a first challenge request from the provisioning component to the first security element (112), receiving a first challenge, generated by the first security element (112), by means of the provisioning component,
• upon sending a first response request from the provisioning component with the first challenge to the second security element (110), receiving a first response, generated by the second security element (110), to the first challenge, wherein generating the first response comprises signing the first challenge using the first private cryptographic key as a first signature key,
• upon sending a first validation request from the provisioning component with the first response to the first security element (112), receiving a first confirmation of the validity of the first response on the condition that the signature of the first response has been successfully checked using the first public cryptographic key (142) as a first signature checking key.

8. Method according to claim 7, wherein successful authentication of the user to the second security element (110) is a condition for generating the first response by means of the second security element (110), and/or
wherein checking the provisioning further comprises carrying out a second challenge-response method in addition to the first challenge-response method, wherein the second challenge-response method comprises:
• upon sending a second challenge request from the provisioning component to the second security element (110), receiving a second challenge, generated by the second security element (110), by means of the provisioning component,
• upon sending a second response request from the provisioning component with the second challenge to the first security element (112), receiving a second response, generated by the first security element (112), to the second challenge, wherein generating the second response comprises signing the second challenge using the second private cryptographic key as a second signature key,
• upon sending a second validation request from the provisioning component with the second response to the second security element (110), receiving a second confirmation of the validity of the second response on the condition that the signature of the second response has been successfully checked using the second public cryptographic key as a second signature checking key.

9. Method according to claim 6, wherein the checking of the provisioning comprises:
• upon sending a first checking request from the provisioning component to the first security element (112), calculating a first symmetric cryptographic key by means of the first security element (112) using the first public cryptographic key (142) and the second private cryptographic key,
• upon sending a second checking request from the provisioning component to the second security element (110), calculating the first symmetric cryptographic key by means of the second security element (110) using the first private cryptographic key and the second public cryptographic key,
• testing an encrypted communication between the first and the second security element (110, 112) using the first symmetric cryptographic key for encrypting a test message.

10. Method according to claim 9, wherein successful authentication of the user to the second security element (110) is a condition for calculating the first symmetric cryptographic key by means of the second security element (110), and/or
wherein the checking of the provisioning further comprises:
• upon sending the first checking request from the provisioning component to the first security element (112), additionally calculating a second symmetric cryptographic key by means of the first security element (112) using the first public cryptographic key (142) and the second private cryptographic key,
• upon sending the second checking request from the provisioning component to the second security element (110), additionally calculating the second symmetric cryptographic key by means of the second security element (110) using the first private cryptographic key and the second public cryptographic key,
• wherein the second symmetric cryptographic key is used to create an authentication token, wherein the authentication token acts as evidence of the authenticity of the test message, wherein the authentication token is created using the test message and the second symmetric cryptographic key,
wherein the second symmetric cryptographic key is, for example, a key for generating a message authentication code, wherein the authentication token is, for example, a MAC code of the test message generated using the second symmetric cryptographic key.

11. Mobile terminal device (100), wherein the mobile terminal device (100) comprises a processor (102) and a memory (104), wherein an ID application program (108) is stored in the memory (104), wherein the ID application program (108) comprises a provisioning component, wherein the processor (102) is configured to carry out a method for provisioning the ID application program (108) with cryptographic keys and a security applet (114),
wherein the mobile terminal device (100) further comprises a first security element (112) and a second security element (110), wherein the first security element (112) is independent of the second security element (110), wherein the second security element (110) is assigned to an operating system (106) of the mobile terminal device (100),
wherein the mobile terminal device (100) further comprises a communication interface (120) for communicating with a provisioning server (280) over a network (150), wherein the provisioning comprises:
• upon sending a first key generation request from the provisioning component to the second security element (110), generating a first asymmetric key pair assigned to the ID application program (108) by means of the second security element (110), wherein the first asymmetric key pair comprises a first private cryptographic key and a first public cryptographic key (142), wherein the second security element (110) sends the first public cryptographic key (142) to the provisioning component for being incorporated in the first security element (112), wherein the first asymmetric key pair is used to confirm a user authentication of a user of the mobile terminal device (100) to the first security element (112) by means of the second security element (110),
• upon sending a first request from the provisioning component over the network (150) to the provisioning server (280) for incorporating the security applet (114) for the ID application program (108), incorporating the security applet (114) for the ID application program (108) in the first security element (112) by means of the provisioning server (280) over the network (150), wherein the method for incorporating the security applet (114) includes establishing a first encrypted communication channel between the first security element (112) and the provisioning server (280).

12. Mobile terminal device (100) according to claim 11, wherein the provisioning carried out by the processor further comprises:
upon sending a second request from the provisioning component to the provisioning server (280) for incorporating the first public cryptographic key (142) in the first security element (112), incorporating the first public cryptographic key (142) in the first security element (112) by means of the provisioning server (280), or
wherein the provisioning carried out by the processor further comprises:
upon sending a second request from the provisioning component to a personalization server (220) for incorporating the first public cryptographic key (142) in the first security element (112), incorporating the first public cryptographic key (142) in the first security element (112) by means of the personalization server (220).

13. System (170), wherein the system (170) comprises a mobile terminal device (100) according to any one of claims 11 to 12 and a provisioning server (280), wherein the provisioning server (280) is configured to receive the first public cryptographic key (142) generated by the second security element (110) of the mobile terminal device (100), for incorporating the security applet (114) for the ID application program (108) in the first security element (112) of the mobile terminal device (100) and for incorporating the first public cryptographic key (142) in the first security element (112) of the mobile terminal device (100).

14. Use of a chip card (130) for provisioning an ID application program (108) installed on the mobile terminal device (100) with cryptographic keys and a security applet (114), wherein the chip card (130) is configured as a first security element (112), wherein the chip card (130) is configured for being inserted into a chip-card reader device of a mobile terminal device (100), wherein the mobile terminal device (100) further comprises a second security element (110) which is assigned to an operating system (106) of the mobile terminal device (100), wherein the provisioning comprises:
• inserting the chip card (130) into the chip-card reader device of the mobile terminal device (100),
• receiving the security applet (114) for the ID application program (108) by means of the first security element (112) from a provisioning server (280) over a network (150), wherein an encrypted communication channel is established between the first security element (112) and the provisioning server (280) for incorporating the security applet (114),
wherein the use further comprises:
receiving a first public cryptographic key (142) of a first asymmetric key pair, which is generated by the second security element (110) and is assigned to the ID application program (108), by means of the first security element (112) from the provisioning server (280) or from a personalization server (220) over the network (150), wherein the first public cryptographic key (142) is used to confirm a user authentication of a user of the mobile terminal device (100) to the first security element (112) by means of the second security element (110).

15. Provisioned chip card (131), wherein the provisioned chip card (131) is provisioned with a security applet (114) of an ID application program (108) installed on a mobile terminal device (100), wherein the provisioned chip card (131) is configured as a security element (112), wherein the provisioned chip card (131) comprises, in a protected memory region (136) of a memory (134) of the provisioned chip card (131):
the security applet (114) for the ID application program (108),
wherein the provisioned chip card (131) is further provisioned with a public cryptographic key (142) of an ID application program (108) installed on a mobile terminal device (100), wherein the provisioned chip card (131) further comprises, in the protected memory region (136) of the memory (134) of the provisioned chip card (131):
the public cryptographic key (142) of an asymmetric key pair, which is assigned to the ID application program (108) and is generated by a further security element (110) of the mobile terminal device (100), wherein the public cryptographic key (142) is used to confirm a user authentication of a user of the mobile terminal device (100) to the chip card by means of the further security element (110) of the mobile terminal device (100).

## Revendications

1. Procédé de fourniture d'un programme d'application d'ID (108) installé sur un terminal mobile (100) avec des clés cryptographiques et une applet de sécurité (114), le programme d'application d'ID (108) comprenant un composant de provisionnement,
dans lequel le terminal mobile (100) comprend un premier élément de sécurité (112) et un deuxième élément de sécurité (110), le premier élément de sécurité (112) étant indépendant du deuxième élément de sécurité (110), le deuxième élément de sécurité (110) étant associé à un système d'exploitation (106) du terminal mobile (100),
le procédé comprenant :
• suite à un envoi d'une première demande de création de clés du composant de provisionnement au deuxième élément de sécurité (110), la création d'une première paire de clés asymétrique associée au programme d'application d'ID (108) par le deuxième élément de sécurité (110), la première paire de clés asymétrique comprenant une première clé cryptographique privée et une première clé cryptographique publique (142), le deuxième élément de sécurité (110) envoyant la première clé cryptographique publique (142) au composant de provisionnement pour une incorporation dans le premier élément de sécurité (112), la première paire de clés asymétrique servant à la confirmation d'une authentification d'utilisateur d'un utilisateur du terminal mobile (100) par le deuxième élément de sécurité (110) vis-à-vis du premier élément de sécurité (112),
• suite à un envoi d'une première demande du composant de provisionnement par le biais d'un réseau (150) à un serveur de provisionnement (280) pour une incorporation de l'applet de sécurité (114) pour le programme d'application d'ID (108), l'incorporation de l'applet de sécurité (114) pour le programme d'application d'ID (108) dans le premier élément de sécurité (112) par le serveur de provisionnement (280) par le biais du réseau (150), où le procédé d'incorporation de l'applet de sécurité (114) comprend un établissement d'un premier canal de communication chiffré entre le premier élément de sécurité (112) et le serveur de provisionnement (280).

2. Procédé selon la revendication 1, le procédé comprenant en outre :
suite à un envoi d'une deuxième demande du composant de provisionnement par le biais du réseau (150) au serveur de provisionnement (280) pour l'incorporation de la première clé cryptographique publique (142) dans le premier élément de sécurité (112), l'incorporation de la première clé cryptographique publique (142) dans le premier élément de sécurité (112) par le serveur de provisionnement (280) par le biais du réseau (150),
le procédé comprenant, en outre, par exemple :
suite à un envoi d'une demande d'établissement de certificat du composant de provisionnement avec la première clé cryptographique publique (142) par le biais du réseau (150) à un serveur de personnalisation (220), la réception d'un certificat établi par le serveur de personnalisation (220) du programme d'application d'ID (108), lequel comprend la première clé cryptographique publique (142), par le composant de provisionnement.

3. Procédé selon la revendication 1, le procédé comprenant en outre :
suite à un envoi d'une troisième demande du composant de provisionnement par le biais du réseau (150) au serveur de personnalisation (220) pour l'incorporation de la première clé cryptographique publique (142) dans le premier élément de sécurité (112), l'incorporation de la première clé cryptographique publique (142) dans le premier élément de sécurité (112) par le serveur de personnalisation (280) par le biais du réseau (150),
où, suite à l'envoi de la troisième demande, par exemple, en outre le certificat établi par le serveur de personnalisation (220) du programme d'application d'ID (108), lequel comprend la première clé cryptographique publique (142), est réceptionné par le composant de provisionnement.

4. Procédé selon l'une des revendications précédentes, le procédé, suite à l'incorporation de l'applet de sécurité (114), comprenant en outre :
• suite à un envoi d'une deuxième demande de création de clés du composant de provisionnement au serveur de provisionnement (280), l'incorporation d'une deuxième paire de clés asymétrique créée par le serveur de provisionnement (280) et associée au programme d'application d'ID (108) dans le premier élément de sécurité (112) par le serveur de provisionnement (280) par le biais du réseau (150), où la deuxième paire de clés asymétrique sert de paire de clés asymétrique initiale de l'applet de sécurité (114) pour l'authentification initiale du programme d'application d'ID (108), la deuxième paire de clés asymétrique comprenant une deuxième clé cryptographique privée et une deuxième clé cryptographique publique,
• suite à une incorporation réussie de la deuxième paire de clés asymétrique, la réception de la deuxième clé cryptographique publique par le composant de provisionnement,
le procédé comprenant en outre, par exemple :
l'incorporation de la deuxième clé cryptographique publique dans le deuxième élément de sécurité (110) par le composant de provisionnement.

5. Procédé selon l'une des revendications précédentes, le procédé comprenant, pour l'incorporation de la première clé cryptographique publique (142), un établissement d'un deuxième canal de communication chiffré entre le premier élément de sécurité (112) et le serveur de provisionnement (280), et/ou
dans lequel le terminal mobile (100) comprend en outre un ou plusieurs capteurs d'authentification (118) pour la détection d'un ou de plusieurs facteurs d'authentification d'un utilisateur du terminal mobile (100), où le système d'exploitation (106) du terminal mobile (100) est conçu pour commander les capteurs d'authentification (118), où une condition préalable pour la création de la première paire de clés asymétrique est une authentification réussie de l'utilisateur vis-à-vis du deuxième élément de sécurité (110), où l'utilisateur est enregistré sur le terminal mobile (100) et une ou plusieurs valeurs de référence de l'utilisateur enregistré sont enregistrées dans le deuxième élément de sécurité (110) pour la vérification d'au moins un facteur d'authentification détecté de l'utilisateur enregistré.

6. Procédé selon l'une des revendications précédentes, le procédé comprenant en outre une vérification de la fourniture de la première paire de clés asymétrique du programme d'application d'ID (108) et de l'applet de sécurité (114).

7. Procédé selon la revendication 6, dans lequel la vérification de la fourniture comprend l'exécution d'un premier procédé de défi-réponse, où le premier défi-réponse comprend :
• suite à un envoi d'une première demande de défi du composant de provisionnement au premier élément de sécurité (112), la réception d'un premier défi créé par le premier élément de sécurité (112) par le composant de provisionnement,
• suite à l'envoi d'une première demande de réponse du composant de provisionnement avec le premier défi au deuxième élément de sécurité (110), la réception d'une première réponse créée par le deuxième élément de sécurité (110) suite au premier défi, où la création de la première réponse comprend une signature du premier défi moyennant l'emploi de la première clé cryptographique privée en tant que première clé de signature,
• suite à un envoi d'une première demande de validation du composant de provisionnement avec la première réponse au premier élément de sécurité (112), la réception d'une première confirmation de la validité de la première réponse avec la condition d'une vérification réussie de la signature de la première réponse moyennant l'emploi de la première clé cryptographique publique (142) en tant que première clé de vérification de signature.

8. Procédé selon la revendication 7, dans lequel la condition préalable pour la création de la première réponse par le deuxième élément de sécurité (110) est une authentification réussie de l'utilisateur vis-à-vis du deuxième élément de sécurité (110), et/ou
dans lequel la vérification de la fourniture comprend en outre l'exécution d'un deuxième procédé de défi-réponse en complément au premier procédé de défi-réponse, où le deuxième procédé de défi-réponse comprend :
• suite à un envoi d'une deuxième demande de défi du composant de provisionnement au deuxième élément de sécurité (110), la réception d'un deuxième défi créé par le deuxième élément de sécurité (110) par le composant de provisionnement,
• suite à un envoi d'une deuxième demande de réponse du composant de provisionnement avec le deuxième défi au premier élément de sécurité (112), la réception d'une deuxième réponse créée par le premier élément de sécurité (112) suite au deuxième défi, où la création de la deuxième réponse comprend une signature du deuxième défi moyennant l'emploi de la deuxième clé cryptographique privée en tant que deuxième clé de signature,
• suite à un envoi d'une deuxième demande de validation du composant de provisionnement avec la deuxième réponse au deuxième élément de sécurité (110), la réception d'une deuxième confirmation de la validité de la deuxième réponse avec la condition d'une vérification réussie de la signature de la deuxième réponse moyennant l'emploi de la deuxième clé cryptographique publique en tant que deuxième clé de vérification de signature.

9. Procédé selon la revendication 6, dans lequel la vérification de la fourniture comprend :
• suite à l'envoi d'une première demande de vérification du composant de provisionnement au premier élément de sécurité (112), le calcul d'une première clé cryptographique symétrique par le premier élément de sécurité (112) moyennant l'emploi de la première clé cryptographique publique (142) et de la deuxième clé cryptographique privée,
• suite à un envoi d'une deuxième demande de vérification du composant de provisionnement au deuxième élément de sécurité (110), le calcul de la première clé cryptographique symétrique par le deuxième élément de sécurité (110) moyennant l'emploi de la première clé cryptographique privée et de la deuxième clé cryptographique publique,
• le test d'une communication chiffrée entre le premier et le deuxième élément de sécurité (110, 112) moyennant l'emploi de la première clé cryptographique symétrique pour le chiffrement d'un résultat au test.

10. Procédé selon la revendication 9, dans lequel la condition préalable pour le calcul de la première clé cryptographique symétrique par le deuxième élément de sécurité (110) est une authentification réussie de l'utilisateur vis-à-vis du deuxième élément de sécurité (110), et/ou
dans lequel la vérification de la fourniture comprend en outre :
• suite à un envoi d'une première demande de vérification du composant de provisionnement au premier élément de sécurité (112), le calcul complémentaire d'une deuxième clé cryptographique symétrique par le premier élément de sécurité (112) moyennant l'emploi de la première clé cryptographique publique (142) et de la deuxième clé cryptographique privée,
• suite à un envoi de la deuxième demande de vérification du composant de provisionnement au deuxième élément de sécurité (110), le calcul complémentaire de la deuxième clé cryptographique symétrique par le deuxième élément de sécurité (110) moyennant l'emploi de la première clé cryptographique privée et de la deuxième clé cryptographique publique,
• où la deuxième clé cryptographique symétrique est employée pour l'établissement d'un jeton d'authentification, où le jeton d'authentification sert à une attestation de l'authenticité du résultat de test, où le jeton d'authentification est établi moyennant l'emploi du résultat de test et de la deuxième clé cryptographique symétrique,
dans lequel, dans le cas de la deuxième clé cryptographique symétrique, il s'agit, par exemple, d'une clé pour créer un code d'authentification de message, où, dans le cas du jeton d'authentification, il s'agit, par exemple, d'un code MAC généré moyennant l'emploi de la deuxième clé cryptographique symétrique du résultat de test.

11. Terminal mobile (100), le terminal mobile (100) comprenant un processeur (102) et une mémoire (104), où un programme d'application d'ID (108) est enregistré dans la mémoire (104), où le programme d'application d'ID (108) comprend un composant de provisionnement, où le processeur (102) est conçu pour exécuter un procédé de fourniture du programme d'application d'ID (108) avec des clés cryptographiques et une applet de sécurité (114),
le terminal mobile (100) comprenant en outre un premier élément de sécurité (112) et un deuxième élément de sécurité (110), le premier élément de sécurité (112) étant indépendant du deuxième élément de sécurité (110), le deuxième élément de sécurité (110) étant associé à un système d'exploitation (106) du terminal mobile (100),
le terminal mobile (100) comprenant en outre une interface de communication (120) pour la communication par le biais d'un réseau (150) avec un serveur de provisionnement (280),
où la fourniture comprend :
• suite à un envoi d'une première demande de création de clé du composant de provisionnement au deuxième élément de sécurité (110), la création d'une première paire de clés asymétrique associée au programme d'application d'ID (108) par le deuxième élément de sécurité (110), la première paire de clés asymétrique comprenant une première clé cryptographique privée et une première clé cryptographique publique (142), le deuxième élément de sécurité (110) envoyant la première clé cryptographique publique (142) au composant de provisionnement pour une incorporation dans le premier élément de sécurité (112), la première paire de clés asymétrique servant à la confirmation d'une authentification d'utilisateur d'un utilisateur du terminal mobile (100) par le deuxième élément de sécurité (110) vis-à-vis du premier élément de sécurité (112),
• suite à un envoi d'une première demande du composant de provisionnement par le biais d'un réseau (150) au serveur de provisionnement (280) pour une incorporation de l'applet de sécurité (114) pour le programme d'application d'ID (108), l'incorporation de l'applet de sécurité (114) pour le programme d'application d'ID (108) dans le premier élément de sécurité (112) par le serveur de provisionnement (280) par le biais du réseau (150), où le procédé d'incorporation de l'applet de sécurité (114) comprend un établissement d'un premier canal de communication chiffré entre le premier élément de sécurité (112) et le serveur de provisionnement (280).

12. Terminal mobile (100) selon la revendication 11, dans lequel la fourniture exécutée par le processeur comprend en outre :
suite à un envoi d'une deuxième demande du composant de provisionnement au serveur de provisionnement (280) pour l'incorporation de la première clé cryptographique publique (142) dans le premier élément de sécurité (112), l'incorporation de la première clé cryptographique publique (142) dans le premier élément de sécurité (112) par le serveur de provisionnement (280), ou
dans lequel la fourniture exécutée par le processeur comprend en outre :
suite à un envoi d'une deuxième demande du composant de provisionnement à un serveur de personnalisation (220) pour l'incorporation de la première clé cryptographique publique (142) dans le premier élément de sécurité (112), l'incorporation de la première clé cryptographique publique (142) dans le premier élément de sécurité (112) par le serveur de personnalisation (220).

13. Système (170), le système (170) comprenant un terminal mobile (100) selon une des revendications 11 à 12, ainsi qu'un serveur de provisionnement (280), dans lequel le serveur de provisionnement (280) est conçu pour la réception de la première clé cryptographique publique (142) créée par le deuxième élément de sécurité (110) du terminal mobile (100), pour l'incorporation de l'applet de sécurité (114) pour le programme d'application d'ID (108) dans le premier élément de sécurité (112) du terminal mobile (100) et pour l'incorporation de la première clé cryptographique publique (142) dans le premier élément de sécurité (112) du terminal mobile (100).

14. Utilisation d'une carte à puce (130) pour la fourniture d'un programme d'application d'ID (108) installé sur le terminal mobile (100) avec des clés cryptographiques et une applet de sécurité (114), où la carte à puce (130) est conçue comme un premier élément de sécurité (112), où la carte à puce (130) est conçue pour l'insertion dans un dispositif lecteur de carte à puce d'un terminal mobile (100), où le terminal mobile (100) comprend en outre un deuxième élément de sécurité (110), lequel est associé à un système d'exploitation (106) du terminal mobile (100),
dans laquelle la fourniture comprend :
• l'insertion de la carte à puce (130) dans le dispositif lecteur de carte à puce du terminal mobile (100),
• la réception de l'applet de sécurité (114) pour le programme d'application d'ID (108) par le premier élément de sécurité (112) à partir d'un serveur de provisionnement (280) par le biais d'un réseau (150), où, pour l'incorporation de l'applet de sécurité (114), un canal de communication chiffré est établi entre le premier élément de sécurité (112) et le serveur de provisionnement (280),
où l'utilisation comprend en outre :
la réception d'une première clé cryptographique publique (142) d'une première paire de clés asymétrique créée par le deuxième élément de sécurité (110) et associée au programme d'application d'ID (108) par le premier élément de sécurité (112) à partir du serveur de provisionnement (280) ou à partir d'un serveur de personnalisation (220) par le biais du réseau (150), où la première clé cryptographique publique (142) sert à la confirmation d'une authentification d'utilisateur d'un utilisateur du terminal mobile (100) par le deuxième élément de sécurité (110) vis-à-vis du premier élément de sécurité (112).

15. Carte à puce (131) approvisionnée, la carte à puce (131) approvisionnée étant approvisionnée avec une applet de sécurité (114) d'un programme d'application d'ID (108) installé sur un terminal mobile (100), où la carte à puce (131) approvisionnée est conçue comme un élément de sécurité (112), où la carte à puce (131) approvisionnée, dans une zone de mémoire sécurisée (136) d'une mémoire (134) de la carte à puce (131) sécurisée, comprend en outre :
l'applet de sécurité (114) pour le programme d'application d'ID (108),
où la carte à puce (131) approvisionnée est en outre approvisionnée avec une clé cryptographique publique (142) d'un programme d'application d'ID (108) installé sur un terminal mobile (100), où la carte à puce (131) approvisionnée dans la zone de mémoire sécurisée (136) de la mémoire (134) de la carte à puce (131) approvisionnée comprend en outre :
la clé cryptographique publique (142) d'une paire de clés asymétrique associée au programme d'application d'ID (108) et créée par un autre élément de sécurité (110) du terminal mobile (100), où la clé cryptographique publique (142) sert à la confirmation d'une authentification d'utilisateur d'un utilisateur du terminal mobile (100) par l'autre élément de sécurité (110) du terminal mobile (100) vis-à-vis de la carte à puce.
